(19) Europäisches Patentamt
European Patent Office
Office européen des brevets

(11) **EP 4 586 248 A1**

(12) **EUROPEAN PATENT APPLICATION**
published in accordance with Art. 153(4) EPC

(43) Date of publication:
**16.07.2025  Bulletin 2025/29**

(21) Application number: **23876501.0**

(22) Date of filing: **21.09.2023**

(51) International Patent Classification (IPC):
*G10L 21/007* *(2013.01)*

(52) Cooperative Patent Classification (CPC):
**G10L 21/007**

(86) International application number:
**PCT/CN2023/120476**

(87) International publication number:
**WO 2024/078296 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **09.10.2022  CN 202211225744**

(71) Applicant: **Huawei Technologies Co., Ltd.
Shenzhen, Guangdong 518129 (CN)**

(72) Inventors:
• **QUAN, Chao**
  **Shenzhen, Guangdong 518129 (CN)**
• **WANG, Jian**
  **Shenzhen, Guangdong 518129 (CN)**
• **WANG, Yali**
  **Shenzhen, Guangdong 518129 (CN)**

(74) Representative: **Isarpatent
Patent- und Rechtsanwälte Partg mbB
Friedrichstraße 31
80801 München (DE)**

(54) **AUDIO MIXING METHOD AND RELATED DEVICE**

(57)     An audio mixing method and a related apparatus are disclosed. The method includes: A device on an audio sink side may receive a plurality of pieces of indication information from a plurality of audio source devices, where the plurality of pieces of indication information correspond to a plurality of audio streams; and the device on the audio sink side may determine an audio mixing weight of the plurality of audio streams based on the plurality of pieces of indication information, where the audio mixing weight of the plurality of audio streams is used for audio mixing processing on the plurality of audio streams. According to this application, audio mixing processing can be performed on the plurality of audio streams from the plurality of audio source devices.

FIG. 3A

EP 4 586 248 A1

## Description

This application claims priority to Chinese Patent Application No. 202211225744.4, filed with the China National Intellectual Property Administration on October 9, 2022 and entitled "AUDIO MIXING METHOD AND RELATED APPARATUS", which is incorporated herein by reference in its entirety.

## TECHNICAL FIELD

This application relates to the field of audio stream mixing, and in particular, to an audio mixing method and a related apparatus.

## BACKGROUND

An audio source device is a device that generates or sends an audio stream, and an audio sink device is a device that receives or uses (for example, plays) the audio stream. Currently, one audio sink device (for example, a headset) can play an audio stream of only one audio source device at a time. When the audio sink device receives a plurality of audio streams from a plurality of audio source devices, how to play the plurality of audio streams is an urgent problem to be resolved.

## SUMMARY

This application discloses an audio mixing method and a related apparatus, to implement audio mixing processing on a plurality of audio streams from different audio source devices.

According to a first aspect, this application provides an audio mixing method. The method is applied to a first device, and the method includes: receiving at least one piece of indication information from at least one audio source device, where the at least one piece of indication information corresponds to at least one audio stream generated by the at least one audio source device; and determining an audio mixing weight of the at least one audio stream based on the at least one piece of indication information.

The first device may be, for example, a terminal device that has a processing capability, like a portable mobile device (for example, a mobile phone, a tablet computer, or a computer), an intelligent wearable device (for example, a sports band, a watch, or glasses), or a head unit. Alternatively, the first device may be an infrastructure device, like a home router or a public router. Alternatively, the first device may be a component, a chip, or the like in the foregoing terminal device or infrastructure device.

Herein, the audio source device is a device that generates or sends an audio stream. The audio source device may be, for example, a terminal like a mobile phone, a computer, a tablet computer, a wearable device, a vehicle-mounted device, a virtual reality device, or an augmented reality device.

For example, the audio mixing weight of the audio stream may be represented by a floating point number or a percentage of (0, 1]. It may be understood that a larger audio mixing weight indicates a higher loudness output proportion of an audio stream corresponding to the audio mixing weight in an audio mixing processing process, or a higher volume of the audio stream corresponding to the audio mixing weight in an audio stream obtained through audio mixing.

In the foregoing method, the audio mixing weight of the at least one audio stream corresponding to the at least one piece of indication information may be determined based on the at least one piece of indication information sent by the at least one audio source device, and the audio mixing weight of the at least one audio stream may be used to perform audio mixing processing on the at least one audio stream. This implements audio mixing processing on a plurality of audio streams from different audio source devices.

Optionally, that the at least one piece of indication information corresponds to at least one audio stream generated by the at least one audio source device includes:
the at least one piece of indication information indicates at least one of the following information:

    a type of the at least one audio stream;
    a coding format of the at least one audio stream;
    a type of the at least one audio source device;
    the audio mixing weight;
    a type of a user to which the at least one audio source device belongs; and
    a type of an application that generates the at least one audio stream.

For example, the type of the audio stream may be indicated by using an identifier, or a binary value. The type of the audio stream is, for example, music, a game, a voice call, navigation, a notification reminder, an alarm, an alarm clock, or a broadcast.

The type of the audio source device is, for example, a private device or a public device.

The type of the user to which the audio source device belongs may be, for example, classified into a minor and an adult based on an age of the user, or may be classified into a child, a young person, and an elderly person based on the age of the user, or may be classified based on an occupation of the user.

The type of the application that generates the audio stream may be classified into, for example, practical life, social networking, office, entertainment, news, or learning, or one application may be one type. This is not specifically limited herein.

According to the foregoing implementation, the audio mixing weight of the audio stream may be obtained from the indication information sent by the audio source device, or the audio mixing weight of the audio stream may be determined based on the indication information sent by the audio source device.

Optionally, the at least one piece of indication information includes first indication information and second indication information, the first indication information corresponds to a first audio stream, and the second indication information corresponds to a second audio stream. In other words, an audio mixing weight may be indicated for a single audio stream.

Further, the first audio stream and the second audio stream are audio streams of a same type and/or audio streams generated by a same audio source device and/or a same application.

It can be learned that, although the first audio stream and the second audio stream are the audio streams of the same type and/or the audio streams generated by the same audio source device and/or the same application, the first audio stream and the second audio stream may correspond to different indication information, to formulate different audio mixing policies for the first audio stream and the second audio stream.

Optionally, the at least one piece of indication information includes first indication information, and the first indication information corresponds to a first audio stream and a second audio stream. **In** other words, indication information and an audio stream may be in a one-to-many relationship. In this way, when the audio source device is to send a large quantity of audio streams, a quantity of times of sending the indication information can be effectively reduced. This reduces bandwidth consumption and helps improve audio stream transmission efficiency.

Further, the first audio stream and the second audio stream are audio streams of a same type and/or audio streams generated by a same audio source device and/or a same application.

For example, when a same audio source device needs to continuously send a plurality of audio streams of a same type and/or generated by a same application, the audio source device may send only one piece of indication information indicating the type of the audio streams and/or an application type in advance, where the indication information corresponds to the plurality of audio streams. There is no need to send a plurality of pieces of indication information.

Optionally, the method further includes: obtaining the plurality of audio streams, where the plurality of audio streams come from a plurality of audio source devices, and the plurality of audio streams include the at least one audio stream; and determining a to-be-played target audio stream based on the plurality of audio streams and an audio mixing weight of the plurality of audio streams.

Herein, the plurality of audio streams may include an audio stream generated by the first device, that is, the first device may be an audio source device. In other words, the plurality of audio streams obtained by the first device may all come from a plurality of other audio source devices, or may be partially from another audio source device and partially generated by the first device.

According to the foregoing implementation, the to-be-played target audio stream is determined based on the plurality of audio source streams and the audio mixing weight of the plurality of audio streams. This implements audio mixing processing on the plurality of audio streams from the plurality of audio source devices.

Optionally, the method further includes: playing the target audio stream, or sending the target audio stream to a target device.

It can be learned that the target audio stream may be played by the first device, or may be sent to the target device for playing by the target device.

Optionally, the plurality of audio streams include the first audio stream and the second audio stream; and the determining a to-be-played target audio stream based on the plurality of audio streams and an audio mixing weight of the plurality of audio streams includes: when a first preset condition is met, determining that the target audio stream is the first audio stream, where the first preset condition is any one of the following conditions: An audio mixing weight of the second audio stream is less than or equal to a first value, and an audio mixing weight of the first audio stream is greater than the first value; or the audio mixing weight of the first audio stream is greater than or equal to a second value, and the audio mixing weight of the first audio stream is greater than or equal to the audio mixing weight of the second audio stream, where the second value is greater than the first value.

Herein, the first value and the second value are preset based on experience.

According to the foregoing implementation, when the audio mixing weight of the first audio stream and the audio mixing weight of the second audio stream meet the first preset condition, it is determined that the to-be-played target audio stream is the first audio stream.

Optionally, the plurality of audio streams include the first audio stream and the second audio stream; and the determining a to-be-played target audio stream based on the plurality of audio streams and an audio mixing weight of the plurality of audio streams includes: when a second preset condition is met, determining that the target audio stream is the second audio stream, where the second preset condition is any one of the following conditions: An audio mixing weight of the first audio stream is less than or equal to the first value, and an audio mixing weight of the second audio stream is greater than the first value; or the audio mixing weight of the second audio stream is greater than or equal to a second value, and the audio mixing weight of the second audio stream is greater than the audio mixing weight of the first audio stream, where the second value is greater than the first value.

According to the foregoing implementation, when the audio mixing weight of the first audio stream and the audio mixing weight of the second audio stream meet the second preset condition, it is determined that the to-be-played target audio stream is the second audio stream.

Optionally, the plurality of audio streams include the first audio stream and the second audio stream; and the determining a to-be-played target audio stream based on the plurality of audio streams and an audio mixing weight of the plurality of audio streams includes: when an audio mixing weight of the second audio stream is greater than a first value and less than a second value, an audio mixing weight of the first audio stream is greater than the first value and less than the second value, and the second value is greater than the first value, performing audio mixing on the first audio stream and the second audio stream to generate a third audio stream; and determining that the target audio stream is the third audio stream.

According to the foregoing implementation, when both the audio mixing weight of the first audio stream and the audio mixing weight of the second audio stream fall within a range of an interval (the first value, the second value), audio mixing is performed on the first audio stream and the second audio stream. In this case, the to-be-played target audio stream is an audio stream obtained by performing audio mixing on the first audio stream and the second audio stream.

Optionally, the plurality of audio streams include the first audio stream and the second audio stream; and the first audio stream is generated by the first device, and the second audio stream comes from a first audio source device; or the first audio stream comes from the first audio source device, and the second audio stream comes from a second audio source device.

Herein, both the first audio stream and the second audio stream are single audio streams.

For example, that the first audio stream is generated by the first device may be that the first audio stream is an audio stream generated by an application of the first device, or may be that the first audio stream is an audio stream obtained by the first device through audio mixing.

Optionally, when the audio mixing weight is less than or equal to the first value, the audio mixing weight indicates that the audio stream corresponding to the audio mixing weight is rejected to be used as a source of the audio stream obtained through audio mixing; or when the audio mixing weight is greater than the first value and less than the second value, the audio mixing weight indicates that the audio stream corresponding to the audio mixing weight is allowed to be used as a non-unique source of the audio stream obtained through audio mixing, where the second value is greater than the first value; or when the audio mixing weight is greater than or equal to the second value, the audio mixing weight indicates that the audio stream corresponding to the audio mixing weight is allowed to be used as a unique source of the audio stream obtained through audio mixing.

According to the foregoing implementation, the first value and the second value are preset, and the second value is greater than the first value. Based on a value relationship between the audio mixing weight of the audio stream and the first value and a value relationship between the audio mixing weight of the audio stream and the second value, whether the audio stream corresponding to the audio mixing weight can be used as the source of the audio stream obtained through audio mixing and whether the source is specifically the non-unique source or the unique source when the audio stream corresponding to the audio mixing weight is used as the source of the audio stream obtained through audio mixing may be defined. Different audio mixing behaviors are defined, so that different audio mixing processing can be implemented, and different audio mixing effect can be achieved.

According to a second aspect, this application provides an audio mixing method. The method is applied to a second device, and the method includes: sending at least one piece of indication information, where the at least one piece of indication information corresponds to at least one audio stream, and the at least one piece of indication information is used to determine an audio mixing weight of the at least one audio stream; and sending the at least one audio stream.

The second device is an audio source device that can generate or send an audio stream. The second device may be, for example, a terminal like a mobile phone, a computer, a tablet computer, a wearable device, a vehicle-mounted device, a virtual reality device, or an augmented reality device.

Herein, the at least one audio stream is generated by the second device. In addition, for the audio mixing weight of the audio stream, refer to the descriptions of the corresponding content in the first aspect.

In the foregoing method, as an audio source device, the second device may provide the at least one piece of indication information and the at least one audio stream corresponding to the at least one piece of indication information, the at least one piece of indication information may be used to determine the audio mixing weight of the at least one audio stream, and the audio mixing weight of the at least one audio stream may be used to perform audio mixing processing on the at least one audio stream. This helps implement audio mixing processing on a plurality of audio streams from different audio source devices.

Optionally, that the at least one piece of indication information corresponds to at least one audio stream includes: the at least one piece of indication information indicates at least one of the following information:

a type of the at least one audio stream;
a coding format of the at least one audio stream;
a type of the second device;
the audio mixing weight;
a type of a user to which the second device belongs; and
a type of an application that generates the at least one audio stream.

For example, the type of the audio stream may be indicated by using an identifier, or a binary value. The type of the audio stream is, for example, music, a game, a voice call, navigation, a notification reminder, an alarm, an alarm clock, or broadcast.

The type of the second device is, for example, a private device or a public device.

The type of the user to which the second device belongs may be, for example, classified into a minor and an adult based on an age of the user, or may be classified into a child, a young person, and an elderly person based on the age of the user, or may be classified based on an occupation of the user.

The type of the application that generates the audio stream may be classified into, for example, practical life, social networking, office, entertainment, news, or learning, or one application may be one type. This is not specifically limited herein.

According to the foregoing implementation, the indication information sent by the second device serving as the audio source device may carry the audio mixing weight of the audio stream, or may carry information that may be used to determine the audio mixing weight of the audio stream, such as the type of the audio stream, the coding format of the audio stream, the type of the second device, the type of the user to which the second device belongs, and the type of the application that generates the audio stream.

Optionally, the at least one piece of indication information includes first indication information and second indication information, the first indication information corresponds to a first audio stream, and the second indication information corresponds to a second audio stream.

Further, the first audio stream and the second audio stream are audio streams of a same type and/or audio streams generated by a same application.

It can be learned that one piece of indication information sent by the second device may correspond to one audio stream. For example, an audio mixing weight may be indicated for a single audio stream.

For example, when the second device generates the first audio stream and the second audio stream that are of the same type and/or that are generated by the same application, the first audio stream and the second audio stream may correspond to different indication information.

Optionally, the at least one piece of indication information includes first indication information, and the first indication information corresponds to a first audio stream and a second audio stream.

Further, the first audio stream and the second audio stream are audio streams of a same type and/or audio streams generated by a same application.

It can be learned that indication information and an audio stream that are sent by the second device may be in a one-to-many relationship. For example, when the second device needs to continuously send a plurality of audio streams of a same type and/or generated by a same application, the audio source device may send only one piece of indication information indicating the type of the audio streams and/or an application type, where the indication information corresponds to the plurality of audio streams. There is no need to send a plurality of pieces of indication information. This reduces bandwidth consumption and helps improve audio stream transmission efficiency.

According to a third aspect, this application provides an audio mixing method. The method is applied to a first device, and the method includes: indicating properties of a plurality of audio streams to a user, where the plurality of audio streams are generated by a plurality of devices; and the property includes at least one of the following: an identifier of the audio stream, a type of the audio stream, a type of an application that generates the audio stream, a type of an audio source device that generates the audio stream, a type of a user to which the audio source device that generates the audio stream belongs, and a coding format of the audio stream; receiving setting information of the user; and configuring an audio mixing weight of the plurality of audio streams based on the setting information.

Herein, the first device may be, for example, a terminal device that has a processing capability, like a portable mobile device (for example, a mobile phone, a tablet computer, or a computer), an intelligent wearable device (for example, a sports band or a watch), or a head unit. Alternatively, the first device may be an infrastructure device, like a home router or a public router.

Herein, the user may be a user associated with a device that has an audio sink capability and/or a device that has an audio mixing weight configuration capability. For example, a user using the device that has the audio mixing weight configuration capability may be a user to which the device that has the audio mixing weight configuration capability belongs, or may be a user using the device that has the audio sink capability, or may be a user to which the device that has the audio sink capability belongs. The audio sink capability means that the device can receive or use an audio stream, and using the audio stream may be, for example, playing the audio stream.

In the foregoing method, the user is supported to dynamically configure the audio mixing weight of the audio stream based on the property of the audio stream (for example, at least one of the type of the audio stream, the type of the audio source device that generates the audio stream, and the type of the application that generates the audio stream). This helps improve listening experience of the user, and further meets user requirements in a plurality of application scenarios.

Optionally, the receiving setting information of the user includes:

obtaining the setting information input by the user through a touchscreen of the first device;
obtaining the setting information input by the user through a button of the first device;
obtaining the setting information input by the user through a keyboard of the first device;
obtaining the setting information input by the user through a voice; or
obtaining the setting information input by the user through a gesture.

According to the foregoing implementation, the user is supported to input the corresponding setting information through a plurality of channels, for example, the touchscreen, the button, the keyboard, the voice, and the gesture of the device.

Optionally, the method further includes: indicating a usage scenario of the plurality of audio streams to the user, where the setting information is used to configure an audio mixing weight of the plurality of audio streams in the usage scenario.

According to the foregoing implementation, audio mixing weights of the plurality of audio streams in different usage scenarios may be further configured. This meets audio mixing requirements of the user in the different usage scenarios.

Optionally, the usage scenario includes a first usage scenario and a second usage scenario, and an audio mixing weight of the plurality of audio streams in the first usage scenario are different from an audio mixing weight of the plurality of audio streams in the second usage scenario.

According to the foregoing implementation, in different usage scenarios, an audio mixing weight of the plurality of audio streams in a current usage scenario may be used. This meets diversified requirements of the user.

Optionally, the usage scenario includes at least one of the following scenarios: a game mode, a driving mode, a speaker mode, a headset play mode, a rest mode, a silent mode, a learning mode, and a power saving mode.

For example, an audio mixing weight of a game-type audio stream in the game mode scenario is higher than an audio mixing weight of the game-type audio stream in another usage scenario. For another example, an audio mixing weight of a navigation-type audio stream in the driving mode scenario is higher than an audio mixing weight of the navigation-type audio stream in another usage scenario. For another example, an audio mixing weight of an audio stream generated by a learning application in the learning mode scenario is higher than an audio mixing weight of the audio stream generated by the learning application in another usage scenario.

Optionally, the method further includes: mixing the plurality of audio streams into a to-be-played audio stream based on the audio mixing weights.

Optionally, the plurality of audio streams include a first audio stream with a high priority; and the method further includes reminding, in at least one of the following plurality of manners, the user to pay attention to the first audio stream:

increasing an audio mixing weight of the first audio stream;
playing content of the first audio stream for a plurality of times; and
requiring the user to feed back a confirmation.

Herein, the first audio stream with the high priority may be understood as follows: The first audio stream carries a high-priority label, a priority of the first audio stream is higher than a preset priority threshold, a priority value of the first audio stream is a threshold corresponding to the high priority, or the like. This is not specifically limited herein. In addition, the priority may indicate, for example, an importance degree, an emergency degree, an urgency degree, and a degree of association with the user.

For example, an audio stream 1 and an audio stream 2 are two audio streams obtained by a second device from a same audio source device. The audio stream 1 and the audio stream 2 are audio streams of a same type, for example, both are airport broadcast. If the audio stream 1 carries flight content related to the user, and the audio stream 2 does not carry the flight content related to the user, the audio stream 1 has a higher priority. In this case, the user may be reminded, in the foregoing manner, to pay attention to the audio stream 1.

According to the foregoing implementation, the user may be reminded to pay attention to an audio stream with a high priority in a plurality of manners, for example, by increasing an audio mixing weight of the audio stream, playing content of the audio stream for a plurality of times, or requiring the user to feed back a confirmation.

Optionally, the increasing an audio mixing weight of the first audio stream includes: decreasing, in a play time period of the first audio stream, a play volume of another audio stream that is in the plurality of audio streams and that is mixed with the first audio stream; or setting the first audio stream as a unique audio stream in the to-be-played audio stream in the play time period of the first audio stream.

According to the foregoing implementation, the another audio stream mixed with the first audio stream is weakened, or the first audio stream is set as the unique audio stream to be played, so that the first audio stream can be more prominent, and it is easier for the user to pay attention to the first audio stream.

Optionally, the playing content of the first audio stream for a plurality of times includes: repeatedly mixing the first audio stream into the to-be-played audio stream for a plurality of times, and successively increasing the audio mixing weight of the first audio stream.

According to the foregoing implementation, the first audio stream is repeatedly mixed into the to-be-played audio stream for the plurality of times, so that the first audio stream is repeatedly played. In addition, the first audio stream is mixed into each time with a greater audio mixing weight than that of a previous time, so that a volume of the first audio stream in the to-be-played audio stream is increasingly high when the first audio stream is successively played, and the user can pay attention to the first audio stream in time.

Optionally, the requiring the user to feed back a confirmation includes: querying the user whether the user learns of the content carried in the first audio stream; and receiving feedback information of the user, where the feedback information indicates that the user confirms that the user learns of the content carried in the first audio stream.

For example, querying the user whether the user learns of the content carried in the first audio stream may be: displaying, on a display interface, pop-up prompt information "whether the user learns of the content carried in the first audio stream" to be confirmed by the user, and controlling a device on which the display interface is located to vibrate, play an alert tone, and the like.

According to the foregoing implementation, when there is the first audio stream with the high priority, the user may further actively seek a confirmation feedback of the user for the first audio stream, to ensure that the user pays attention to the first audio stream.

Optionally, before the receiving the feedback information, the method further includes: repeatedly mixing the first audio stream into the to-be-played audio stream; and after the receiving the feedback information, the method further includes: stopping mixing the first audio stream into the to-be-played audio stream.

For example, stopping mixing the first audio stream into the to-be-played audio stream may be stopping mixing the first audio stream into the to-be-played audio stream after the feedback information of the user is received, regardless of whether the first audio stream is received again.

It can be learned that, when the feedback information of the user is not received, the first audio stream is repeatedly mixed into the to-be-played audio stream to implement cyclic playing of the first audio stream, so that the user can be effectively reminded to pay attention to the first audio stream.

Optionally, the method further includes: when a volume of the to-be-played audio stream exceeds a preset volume threshold, prompting the user that the volume is excessively high.

According to the foregoing implementation, when the volume of the to-be-played audio stream is excessively high, the user may be reminded, to prevent hearing impairment.

Optionally, the configuration is pre-configuration before the audio mixing is performed or adjustment of the audio mixing weight in a process in which the audio mixing is performed.

Herein, the pre-configuration may be configuration at delivery, or may be a first configuration of the user, or may be a first configuration in a usage scenario.

Optionally, the method further includes: obtaining a default setting of the audio mixing weight; and the configuring an audio mixing weight of the plurality of audio streams based on the setting information includes: configuring the audio mixing weight of the plurality of audio streams based on the setting information and the default setting.

In other words, configuration of the audio mixing weight of the audio stream may be determined by both the default setting of the audio mixing weight and a preference of the user. For example, the default setting of the audio mixing weight of the audio stream requires that an audio mixing weight of a type-1 audio stream needs to be greater than or equal to a first preset value, the setting information input by the user indicates that the audio mixing weight of the type-1 audio stream is a target value, and the target value is less than the first preset value. It is assumed that a priority of the setting information of the user is higher than a priority of the default setting of the audio mixing weight, it may be determined that the audio mixing weight of the type-1 audio stream needs to be the target value.

Optionally, when the audio mixing weight is less than or equal to a first value, the audio mixing weight indicates that the audio stream corresponding to the audio mixing weight is rejected to be used as a source of the audio stream obtained through audio mixing; or when the audio mixing weight is greater than the first value and less than a second value, the audio mixing weight indicates that the audio stream corresponding to the audio mixing weight is allowed to be used as a non-unique source of the audio stream obtained through audio mixing, where the second value is greater than the first value; or when the audio mixing weight is greater than or equal to the second value, the audio mixing weight indicates that the audio stream corresponding to the audio mixing weight is allowed to be used as a unique source of the audio stream obtained through audio mixing.

According to the foregoing implementation, the first value and the second value are preset, and the second value is greater than the first value. Based on a value relationship between the audio mixing weight of the audio stream and the first value and a value relationship between the audio mixing weight of the audio stream and the second value, whether the audio stream corresponding to the audio mixing weight can be used as the source of the audio stream obtained through audio mixing and whether the source is specifically the non-unique source or the unique source when the audio stream corresponding to the audio mixing weight is used as the source of the audio stream obtained through audio mixing may be defined. Different audio mixing behaviors are defined, so that different audio mixing processing can be implemented, and different audio mixing effect can be achieved.

According to a fourth aspect, this application provides an audio mixing method. The method is applied to a first device, and the method includes: generating audio mixing configuration information, where the audio mixing configuration information includes an audio mixing weight of a plurality of audio streams from a plurality of audio source devices; and sending the audio mixing configuration information to a second device, where the audio mixing configuration information is used to perform audio mixing processing on the plurality of audio streams.

Herein, the first device may be, for example, a terminal device that has an audio mixing weight configuration capability, like a portable mobile device (for example, a mobile phone, a tablet computer, or a computer), an intelligent wearable device (for example, a sports band or a watch), or a head unit. Alternatively, the first device may be an infrastructure device, like a home router or a public router. Alternatively, the first device may be a component, a chip, or the like in the terminal device or the infrastructure device.

The second device may be, for example, a terminal device that has an audio mixing weight configuration capability and an audio sink capability, like a portable mobile device (for example, a mobile phone, a tablet computer, or a computer), an intelligent wearable device (for example, a sports band, a watch, or glasses), or a head unit.

In the foregoing method, the audio mixing configuration information including the audio mixing weight of the plurality of audio streams from the plurality of audio source devices is generated and sent. This helps implement audio mixing processing on the plurality of audio streams from different audio source devices.

Optionally, the audio mixing weight of the audio stream is used to adjust a sampling depth of a sampling point of the audio stream.

The sampling depth indicates precision obtained by quantizing a discrete signal corresponding to the sampling point, and the sampling depth affects user listening experience of the audio stream.

Optionally, types of the plurality of audio streams are different, and/or coding formats of the plurality of audio streams are different, and/or usage scenarios of the plurality of audio streams are different, and/or types of applications that generate the plurality of audio streams are different, and/or types of the plurality of audio source devices are different, and/or types of users to which the plurality of audio source devices belong are different. Herein, for the type of the audio source device, the type of the user to which the audio source device belongs, the type of the application that generates the audio stream, the usage scenario of the audio stream, and the like, refer to the descriptions of the corresponding content in the first aspect. Details are not described herein again.

Optionally, the audio mixing configuration information is carried in audio mixing policy configuration signaling, the audio mixing policy configuration signaling is carried in method invocation of an audio mixing policy control point, and a handle of the method invocation needs to be a handle of the audio mixing policy control point.

Optionally, before the sending the audio mixing configuration information to a second device, the method further includes: obtaining a plurality of types of audio streams supported by the second device; and the generating audio mixing configuration information includes: generating the audio mixing configuration information based on the plurality of types of the audio streams supported by the second device, where the plurality of types include the types of the plurality of audio streams.

According to the foregoing implementation, there is a correspondence between the audio mixing weight of the audio stream in the audio mixing configuration information and the type of the audio stream. In this way, when knowing the type of the audio stream, a receive end of the audio mixing configuration information may obtain the audio mixing weight corresponding to the audio stream of this type based on the audio mixing configuration information.

Optionally, the audio mixing configuration information is further generated based on at least one of the following factors:

a type of an audio source device that generates an audio stream;

a coding format of the audio stream;

a type of a user to which the audio source device that generates the audio stream belongs;

a type of an application that generates the audio stream; and

a usage scenario of the audio stream.

In other words, the audio mixing weight of the audio stream in the audio mixing configuration information is further related to at least one of audio sinks such as the type of the audio source device that generates the audio stream, the type of the user to which the audio source device that generates the audio stream belongs, the type of the application that generates the audio stream, the coding format of the audio stream, and the usage scenario of the audio stream. This fully considers diversified requirements during application.

Optionally, the method further includes: sending an audio mixing cycle to the second device, where the audio mixing cycle indicates a quantity of sampling points required when audio mixing is performed on each of the plurality of audio streams.

It may be understood that the parameter, that is, the audio mixing cycle, is meaningful only when there are a plurality of audio streams joining audio mixing.

Herein, a unified sampling rate and a unified audio mixing cycle are used when audio mixing is performed on the plurality of audio streams, and the audio mixing cycle may be provided by the first device for the second device. For example, the audio mixing cycle may be duration at a granularity of a sampling rate, or may be preset duration. This is not specifically limited herein.

For example, if an expected delay of an audio stream of a game type is low, an audio mixing cycle may be set to a smaller value; or if expected audio quality of an audio stream of a music type is higher, an audio mixing cycle may be set to a larger value. Herein, the delay is a time difference between a moment at which the audio stream is sent from an audio source end and a moment at which the audio stream is received by an audio sink end.

It can be learned that the audio mixing cycle is dynamically configurable, which facilitates real-time audio mixing and audio mixing in an audio frame or another time dimension, and can balance real-time performance and audio quality.

Optionally, when the audio mixing weight is less than or equal to a first value, the audio mixing weight indicates that the audio stream corresponding to the audio mixing weight is rejected to be used as a source of the audio stream obtained through audio mixing; or when the audio mixing weight is greater than the first value and less than a second value, the audio mixing weight indicates that the audio stream corresponding to the audio mixing weight is allowed to be used as a non-unique source of the audio stream obtained through audio mixing, where the second value is greater than the first value; or when the audio mixing weight is greater than or equal to the second value, the audio mixing weight indicates that the audio stream corresponding to the audio mixing weight is allowed to be used as a unique source of the audio stream obtained through audio mixing. For technical effect of this technical feature, refer to the descriptions of the technical effect of the corresponding feature in the first aspect. Details are not described herein again.

Optionally, the method further includes: receiving overflow indication information, where the overflow indication information indicates that overflow occurs in an audio stream obtained through audio mixing, and the overflow indication information includes a type of an audio stream whose loudness output proportion is the largest in the audio stream obtained through audio mixing; and adjusting the audio mixing weight in the audio mixing configuration information based on the overflow indication information.

According to the foregoing implementation, the overflow indication information fed back may be further received, and an audio mixing weight of at least one of the plurality of audio streams is correspondingly adjusted based on the overflow indication information. This feedback mechanism helps improve listening experience of the user.

According to a fifth aspect, this application provides an audio mixing method, applied to a second device. The method includes: receiving audio mixing configuration information from a first device, where the audio mixing configuration information includes an audio mixing weight of a plurality of audio streams from a plurality of audio source devices, and the audio mixing configuration information is used to perform audio mixing processing on the plurality of audio streams; and performing configuration based on the audio mixing configuration information.

Herein, for the first device and the second device, refer to the descriptions of the corresponding content in the fourth aspect. Details are not described herein again.

In the foregoing method, audio mixing processing may be performed on the plurality of audio streams from the plurality of audio source devices based on the audio mixing configuration information.

Optionally, the second device currently plays a first audio stream; and the method further includes: receiving a second audio stream, where the second audio stream and the first audio stream come from different audio source devices; determining a to-be-played target audio stream based on an audio mixing weight of the first audio stream, an audio mixing weight of the second audio stream, the first audio stream, and the second audio stream, where the audio mixing weight of the first audio stream and the audio mixing weight of the second audio stream are obtained from the audio mixing configuration information; and playing the target audio stream.

According to the foregoing implementation, the to-be-played target audio stream may be determined based on the audio mixing weight of the first audio stream and the audio mixing weight of the second audio stream. This implements audio mixing processing on the plurality of audio streams from different audio source devices.

Optionally, the determining a to-be-played target audio stream based on an audio mixing weight of the first audio stream, an audio mixing weight of the second audio stream, the first audio stream, and the second audio stream includes: when a preset condition is met, rejecting the second audio stream to join the audio stream obtained through audio mixing, and determining that the target audio stream is the first audio stream, where the preset condition is any one of the following conditions: the audio mixing weight of the second audio stream is less than or equal to a first value, and the audio mixing weight of the first audio stream is greater than the first value; or the audio mixing weight of the first audio stream is greater than or equal to a second value, and the audio mixing weight of the first audio stream is greater than or equal to the audio mixing weight of the second audio stream, where the second value is greater than the first value.

According to the foregoing implementation, if the to-be-joined second audio stream is rejected to join the audio stream obtained through audio mixing, the to-be-played target audio stream is the first audio stream, in other words, an audio stream that is being played is still the first audio stream.

Optionally, the determining a to-be-played target audio stream based on an audio mixing weight of the first audio stream, an audio mixing weight of the second audio stream, the first audio stream, and the second audio stream includes: when the audio mixing weight of the second audio stream is greater than or equal to a second value and the audio mixing weight of the second audio stream is greater than the audio mixing weight of the first audio stream, allowing the second audio stream to perform preemption, and determining that the target audio stream is the second audio stream, where the second value is greater than the first value.

According to the foregoing implementation, if the to-be-joined second audio stream successfully performs preemption, the to-be-played target audio stream is the second audio stream, in other words, an audio stream that is being played is switched from the first audio stream to the second audio stream.

Optionally, the determining a to-be-played target audio stream based on an audio mixing weight of the first audio stream, an audio mixing weight of the second audio stream, the first audio stream, and the second audio stream includes: when the audio mixing weight of the second audio stream is greater than a first value and less than a second value, and the audio mixing weight of the first audio stream is greater than the first value and less than the second value, allowing the second audio stream to join the audio stream obtained through audio mixing; and performing audio mixing on the first audio stream and the second audio stream to generate a third audio stream, where the second value is greater than the first value; and determining that the target audio stream is the third audio stream.

According to the foregoing implementation, if the to-be-joined second audio stream is allowed to join the first audio stream for audio mixing, the to-be-played target audio stream is an audio stream obtained by performing audio mixing on the first audio stream and the second audio stream, that is, the third audio stream, in other words, an audio stream that is being played is switched from the first audio stream to the third audio stream.

For specific beneficial effect of remaining technical features in the fifth aspect, refer to the descriptions of the corresponding content in the fourth aspect.

Optionally, the audio mixing weight of the audio stream is used to adjust a sampling depth of a sampling point of the audio stream.

Optionally, types of the plurality of audio streams are different, and/or coding formats of the plurality of audio streams are different, and/or usage scenarios of the plurality of audio streams are different, and/or types of applications that generate the plurality of audio streams are different, and/or types of the plurality of audio source devices are different, and/or types of users to which the plurality of audio source devices belong are different.

Optionally, the audio mixing configuration information is carried in audio mixing policy configuration signaling, the audio mixing policy configuration signaling is carried in method invocation of an audio mixing policy control point, and a handle of the method invocation needs to be a handle of the audio mixing policy control point.

Optionally, before the receiving audio mixing configuration information from a first device, the method further includes: sending, to the first device, a plurality of types of audio streams supported by the second device.

According to a sixth aspect, this application provides an audio mixing method, applied to a first device. The method includes: receiving a first message from a second device, where the first message includes an identifier of an audio stream mixing service; and sending a second message to the second device based on the first message, where the second message includes a first audio mixing proxy identifier, and the first audio mixing proxy identifier indicates the first device to start to provide an audio mixing proxy for the second device.

Herein, the first device is a device that can provide the audio mixing proxy and has an audio mixing processing capability. The first device may be, for example, a terminal device that has a processing capability, like a portable mobile device (for example, a mobile phone, a tablet computer, or a computer), an intelligent wearable device (for example, a sports band, a watch, or glasses), or a head unit. Alternatively, the first device may be an infrastructure device, like a home router or a public router. Alternatively, the first device may be a component, a chip, or the like in the foregoing terminal device or infrastructure device.

The second device is a device that has an audio sink capability and that searches for the audio mixing proxy. The second device may be, for example, a headset, a speaker, glasses with a player, or another player.

In the foregoing method, the first device can provide the audio mixing proxy for the second device with a limited capability (for example, the second device supports only a single-channel audio stream or an audio stream in a specific transmission mode), to help the second device implement audio mixing processing on a plurality of audio streams from a plurality of audio source devices. This indirectly extends a capability of the second device to receive a plurality of audio sources from a plurality of devices.

Optionally, the method further includes: obtaining the plurality of audio streams, where the plurality of audio streams come from the plurality of audio source devices; determining a to-be-played target audio stream based on the plurality of audio streams; and sending the target audio stream to the second device.

According to the foregoing implementation, in place of the first device, the second device obtains the plurality of audio streams, performs audio mixing processing, and sends the determined to-be-played target audio stream to the second device. This implements a function of providing the audio mixing proxy for the second device, and indirectly extends the capability of the second device to receive the plurality of audio sources from the plurality of devices.

Optionally, before the sending a second message to the second device, the method further includes: sending a first request message, where the first request message is used to request to obtain audio mixing configuration information of the second device, the audio mixing configuration information includes an audio mixing weight of the plurality of audio streams from the plurality of audio source devices, and the audio mixing configuration information is used to perform audio mixing processing on the plurality of audio streams; and receiving the audio mixing configuration information from the second device.

According to the foregoing implementation, the first device may perform audio mixing processing on the plurality of audio streams from the plurality of audio source devices based on the audio mixing configuration information obtained from the second device. This implements the function of providing the audio mixing proxy for the second device.

Optionally, the method further includes: sending a second request message, where the second request message is used to request to obtain audio sink capability information of the second device, and the audio sink capability information indicates an audio sink capability of the second device; receiving the audio sink capability information from the second device; and determining, based on the audio sink capability information, to start to provide the audio mixing proxy for the second device.

For example, the audio sink capability information of the second device includes at least one of a type and a capability (for example, a sampling rate, a sampling depth, a quantity of audio channels, and a coding format) of a codec supported by the second device, a supported transmission mode (for example, at least one of unicast, multicast, and broadcast), and a type and quality of service (quality of service, QoS) of the audio stream.

According to the foregoing implementation, the first device may determine, based on the audio sink capability information, whether the first device can serve as a device that provides the audio mixing proxy for the second device.

Optionally, the method further includes: sending a third message to the second device, where the third message includes a second audio mixing proxy identifier, and the second audio mixing proxy identifier indicates the first device to end providing the audio mixing proxy for the second device.

According to the foregoing implementation, when the first device needs to end the audio mixing proxy, the first device may send the third message to the second device, to notify the second device that the first device ends providing the audio mixing proxy for the second device.

Optionally, the first message is broadcast public information data, the public information data includes a first field and a second field, the first field indicates that the identifier of the audio stream mixing service is carried in standard service data information, and the second field indicates the identifier of the audio stream mixing service.

Optionally, a length of the identifier of the audio stream mixing service is 16 bits.

According to a seventh aspect, this application provides an audio mixing method. The method is applied to a second device, and the method includes: broadcasting a first message, where the first message includes an identifier of an audio stream mixing service; and receiving a second message from a first device, where the second message includes a first audio mixing proxy identifier, and the first audio mixing proxy identifier indicates the first device to start to provide an audio mixing proxy for the second device.

Herein, for the first device and the second device, refer to the descriptions of the corresponding content in the sixth aspect. Details are not described herein again.

In the foregoing method, the second device may search, by broadcasting the message, for a device that can provide the audio mixing proxy for the second device, and when receiving the second message, determine, based on the second message, that the first device is a device that is found by the second device and that provides the audio mixing proxy for the second device. The first device can implement, in place of the second device, audio mixing processing on a plurality of audio streams from a plurality audio source devices.

Optionally, before the receiving a second message from a first device, the method further includes: receiving a first request message from the first device; and sending audio mixing configuration information to the first device based on the first request message, where the audio mixing configuration information includes an audio mixing weight of the plurality of audio streams from the plurality of audio source devices, and the audio mixing configuration information is used to perform audio mixing processing on the plurality of audio streams.

According to the foregoing implementation, the audio mixing configuration information is sent to the first device, so that the first device performs audio mixing processing on the plurality of audio streams from the plurality of audio source devices based on the audio mixing configuration information. This implements a function of providing the audio mixing proxy for the second device.

Optionally, before the receiving a second message from a first device, the method further includes: receiving a second request message from the first device; and sending audio sink capability information to the first device based on the second request message, where the audio sink capability information indicates an audio sink capability of the second device.

For example, the audio sink capability information of the second device includes at least one of a type and a capability (for example, a sampling rate, a sampling depth, a quantity of audio channels, and a coding format) of a codec supported by the second device, a supported transmission mode (for example, at least one of unicast, multicast, and broadcast), and a type and quality of service (quality of service, QoS) of the audio stream. The audio sink capability information of the second device may be used by the first device to determine whether the first device can serve as the device that provides the audio mixing proxy for the second device.

Optionally, the method further includes: receiving a third message from the first device, where the third message includes a second audio mixing proxy identifier, and the second audio mixing proxy identifier indicates the first device to end providing the audio mixing proxy for the second device.

According to the foregoing implementation, it is learned, based on the third message, that the first device ends providing the audio mixing proxy for the second device, and the second device resumes scanning and/or connecting to an audio source device.

Optionally, the first message is broadcast public information data, the public information data includes a first field and a second field, the first field indicates that the identifier of the audio stream mixing service is carried in standard service data information, and the second field indicates the identifier of the audio stream mixing service.

Optionally, a length of the identifier of the audio stream mixing service is 16 bits.

According to an eighth aspect, this application provides an apparatus for audio mixing. The apparatus is a first device or is included in the first device; and the apparatus includes: a receiving unit, configured to receive at least one piece of indication information from at least one audio source device, where the at least one piece of indication information corresponds to at least one audio stream generated by the at least one audio source device; and a processing unit, configured to determine an audio mixing weight of the at least one audio stream based on the at least one piece of indication information.

Optionally, that the at least one piece of indication information corresponds to at least one audio stream generated by the at least one audio source device includes:
the at least one piece of indication information indicates at least one of the following information:

a type of the at least one audio stream;
a coding format of the at least one audio stream;
a type of the at least one audio source device;
the audio mixing weight;
a type of a user to which the at least one audio source device belongs; and
a type of an application that generates the at least one audio stream.

Optionally, the at least one piece of indication information includes first indication information and second indication information, the first indication information corresponds to a first audio stream, the second indication information corresponds to a second audio stream, and the first audio stream and the second audio stream are audio streams of a same type and/or audio streams generated by a same audio source device and/or a same application.

Optionally, the apparatus further includes: an obtaining unit, configured to obtain a plurality of audio streams, where the plurality of audio streams come from a plurality of audio source devices, and the plurality of audio streams include the at least one audio stream; and the processing unit is further configured to determine a to-be-played target audio stream based on the plurality of audio streams and an audio mixing weight of the plurality of audio streams. Herein, the plurality of audio source devices may include the apparatus, or may not include the apparatus. This is not specifically limited herein.

Optionally, the apparatus further includes: a playing unit, configured to play the target audio stream; or a sending unit, configured to send the target audio stream to a target device.

Optionally, the plurality of audio streams include the first audio stream and the second audio stream; and the processing unit is specifically configured to: when a first preset condition is met, determine that the target audio stream is the first audio stream, where the first preset condition is any one of the following conditions: An audio mixing weight of the second audio stream is less than or equal to the first value, and an audio mixing weight of the first audio stream is greater than the first value; or the audio mixing weight of the first audio stream is greater than or equal to a second value, and the audio mixing weight of the first audio stream is greater than or equal to the audio mixing weight of the second audio stream, where the second value is greater than the first value.

Optionally, the plurality of audio streams include the first audio stream and the second audio stream; and the processing unit is specifically configured to: when a second preset condition is met, determine that the target audio stream is the second audio stream, where the second preset condition is any one of the following conditions: An audio mixing weight of the first audio stream is less than or equal to the first value, and an audio mixing weight of the second audio stream is greater than the first value; or the audio mixing weight of the second audio stream is greater than or equal to a second value, and the audio mixing weight of the second audio stream is greater than the audio mixing weight of the first audio stream, where the second value is greater than the first value.

Optionally, the plurality of audio streams include the first audio stream and the second audio stream; and the processing unit is specifically configured to: when an audio mixing weight of the second audio stream is greater than a first value and less than a second value, an audio mixing weight of the first audio stream is greater than the first value and less than the second value, and the second value is greater than the first value, perform audio mixing on the first audio stream and the second audio stream to generate a third audio stream; and determine that the target audio stream is the third audio stream.

Optionally, the plurality of audio streams include the first audio stream and the second audio stream; and the first audio stream is generated by the first device, and the second audio stream comes from a first audio source device; or the first audio stream comes from the first audio source device, and the second audio stream comes from a second audio source device.

Optionally, when the audio mixing weight is less than or equal to the first value, the audio mixing weight indicates that the audio stream corresponding to the audio mixing weight is rejected to be used as a source of the audio stream obtained through audio mixing; or when the audio mixing weight is greater than the first value and less than the second value, the audio mixing weight indicates that the audio stream corresponding to the audio mixing weight is allowed to be used as a non-unique source of the audio stream obtained through audio mixing, where the second value is greater than the first value; or when the audio mixing weight is greater than or equal to the second value, the audio mixing weight indicates that the audio stream corresponding to the audio mixing weight is allowed to be used as a unique source of the audio stream obtained through audio mixing.

According to a ninth aspect, this application provides an apparatus for audio mixing. The apparatus is a second device or is included in the second device; and the apparatus includes: a sending unit, configured to send at least one piece of indication information, where the at least one piece of indication information corresponds to at least one audio stream, and the at least one piece of indication information is used to determine an audio mixing weight of the at least one audio stream, where the sending unit is further configured to send the at least one audio stream.

Optionally, that the at least one piece of indication information corresponds to the at least one audio stream generated by the second device includes:
the at least one piece of indication information indicates at least one of the following information:

    a type of the at least one audio stream;
    a coding format of the at least one audio stream;
    a type of the second device;
    the audio mixing weight;
    a type of a user to which the second device belongs; and
    a type of an application that generates the at least one audio stream.

Optionally, the at least one piece of indication information includes first indication information and second indication information, the first indication information corresponds to a first audio stream, the second indication information corresponds to a second audio stream, and the first audio stream and the second audio stream are audio streams of a same type and/or audio streams generated by a same application.

Optionally, the at least one piece of indication information includes first indication information, the first indication information corresponds to a first audio stream and a second audio stream, and the first audio stream and the second audio stream are audio streams of a same type and/or audio streams generated by a same application.

According to a tenth aspect, this application provides an apparatus for audio mixing. The apparatus is a first device or is included in the first device; and the apparatus includes: a display unit, configured to indicate properties of a plurality of audio streams to a user, where the plurality of audio streams are generated by a plurality of devices; and the property includes at least one of the following: an identifier of the audio stream, a type of the audio stream, a type of an application that generates the audio stream, a type of an audio source device that generates the audio stream, a type of a user to which the audio source device that generates the audio stream belongs, and a coding format of the audio stream; a receiving unit, configured to receive setting information of the user; and a processing unit, configured to configure an audio mixing weight of the plurality of audio streams based on the setting information.

Optionally, the receiving unit is specifically configured to:

obtain the setting information input by the user through a touchscreen of the first device;
obtain the setting information input by the user through a button of the first device;
obtain the setting information input by the user through a keyboard of the first device;
obtain the setting information input by the user through a voice; or
obtain the setting information input by the user through a gesture.

Optionally, the display unit is further configured to indicate a usage scenario of the plurality of audio streams to the user, where the setting information is used to configure an audio mixing weight of the plurality of audio streams in the usage scenario.

Optionally, the usage scenario includes a first usage scenario and a second usage scenario, and an audio mixing weight of the plurality of audio streams in the first usage scenario are different from an audio mixing weight of the plurality of audio streams in the second usage scenario.

Optionally, the usage scenario includes at least one of the following scenarios: a game mode, a driving mode, a speaker mode, a headset play mode, a rest mode, a silent mode, a learning mode, and a power saving mode.

Optionally, the processing unit is further configured to: mix the plurality of audio streams into a to-be-played audio stream based on the audio mixing weights.

Optionally, the plurality of audio streams include a first audio stream with a high priority; and the processing unit is further configured to remind, in at least one of the following plurality of manners, the user to pay attention to the first audio stream:

increasing an audio mixing weight of the first audio stream;
playing content of the first audio stream for a plurality of times; and
requiring the user to feed back a confirmation.

Optionally, the processing unit is specifically configured to: decrease, in a play time period of the first audio stream, a play volume of another audio stream that is in the plurality of audio streams and that is mixed with the first audio stream; or set the first audio stream as a unique audio stream in the to-be-played audio stream in the play time period of the first audio stream.

Optionally, the processing unit is specifically configured to: repeatedly mix the first audio stream into the to-be-played audio stream for a plurality of times, and successively increase the audio mixing weight of the first audio stream.

Optionally, the processing unit is specifically configured to: query the user whether the user learns of the content carried in the first audio stream; and receive feedback information of the user, where the feedback information indicates that the user confirms that the user learns of the content carried in the first audio stream.

Optionally, the processing unit is further configured to: before the feedback information is received, repeatedly mix the first audio stream into the to-be-played audio stream; and after the feedback information is received, stop mixing the first audio stream into the to-be-played audio stream.

Optionally, the processing unit is further configured to: when a volume of the to-be-played audio stream exceeds a preset volume threshold, prompt the user that the volume is excessively high.

Optionally, the configuration is pre-configuration before the audio mixing is performed or adjustment of the audio mixing weight in a process in which the audio mixing is performed.

Optionally, the apparatus further includes: an obtaining unit, configured to obtain a default setting of the audio mixing weight; where the processing unit is specifically configured to configure the audio mixing weight of the plurality of audio streams based on the setting information and the default setting.

Optionally, when the audio mixing weight is less than or equal to a first value, the audio mixing weight indicates that the audio stream corresponding to the audio mixing weight is rejected to be used as a source of the audio stream obtained through audio mixing; or when the audio mixing weight is greater than the first value and less than a second value, the audio mixing weight indicates that the audio stream corresponding to the audio mixing weight is allowed to be used as a non-unique source of the audio stream obtained through audio mixing, where the second value is greater than the first value; or when the audio mixing weight is greater than or equal to the second value, the audio mixing weight indicates that the audio stream corresponding to the audio mixing weight is allowed to be used as a unique source of the audio stream obtained through audio mixing.

According to an eleventh aspect, this application provides an apparatus for audio mixing. The apparatus is a first device or is included in the first device; and the apparatus includes: a generation unit, configured to generate audio mixing configuration information, where the audio mixing configuration information includes an audio mixing weight of a plurality of audio streams from a plurality of audio source devices; and a sending unit, configured to send the audio mixing configuration information to a second device, where the audio mixing configuration information is used to perform audio mixing processing on the plurality of audio streams.

Optionally, the audio mixing weight of the audio stream is used to adjust a sampling depth of a sampling point of the audio stream.

Optionally, types of the plurality of audio streams are different, and/or coding formats of the plurality of audio streams are different, and/or usage scenarios of the plurality of audio streams are different, and/or types of applications that generate the plurality of audio streams are different, and/or types of the plurality of audio source devices are different, and/or types of users to which the plurality of audio source devices belong are different.

Optionally, the audio mixing configuration information is carried in audio mixing policy configuration signaling, the audio mixing policy configuration signaling is carried in apparatus invocation of an audio mixing policy control point, and a handle of the apparatus invocation needs to be a handle of the audio mixing policy control point.

Optionally, the apparatus further includes: an obtaining unit, configured to obtain a plurality of types of audio streams supported by the second device; and the generation unit is specifically configured to: generate the audio mixing configuration information based on the plurality of types of the audio streams supported by the second device, where the plurality of types include the types of the plurality of audio streams.

Optionally, the audio mixing configuration information is further generated based on at least one of the following factors:

a type of an audio source device that generates an audio stream;
a coding format of the audio stream;
a type of a user to which the audio source device that generates the audio stream belongs;
a type of an application that generates the audio stream; and
a usage scenario of the audio stream.

Optionally, the sending unit is further configured to send an audio mixing cycle to the second device, where the audio mixing cycle indicates a quantity of sampling points required when audio mixing is performed on each of the plurality of audio streams.

Optionally, when the audio mixing weight is less than or equal to a first value, the audio mixing weight indicates that the audio stream corresponding to the audio mixing weight is rejected to be used as a source of the audio stream obtained through audio mixing; or when the audio mixing weight is greater than the first value and less than a second value, the audio mixing weight indicates that the audio stream corresponding to the audio mixing weight is allowed to be used as a non-unique source of the audio stream obtained through audio mixing, where the second value is greater than the first value; or when the audio mixing weight is greater than or equal to the second value, the audio mixing weight indicates that the audio stream corresponding to the audio mixing weight is allowed to be used as a unique source of the audio stream obtained through audio mixing.

Optionally, the apparatus further includes: a receiving unit, configured to receive overflow indication information, where the overflow indication information indicates that overflow occurs in an audio stream obtained through audio mixing, and the overflow indication information includes a type of an audio stream whose loudness output proportion is the largest in the audio stream obtained through audio mixing; and the processing unit is further configured to adjust the audio mixing weight in the audio mixing configuration information based on the overflow indication information.

According to a twelfth aspect, this application provides an apparatus for audio mixing. The apparatus is a second device or is included in the second device; and the apparatus includes: a receiving unit, configured to receive audio mixing configuration information from a first device, where the audio mixing configuration information includes an audio mixing weight of a plurality of audio streams from a plurality of audio source devices, and the audio mixing configuration information is used to perform audio mixing processing on the plurality of audio streams; and a processing unit, configured to perform configuration based on the audio mixing configuration information.

Optionally, the second device currently plays a first audio stream; the receiving unit is further configured to receive a second audio stream, where the second audio stream and the first audio stream come from different audio source devices; the processing unit is further configured to determine a to-be-played target audio stream based on an audio mixing weight of the first audio stream, an audio mixing weight of the second audio stream, the first audio stream, and the second audio stream, where the audio mixing weight of the first audio stream and the audio mixing weight of the second audio stream are obtained from the audio mixing configuration information; and the apparatus further includes a playing unit, configured to play the target audio stream.

Optionally, the processing unit is specifically configured to: when a preset condition is met, reject the second audio stream to join the audio stream obtained through audio mixing, and determine that the target audio stream is the first audio stream, where the preset condition is any one of the following conditions: the audio mixing weight of the second audio stream is less than or equal to a first value, and the audio mixing weight of the first audio stream is greater than the first value; or the audio mixing weight of the first audio stream is greater than or equal to a second value, and the audio mixing weight of the first audio stream is greater than or equal to the audio mixing weight of the second audio stream, where the second value is greater than the first value.

Optionally, the processing unit is specifically configured to: when the audio mixing weight of the second audio stream is greater than or equal to a second value and the audio mixing weight of the second audio stream is greater than the audio mixing weight of the first audio stream, allow the second audio stream to perform preemption, and determine that the target audio stream is the second audio stream, where the second value is greater than the first value.

Optionally, the processing unit is specifically configured to: when the audio mixing weight of the second audio stream is greater than a first value and less than a second value, and the audio mixing weight of the first audio stream is greater than the first value and less than the second value, allow the second audio stream to join the audio stream obtained through audio mixing; and perform audio mixing on the first audio stream and the second audio stream to generate a third audio stream, where the second value is greater than the first value; and determine that the target audio stream is the third audio stream.

Optionally, the audio mixing weight of the audio stream is used to adjust a sampling depth of a sampling point of the audio stream.

Optionally, types of the plurality of audio streams are different, and/or coding formats of the plurality of audio streams are different, and/or usage scenarios of the plurality of audio streams are different, and/or types of applications that generate the plurality of audio streams are different, and/or types of the plurality of audio source devices are different, and/or types of users to which the plurality of audio source devices belong are different.

Optionally, the audio mixing configuration information is carried in audio mixing policy configuration signaling, the audio mixing policy configuration signaling is carried in apparatus invocation of an audio mixing policy control point, and a handle of the apparatus invocation needs to be a handle of the audio mixing policy control point.

Optionally, the apparatus further includes: a sending unit, configured to send, to the first device, a plurality of types of audio streams supported by the second device.

According to a thirteenth aspect, this application provides an apparatus for audio mixing. The apparatus is a first device or is included in the first device; and the apparatus includes: a receiving unit, configured to receive a first message from a second device, where the first message includes an identifier of an audio stream mixing service; and a sending unit, configured to send a second message to the second device based on the first message, where the second message includes a first audio mixing proxy identifier, and the first audio mixing proxy identifier indicates the first device to start to provide an audio mixing proxy for the second device.

Optionally, the apparatus further includes: an obtaining unit, configured to obtain a plurality of audio streams, where the plurality of audio streams come from a plurality of audio source devices; and a processing unit, configured to determine a to-be-played target audio stream based on the plurality of audio streams. The sending unit is further configured to send the target audio stream to the second device. Herein, the plurality of audio source devices may include the apparatus, or may not include the apparatus. This is not specifically limited herein.

Optionally, the sending unit is further configured to send a first request message, where the first request message is used to request to obtain audio mixing configuration information of the second device, the audio mixing configuration information includes an audio mixing weight of the plurality of audio streams from the plurality of audio source devices, and the audio mixing configuration information is used to perform audio mixing processing on the plurality of audio streams; and the receiving unit is further configured to receive the audio mixing configuration information from the second device.

Optionally, the sending unit is further configured to send a second request message, where the second request message is used to request to obtain audio sink capability information of the second device, and the audio sink capability information indicates an audio sink capability of the second device; the receiving unit is further configured to receive the audio sink capability information from the second device; and the apparatus further includes a processing unit, configured to determine, based on the audio sink capability information, to start to provide the audio mixing proxy for the second device.

Optionally, the sending unit is further configured to send a third message to the second device, where the third message includes a second audio mixing proxy identifier, and the second audio mixing proxy identifier indicates the first device to end providing the audio mixing proxy for the second device.

Optionally, the first message is broadcast public information data, the public information data includes a first field and a second field, the first field indicates that the identifier of the audio stream mixing service is carried in standard service data information, and the second field indicates the identifier of the audio stream mixing service.

Optionally, a length of the identifier of the audio stream mixing service is 16 bits.

According to a fourteenth aspect, this application provides an apparatus for audio mixing. The apparatus is a second device or is included in the second device; and the apparatus includes: a sending unit, configured to broadcast a first message, where the first message includes an identifier of an audio stream mixing service; and a receiving unit, configured to receive a second message from a first device, where the second message includes a first audio mixing proxy identifier, and the first audio mixing proxy identifier indicates the first device to start to provide an audio mixing proxy for the second device.

Optionally, the receiving unit is further configured to receive a first request message from the first device; and the sending unit is further configured to send audio mixing configuration information to the first device based on the first request message, where the audio mixing configuration information includes an audio mixing weight of a plurality of audio streams from a plurality of audio source devices, and the audio mixing configuration information is used to perform audio mixing processing on the plurality of audio streams.

Optionally, the receiving unit is further configured to receive a second request message from the first device; and the sending unit is further configured to send audio sink capability information to the first device based on the second request message, where the audio sink capability information indicates an audio sink capability of the second device.

Optionally, the receiving unit is further configured to receive a third message from the first device, where the third message includes a second audio mixing proxy identifier, and the second audio mixing proxy identifier indicates the first device to end providing the audio mixing proxy for the second device.

Optionally, the first message is broadcast public information data, the public information data includes a first field and a second field, the first field indicates that the identifier of the audio stream mixing service is carried in standard service data information, and the second field indicates the identifier of the audio stream mixing service.

Optionally, a length of the identifier of the audio stream mixing service is 16 bits.

According to a fifteenth aspect, this application provides a device. The device includes a processor and a memory. The memory is configured to store program instructions, and the processor invokes the program instructions in the memory, so that the device performs the method in any one of the first aspect or the possible implementations of the first aspect.

According to a sixteenth aspect, this application provides a device. The device includes a processor and a memory. The memory is configured to store program instructions, and the processor invokes the program instructions in the memory, so that the device performs the method in any one of the third aspect or the possible implementations of the third aspect.

According to a seventeenth aspect, this application provides an audio source device. The audio source device includes a processor and a memory. The memory is configured to store program instructions, and the processor invokes the program instructions in the memory, so that the device performs the method in any one of the second aspect or the possible implementations of the second aspect.

According to an eighteenth aspect, this application provides a device configured to configure an audio mixing weight. The device includes a processor and a memory. The memory is configured to store program instructions, and the processor invokes the program instructions in the memory, so that the device performs the method in any one of the fourth aspect or the possible implementations of the fourth aspect.

According to a nineteenth aspect, this application provides a device that uses an audio stream. The device includes a processor and a memory. The memory is configured to store program instructions, and the processor invokes the program instructions in the memory, so that the device performs the method in any one of the fifth aspect or the possible implementations of the fifth aspect.

According to a twentieth aspect, this application provides a device configured to provide an audio mixing proxy. The device includes a processor and a memory. The memory is configured to store program instructions, and the processor invokes the program instructions in the memory, so that the device performs the method in any one of the sixth aspect or the possible implementations of the sixth aspect.

According to a twenty-first aspect, this application provides a device that uses an audio stream. The device includes a processor and a memory. The memory is configured to store program instructions, and the processor invokes the program instructions in the memory, so that the device performs the method in any one of the seventh aspect or the possible implementations of the seventh aspect.

According to a twenty-second aspect, this application provides a vehicle. The vehicle includes the apparatus according to any one of the eighth aspect to the fourteenth aspect, or includes the apparatus in any one of the possible implementations of the eighth aspect to the fourteenth aspect, or includes the device according to any one of the fifteenth aspect to the twenty-first aspect, or includes the device in any one of the possible implementations of the fifteenth aspect to the twenty-first aspect.

According to a twenty-third aspect, this application provides an audio mixing system. The system includes a first apparatus, a second apparatus, and a third apparatus. The third apparatus is configured to implement the method in any one of the second aspect or the possible implementations of the second aspect, the first apparatus is configured to implement the method in any one of the fourth aspect or the possible implementations of the fourth aspect, and the second apparatus is configured to implement the method in any one of the fifth aspect or the possible implementations of the fifth aspect, or the first apparatus is configured to implement the method in any one of the sixth aspect or the possible implementations of the sixth aspect, and the second apparatus is configured to implement the method in any one of the seventh aspect or the possible implementations of the seventh aspect.

Further, the third apparatus may be the apparatus in any one of the ninth aspect or the possible implementations of the ninth aspect, or the device according to the seventeenth aspect. The first apparatus may be the apparatus in any one of the eleventh aspect or the possible implementations of the eleventh aspect, the apparatus in any one of the thirteenth aspect or the possible implementations of the thirteenth aspect, the device according to the eighteenth aspect, or the device according to the twentieth aspect. The second apparatus may be the apparatus in any one of the twelfth aspect or the possible implementations of the twelfth aspect, the apparatus in any one of the fourteenth aspect or the possible implementations of the fourteenth aspect, the device according to the nineteenth aspect, or the device according to the twenty-first aspect.

According to a twenty-fourth aspect, this application provides an audio mixing system. The system includes a first apparatus and a second apparatus. The first apparatus is configured to perform the method in any one of the second aspect or the possible implementations of the second aspect. The second apparatus is configured to perform the method in any one of the first aspect or the possible implementations of the first aspect, and/or perform the method in any one of the third aspect or the possible implementations of the third aspect.

Further, the first apparatus may be the apparatus in any one of the ninth aspect or the possible implementations of the ninth aspect, or the device according to the seventeenth aspect. The second apparatus may be the apparatus in any one of the eighth aspect or the possible implementations of the eighth aspect, the device according to the fifteenth aspect, the apparatus in any one of the tenth aspect or the possible implementations of the tenth aspect, or the device according to the sixteenth aspect.

According to a twenty-fifth aspect, this application provides a computer-readable storage medium, including computer instructions. When the computer instructions are run by a processor, the method in any one of the first aspect or the possible implementations of the first aspect is implemented, or the method in any one of the second aspect or the possible implementations of the second aspect is implemented, or the method in any one of the third aspect or the possible implementations of the third aspect is implemented, or the method in any one of the fourth aspect or the possible implementations of the fourth aspect is implemented, or the method in any one of the fifth aspect or the possible implementations of the fifth aspect is implemented, or the method in any one of the sixth aspect or the possible implementations of the sixth aspect is implemented, or the method in any one of the seventh aspect or the possible implementations of the seventh aspect is implemented.

According to a twenty-sixth aspect, this application provides a computer program product. When the computer program product is executed by a processor, the method in any one of the first aspect or the possible embodiments of the first aspect is implemented, or the method in any one of the second aspect or the possible implementations of the second aspect is implemented, or the method in any one of the third aspect or the possible implementations of the third aspect is implemented, or the method in any one of the fourth aspect or the possible implementations of the fourth aspect is implemented, or the method in any one of the fifth aspect or the possible implementations of the fifth aspect is implemented, or the method in any one of the sixth aspect or the possible implementations of the sixth aspect is implemented, or the method in any one of the seventh aspect or the possible implementations of the seventh aspect is implemented.

For example, the computer program product may be a software installation package.

**BRIEF DESCRIPTION OF DRAWINGS**

FIG. 1A is a diagram of an audio mixing system according to an embodiment of this application;

FIG. 1B is a diagram of another audio mixing system according to an embodiment of this application;

FIG. 1C is a diagram of another audio mixing system according to an embodiment of this application;

FIG. 1D is a diagram of another audio mixing system according to an embodiment of this application;

FIG. 2A is a flowchart of a method for configuring an audio mixing weight according to an embodiment of this application;

FIG. 2B is a diagram of a display interface for setting an audio mixing weight according to an embodiment of this application;

FIG. 2C is a diagram of an application scenario according to an embodiment of this application;

FIG. 3A is a flowchart of an audio mixing method according to an embodiment of this application;

FIG. 3B is a diagram of an interval division of audio mixing weights of audio streams according to an embodiment of this application;

FIG. 3C is a diagram of another interval division of audio mixing weights of audio streams according to an embodiment of this application;

FIG. 3D is a diagram of an audio mixing behavior according to an embodiment of this application;

FIG. 3E is a diagram of an audio mixing behavior according to an embodiment of this application;

FIG. 3F is a diagram of an application scenario according to an embodiment of this application;

FIG. 3G is a diagram of an application scenario according to an embodiment of this application;

FIG. 4 is a flowchart of a method for configuring an audio mixing weight according to an embodiment of this application;

FIG. 5A is a flowchart of an audio mixing method based on an audio mixing proxy according to an embodiment of this application;

FIG. 5B is a diagram in which a first message carries an identifier of an audio stream mixing service according to an embodiment of this application;

FIG. 6A is a diagram of a structure of an apparatus according to an embodiment of this application;

FIG. 6B is a diagram of a structure of an apparatus according to an embodiment of this application;

FIG. 6C is a diagram of a structure of an apparatus according to an embodiment of this application;

FIG. 7A is a diagram of a structure of an apparatus according to an embodiment of this application;

FIG. 7B is a diagram of a structure of an apparatus according to an embodiment of this application;

FIG. 7C is a diagram of a structure of an apparatus according to an embodiment of this application; and

FIG. 8 is a diagram of a structure of a communication device according to an embodiment of this application.

## DESCRIPTION OF EMBODIMENTS

It should be noted that prefix words such as "first" and "second" are used in this application only to distinguish between different described objects, and have no limitation on locations, a sequence, priorities, quantities, content, or the like of the described objects. For example, if the described objects are "fields", ordinal numbers before "field" in a "first field" and a "second field" do not limit locations or a sequence of the "fields", and "first" and "second" do not limit whether "field" modified by "first" and "field" modified by "second" are in a same message, and do not limit a sequence of the "first field" and the "second field". For another example, if the described objects are "levels", ordinal numbers before "level" in a "first level" and a "second level" do not limit priorities of "levels". For another example, a quantity of described objects is not limited by a prefix word, and may be one or more. A "first device" is used as an example. A quantity of "devices" may be one or more. In addition, objects modified by different prefix words may be the same or different. For example, if a described object is a "device", a "first device" and a "second device" may be a same device, devices of a same type, or devices of different types. For another example, if a described object is "information", "first information" and "second information" may be information of same content or information of different content. In conclusion, in embodiments of this application, use of the prefix words used to distinguish between the described objects constitutes no limitation on the described objects. For descriptions of the described object, refer to context descriptions in claims or embodiments. Use of the prefix words should not constitute a redundant limitation.

It should be noted that, in embodiments of this application, a description manner like "at least one (or at least one piece) of a1, a2, ..., and an" is used, including a case in which any one of a1, a2, ..., and an exists alone, and also including a case of any combination of any plurality of a1, a2, ..., and an. Each case may exist alone. For example, a description manner of "at least one of a, b, and c" includes a case of a single a, a single b, a single c, a combination of a and b, a combination of a and c, a combination of b and c, or a combination of a, b, and c.

The following describes technical solutions of this application with reference to accompanying drawings.

An audio mixing system provided in embodiments of this application may be configured to process audio streams from a plurality of audio source devices.

Before the audio mixing system is described, three functional modules required for processing the audio streams from the plurality of audio source devices are first described. Herein, the three functional modules include a configuration module, an audio mixing module, and an audio sink module. The configuration module is configured to set an audio mixing weight of the audio stream. The audio mixing module is configured to perform audio mixing processing, to be specific, can perform audio mixing processing on the plurality of audio streams from the plurality of audio source devices to obtain a single audio stream. The audio sink module is configured to use (for example, play) the single audio stream.

Audio mixing systems in which the three functional modules are used vary based on different deployment locations of the three functional modules. In embodiments of this application, the audio mixing system is, for example, any one of the following forms:

First form:

The configuration module, the audio mixing module, and the audio sink module are deployed on a same device.

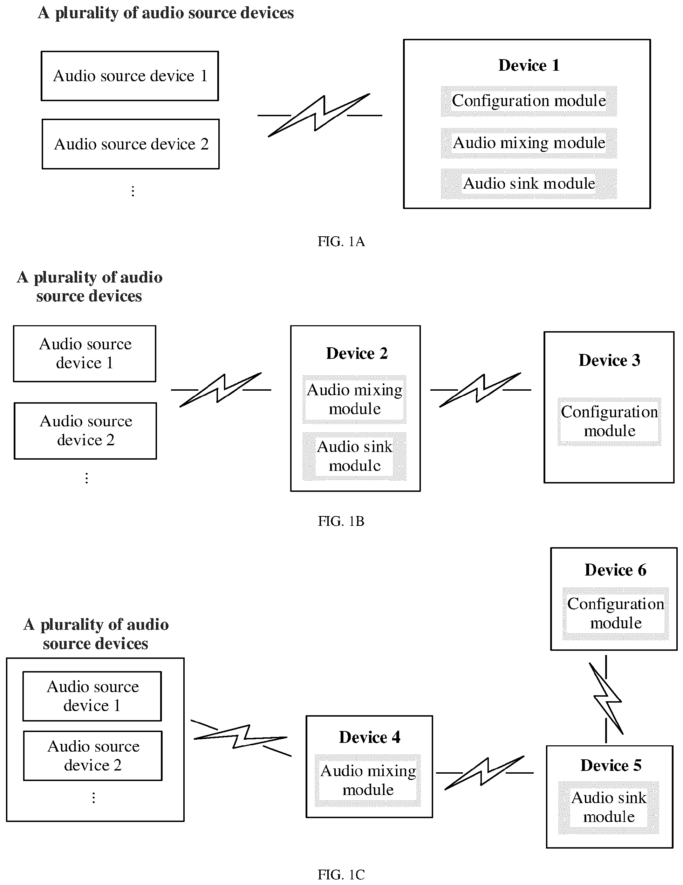

FIG. 1A is a diagram of an audio mixing system according to an embodiment of this application. In FIG. 1A, the audio mixing system includes a device 1 and a plurality of audio source devices; and three functional modules, namely, a configuration module, an audio mixing module, and an audio sink module, are integrated on the device 1. The device 1 may communicate with each of the plurality of audio source devices in a wired or wireless manner. The audio source device is a device that generates or sends an audio stream.

In FIG. 1A, because the foregoing three functional modules are deployed on the device 1, the device 1 has an audio mixing weight configuration capability, an audio mixing processing capability, and an audio sink capability. The audio sink capability means that the device can receive or use an audio stream, and using the audio stream may be, for example, playing the audio stream. In this case, the device 1 may be, for example, a terminal device that supports user configuration, like a portable mobile device (for example, a mobile phone or a tablet computer), an intelligent wearable device (for example, a sports band or a watch), a virtual reality device, an augmented reality device, or a head unit.

For example, the device 1 is a user mobile phone, and the plurality of audio source devices are a user mobile phone and a head unit. The user mobile phone may obtain a plurality of audio streams from the user mobile phone and the head unit, determine an audio mixing weight of the plurality of audio streams, perform corresponding processing on the plurality of audio streams based on the audio mixing weight of the plurality of audio streams to obtain a target audio stream, and play the target audio stream. The target audio stream is obtained based on the plurality of audio streams and an audio mixing behavior. For details about determining of the audio mixing weight of the audio stream and the audio mixing behavior, refer to related descriptions in the following method embodiments. Details are not described herein.

Second form:

The configuration module is deployed on a device, and the audio mixing module and the audio sink module are deployed on a same device.

FIG. 1B is a diagram of another audio mixing system according to an embodiment of this application. In FIG. 1B, the audio mixing system includes a device 2, a device 3, and a plurality of audio source devices; and two functional modules, namely, an audio mixing module and an audio sink module, are integrated on the device 2, and a functional module, namely, a configuration module, is integrated on the device 3. The device 2 may communicate with each of the plurality of audio source devices in a wired or wireless manner, and the device 2 communicates with the device 3 in a wireless or wired manner.

In FIG. 1B, because the audio mixing module and the audio sink module are integrated on the device 2, the device 2 has an audio mixing processing capability and an audio sink capability. In this case, the device 2 may be, for example, a device that uses an audio stream, like a headset, a speaker, or a head unit, or may be another portable mobile device (for example, a mobile phone or a tablet computer), intelligent wearable device (for example, glasses with a player, a sports band, or a watch), virtual reality device, or augmented reality device that does not support a user to configure audio mixing configuration information, or a component, a chip, or the like in the foregoing terminal (for example, the device that uses the audio stream, the portable mobile device, or the intelligent wearable device).

In FIG. 1B, because the configuration module is integrated on the device 3, the device 3 has an audio mixing weight configuration capability. In this case, the device 3 may be, for example, a terminal device that supports user configuration, like a mobile phone, a tablet computer, a head unit, a palmtop computer, or a desktop computer.

For example, the device 2 is a headset, the device 3 is a mobile phone, and the plurality of audio source devices are a tablet computer and a public address system. The mobile phone configures, based on setting information of a user, an audio mixing weight for an audio stream having a corresponding property, generates audio mixing configuration information, and sends the audio mixing configuration information to the headset. After receiving a plurality of audio streams from the tablet computer and the public address system, the headset may perform corresponding processing on the plurality of audio streams based on the obtained audio mixing configuration information to obtain a target audio stream, and play the target audio stream.

Third form:

The configuration module, the audio mixing module, and the audio sink module are deployed on different devices, respectively.

FIG. 1C is a diagram of another audio mixing system according to an embodiment of this application. In FIG. 1C, the audio mixing system includes a device 4, a device 5, a device 6, and a plurality of audio source devices; and a functional module, namely, an audio mixing module, is integrated on the device 4, a functional module, namely, an audio sink module, is integrated on the device 5, and a functional module, namely, a configuration module, is integrated on the device 6. The device 4 may separately communicate with the device 5 and each of the plurality of audio source devices in a wired or wireless manner, and the device 5 may communicate with the device 6 in a wired or wireless manner.

In FIG. 1C, the device 4 has an audio mixing processing function, the device 5 has an audio sink capability, and the device 6 has an audio mixing weight configuration capability. For example, the device 4 may be, for example, a terminal device that has a processing capability, like a portable mobile device (for example, a mobile phone, a tablet computer, or a computer), an intelligent wearable device (for example, a sports band or a watch), or a head unit. Alternatively, the device 4 may be an infrastructure device, like a home router or a public router. The device 5 is, for example, a device that does not have an audio mixing processing capability but can play an audio stream, like a headset, a speaker, glasses with a player, or another player. For the device 6, refer to the related descriptions of the device 3 in FIG. 1B. Details are not described herein again.

In FIG. 1C, the device 4 may serve as an audio mixing proxy of the device 5. When the device 4 starts to provide the audio mixing proxy for the device 5, the device 4 may receive, in place of the device 5, a plurality of audio streams from the plurality of audio source devices, perform corresponding processing on the plurality of audio streams based on audio mixing configuration information obtained from the device 5 to obtain a target audio stream, and send the target audio stream to the device 5, so that the device 5 plays the target audio stream. It may be understood that the target audio stream is a single audio stream.

Fourth form:

The audio mixing module and the configuration module are deployed on a same device, and the audio sink module is deployed on another device.

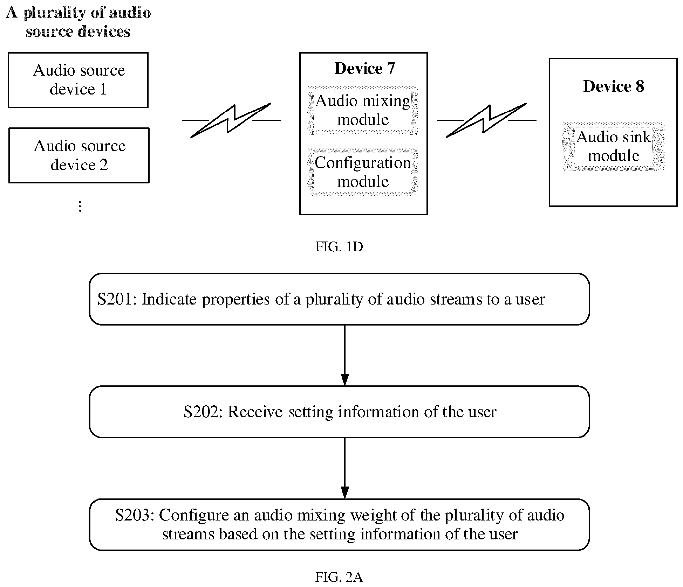

FIG. 1D is a diagram of another audio mixing system according to an embodiment of this application. In FIG. 1D, the audio mixing system includes a device 7, a device 8, and a plurality of audio source devices; and an audio mixing module and a configuration module are integrated on the device 7, and an audio sink module is integrated on the device 8. The device 7 communicates with each of the plurality of audio source devices in a wired or wireless manner, and the device 7 communicates with the device 8 in a wired or wireless manner. Herein, the device 7 has an audio mixing weight configuration capability and an audio mixing processing capability, and the device 8 has an audio sink capability.

It should be noted that FIG. 1A, FIG. 1B, FIG. 1C, and FIG. 1D are merely example architectural diagrams, but a quantity of network elements included in any one of the audio mixing systems shown in FIG. 1A, FIG. 1B, FIG. 1C, and FIG. 1D is not limited, or may be in another form. In addition, a method provided in embodiments of this application may be applied to the audio mixing system shown in any one of FIG. 1A, FIG. 1B, FIG. 1C, and FIG. 1D. Certainly, the method provided in embodiments of this application may alternatively be applied to another audio mixing system. This is not limited in embodiments of this application.

To support audio mixing processing on a plurality of audio streams from a plurality of audio source devices, a device (that is, a device that has an audio mixing processing capability) in which the audio mixing module is located needs to first determine an audio mixing weight of the audio streams. The audio mixing weight of the audio stream indicates a loudness output proportion of the audio stream when audio mixing is performed on the audio stream. In some possible embodiments, loudness of the audio stream may also be understood as a volume of the audio stream, that is, a subjective feeling of a human ear on a volume of a heard sound.

For example, the audio mixing weight may be represented by a floating point number or a percentage of (0, 1]. It may be understood that a larger audio mixing weight indicates a higher loudness output proportion of an audio stream corresponding to the audio mixing weight in an audio mixing processing process.

In an implementation, determining the audio mixing weight of the audio stream may be: receiving indication information sent by an audio source device, where the indication information indicates the audio mixing weight of the audio stream; and obtaining the audio mixing weight of the audio stream from the indication information.

In an implementation, determining the audio mixing weight of the audio stream may be: obtaining the audio mixing weight of the audio stream from audio mixing configuration information, where the audio mixing configuration information includes an audio mixing weight of the plurality of audio streams from the plurality of audio source devices.

Herein, the audio mixing weight of the audio stream is used to adjust a sampling depth of a sampling point of the audio stream. The sampling depth indicates precision obtained by quantizing a discrete signal corresponding to the sampling point.

Types of the plurality of audio streams are different, and/or coding formats of the plurality of audio streams are different, and/or usage scenarios of the plurality of audio streams are different, and/or types of applications that generate the plurality of audio streams are different, and/or types of the plurality of audio source devices are different, and/or types of users to which the plurality of audio source devices belong are different.

For example, the type of the audio stream may be indicated by using an identifier, or a binary value. The type of the audio stream is, for example, music, a game, a voice call, navigation, a notification reminder, an alarm, an alarm clock, or broadcast.

The type of the audio source device is, for example, a private device or a public device.

The type of the user to which the audio source device belongs may be, for example, classified into a minor and an adult based on an age of the user, or may be classified into a child, a young person, and an elderly person based on the age of the user, or may be classified based on an occupation of the user.

The type of the application that generates the audio stream may be classified into, for example, practical life, social networking, office, entertainment, news, or learning, or one application may be one type. This is not specifically limited herein.

The usage scenario may be, for example, a game mode, a driving mode, a speaker mode, a headset play mode, a rest mode, a silent mode, a learning mode, and a power saving mode. For example, a game-type audio stream has a highest priority in the game mode, a navigation-type audio stream has a highest priority in the driving mode, and a learning-type audio stream has a highest priority in the learning mode.

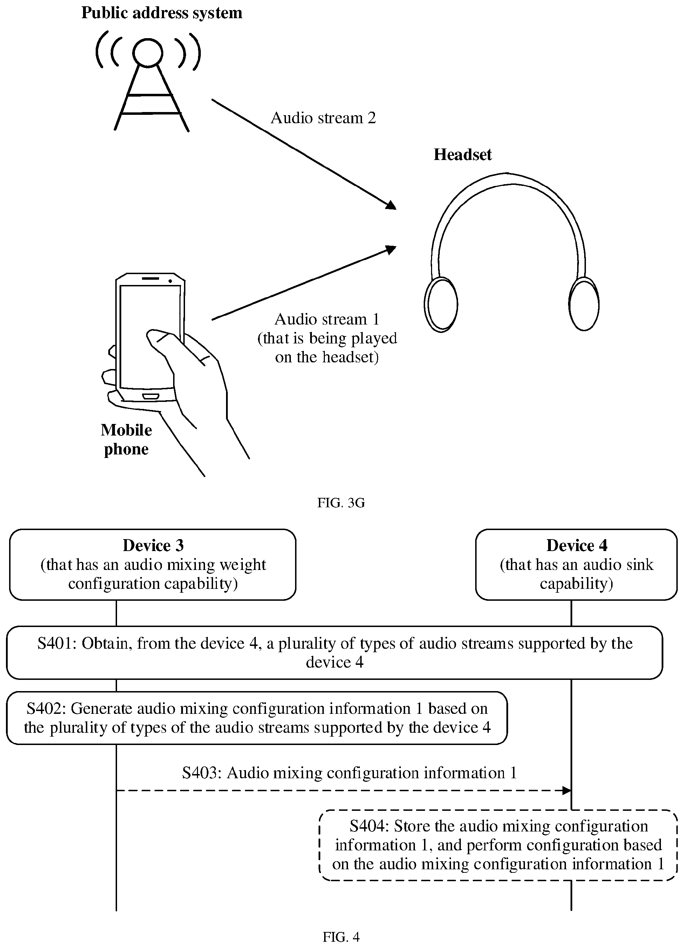

In embodiments of this application, the audio mixing configuration information may be set by default at delivery of a device (that is, a device that has an audio sink capability) in which the audio sink module is located, or may be generated by a device (that is, a device that has an audio mixing weight configuration capability) in which the configuration module is located based on received setting information of the user. In some possible embodiments, when the configuration module and the audio sink module are not deployed in a same device, the audio mixing configuration information may alternatively be generated by the device in which the configuration module is located based on a response message sent by the device in which the audio sink module is located. For details, refer to the following descriptions in an embodiment in FIG. 4.

Herein, the audio mixing configuration information corresponds to the device in which the audio sink module is located. In other words, based on different audio sink capabilities of devices, types of audio streams that can be played by the devices may be different, and therefore corresponding audio mixing configuration information is also different. It may be understood that each device that has an audio sink capability has audio mixing configuration information corresponding to the device, and a plurality of types included in the audio mixing configuration information are types of audio streams supported by the device that has the audio sink capability.

In embodiments of this application, the audio mixing configuration information may be represented by using a table, a graph, or a data structure. When the audio mixing configuration information is represented by using the table, the audio mixing configuration information may also be referred to as an audio mixing configuration table or an audio mixing policy table.

For example, the audio mixing configuration information may be represented as a correspondence table shown in the following Table 1. Specifically, Table 1 shows a correspondence between a type of an audio stream and an audio mixing weight. A correspondence "type A-X1" is used as an example. It can be learned that when the type of the audio stream is the type A, the audio mixing weight of the audio stream is X1. In Table 1, audio mixing weights of audio streams of different types may be the same or may be different.

Table 1

| Type of the audio stream | Audio mixing weight |
| --- | --- |
| Type A | X1 |
| Type B | X2 |
| Type C | X3 |
| ... | ... |

It should be noted that the foregoing Table 1 is merely used as an example to reflect the correspondence between the type of the audio stream and the audio mixing weight. In actual application, text content and a storage manner of the correspondence in Table 1 may alternatively be in another form. This is not specifically limited herein.

In some possible embodiments, in addition to the type of the audio stream shown in Table 1, setting of the audio mixing weight in the audio mixing configuration information may be related to at least one of the following factors: a type of an audio source device that generates the audio stream, a type of a user to which the audio source device belongs, a type of an application that generates the audio stream, and a coding format and a usage scenario of the audio stream.

For example, the audio mixing configuration information may alternatively be represented as a correspondence table shown in the following Table 2. Specifically, Table 2 shows a correspondence among a type of an audio stream, a type of an audio source device, and an audio mixing weight. A correspondence "type A-type 1-X1" is used as an example for description, and represents an audio stream from a type-1 audio source device. If the audio stream type of the audio stream is the type A, a corresponding audio mixing weight is X1. It can be learned that when audio source devices of different types generate audio streams of a same type, audio mixing weights of the corresponding audio streams may be different.

Table 2

| Type of the audio stream | Type of the audio source device | Audio mixing weight |
| --- | --- | --- |
| Type A | Type 1 | X1 |
| Type A | Type 2 | X2 |
| Type B | Type 1 | X3 |
| ... | | ... |

It should be noted that Table 2 is merely used as an example to reflect the correspondence among the type of the audio stream, the type of the audio source device, and the audio mixing weight. In actual application, text content and a storage manner of the correspondence in Table 2 may alternatively be in another form. This is not specifically limited herein.

FIG. 2A is a flowchart of a method for configuring an audio mixing weight according to an embodiment of this application. In this method, an audio mixing weight of an audio stream is configured through human-computer interaction. The method is applied to a device that has an audio mixing weight configuration capability, for example, may be the device 1 in FIG. 1A, the device 3 in FIG. 1B, the device 6 in FIG. 1C, or the device 7 in FIG. 1D. The method includes but is not limited to the following steps.

S201: Indicate properties of a plurality of audio streams to a user.

Herein, the user may be a user associated with a device that has an audio sink capability and/or the device that has the audio mixing weight configuration capability. For example, a user using the device that has the audio mixing weight configuration capability may be a user to which the device that has the audio mixing weight configuration capability belongs, or may be a user using the device that has the audio sink capability, or may be a user to which the device that has the audio sink capability belongs. This is not specifically limited herein.

The plurality of audio streams are generated by a plurality of devices. The property of the audio stream includes at least one of the following information: an identifier of the audio stream, a type of the audio stream, a type of an application that generates the audio stream, a type of an audio source device that generates the audio stream, a type of a user to which the audio source device that generates the audio stream belongs, and a coding format of the audio stream.

Herein, the identifier of the audio stream is used to identify the audio stream. The identifier of the audio stream may be a character or a combination of more characters. The character may be one or more of a digit, a letter, and another symbol. For example, the identifier of the audio stream may be a digit or a combination of more digits, or a combination of one or more pieces of data and a letter. For other information in the property of the audio stream, refer to the descriptions of the corresponding content in the foregoing embodiments. Details are not described herein again.

S202: Receive setting information of the user.

In this embodiment of this application, receiving the setting information of the user includes:

obtaining the setting information input by the user through a touchscreen of the device that has the audio mixing weight configuration capability;

obtaining the setting information input by the user through a button of the device that has the audio mixing weight configuration capability;

obtaining the setting information input by the user through a keyboard of the device that has the audio mixing weight configuration capability;

obtaining the setting information input by the user through a voice; or

obtaining the setting information input by the user through a gesture.

For example, a display interface is disposed on the device that has the audio mixing weight configuration capability, and the user may input an audio mixing weight of the plurality of audio streams in the display interface through a touchscreen, to generate the corresponding setting information.

For example, the user may input the audio mixing weight of the corresponding audio stream through a hardware button (for example, a volume button or a power button) or the keyboard on the device that has the audio mixing weight configuration capability.

For example, the user may alternatively input "set an audio mixing weight of a type-A audio stream to X1" or "set the audio mixing weight of the type-A audio stream from a type-1 audio source device to X1" through a voice. Alternatively, another voice instruction is used to input an audio mixing weight of an audio stream having the property.

For example, the user may input the audio mixing weight of the audio stream through a gesture, or may adjust an audio mixing weight of at least one of the plurality of audio streams through a gesture. For example, an upward gesture indicates to increase a current audio mixing weight of the audio stream, and a downward gesture indicates to decrease the current audio mixing weight of the audio stream.

In this embodiment of this application, the received setting information of the user may be used to perform initial setting (or referred to as pre-configuration) on the audio mixing weight of the audio stream before audio mixing is performed, or may be used to adjust the audio mixing weight of the audio stream in a process of performing audio mixing.

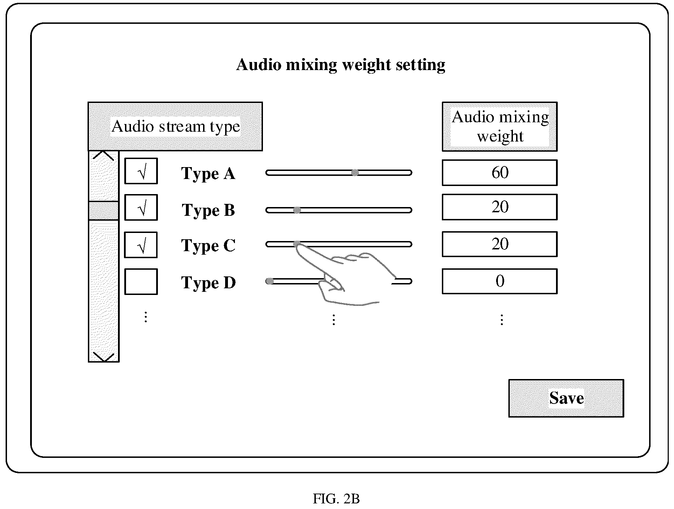

Based on FIG. 2B, the following provides description that the user inputs the corresponding setting information through a screen.

FIG. 2B is a diagram of a display interface for setting an audio mixing weight according to an embodiment of this application. The display interface shown in FIG. 2B is a human-computer interaction interface. **In** FIG. 2B, it can be seen that a property of an audio stream provided for a user includes a type of the audio stream, and the display interface further displays slider bars and audio mixing weight setting boxes that correspond to a plurality of types of audio streams. The user may adjust an audio mixing weight of an audio stream of a corresponding type through a slider button on a slider bar, and an adjusted audio mixing weight is displayed in a setting box of the corresponding audio mixing weight. In FIG. 2B, an example in which an audio mixing weight of a type-C audio stream is set is used. The user performs an operation of dragging a slider button on a slider bar corresponding to the type C in the display interface from a leftmost side of the slider bar to a current location 1. Based on the operation, the setting information that is of the user and that is received by the device on which the display interface is located is specifically "setting the audio mixing weight of the type-C audio stream to 20%", and "20" is displayed in a setting box of the audio mixing weight corresponding to the type C. In this manner, the user may set an audio mixing weight for an audio stream of each type shown in FIG. 2B through a screen input operation. After the user completes the screen input operation, the user may click a "save" button in FIG. 2B. In some possible embodiments, the screen input operation of the user may not be dragging the slider button on the slider bar shown in FIG. 2B. For example, a to-be-set audio mixing weight may be directly input in a setting box of the audio mixing weight corresponding to a type of an audio stream.

In FIG. 2B, it can be seen that a box that can be selected is further disposed on a left side of the type of the audio stream. This design is based on a case in which types of audio streams supported by devices that have different audio sink capabilities are different when audio mixing configuration information is generated for the devices that have the audio sink capabilities. In this case, the user may select, in FIG. 2B based on the types of the audio streams supported by the devices that have the audio sink capabilities, a type of an audio stream for which an audio mixing weight needs to be set, for example, draw "√". The selected type is the type of the audio stream supported by the device that has the audio sink capability. **In** some possible embodiments, the selected type in FIG. 2B may alternatively be selected by default by the device that has the audio mixing weight configuration capability based on the type of the audio stream supported by the device that has the audio sink capability, and does not need to be selected by the user.

It may be understood that FIG. 2B is merely an example of the display interface for setting the audio mixing weight. In this embodiment of this application, the display interface is not limited to the form shown in FIG. 2B, and may alternatively be another display interface that can be used by the user to set the audio mixing weight. For example, in addition to the type of the audio stream shown in FIG. 2B, the property that is of the audio stream and that is provided by the display interface for the user may further include at least one of the following information: the identifier of the audio stream, the type of the application that generates the audio stream, the type of the audio source device that generates the audio stream, the type of the user to which the audio source device that generates the audio stream belongs, and the coding format of the audio stream. In other words, in some possible embodiments, in addition to the type of the audio stream, setting of the audio mixing weight may be related to at least one of the type of the audio source device that generates the audio stream, the type of the user to which the audio source device belongs, the type of the application that generates the audio stream, and the like. This is not specifically limited herein. For another example, in some possible embodiments, the display interface shown in FIG. 2B may further provide a usage scenario of the audio stream for the user.

S203: Configure the audio mixing weight of the plurality of audio streams based on the setting information of the user.

For example, on the interface shown in FIG. 2B, when the user taps the "save" button, S203 is performed, to be specific, in FIG. 2B, the audio mixing weight of the type-A audio stream is set to 60%, an audio mixing weight of a type-B audio stream is set to 20%, and the audio mixing weight of the type-C audio stream is set to 20%.

In an implementation, the audio mixing weight of the plurality of audio streams is configured based on the setting information of the user, to generate the audio mixing configuration information.

For example, when the device that has the audio mixing weight configuration capability does not have an audio mixing processing capability, the generated audio mixing configuration information further needs to be sent to another device. For example, when the device that has the audio mixing weight configuration capability is the device 3 in FIG. 1B, the audio mixing configuration information may be further sent to the device 2. When the device that has the audio mixing weight configuration capability is the device 6 in FIG. 1C, the audio mixing configuration information may be further sent to the device 5.

In some possible embodiments, a usage scenario of the plurality of audio streams may be further indicated to the user, and the setting information of the user is used to configure the audio mixing weight of the plurality of audio streams in the usage scenario.

For example, the usage scenario includes a first usage scenario and a second usage scenario, and an audio mixing weight of the plurality of audio streams in the first usage scenario is different from an audio mixing weight of the plurality of audio streams in the second usage scenario. Herein, the usage scenario includes at least one of the following scenarios: a game mode, a driving mode, a speaker mode, a headset playing mode, a rest mode, a silent mode, a learning mode, and a power saving mode.

For example, an audio mixing weight of a game-type audio stream in the game mode scenario is higher than an audio mixing weight of the game-type audio stream in another usage scenario. For another example, an audio mixing weight of a navigation-type audio stream in the driving mode scenario is higher than an audio mixing weight of the navigation-type audio stream in another usage scenario. For another example, an audio mixing weight of an audio stream generated by a learning application in the learning mode scenario is higher than an audio mixing weight of the audio stream generated by the learning application in another usage scenario.

In some possible embodiments, in addition to supporting the user to set the audio mixing weight, the device that has the audio mixing weight configuration capability further supports a function of reminding the user to pay attention to an important audio stream.

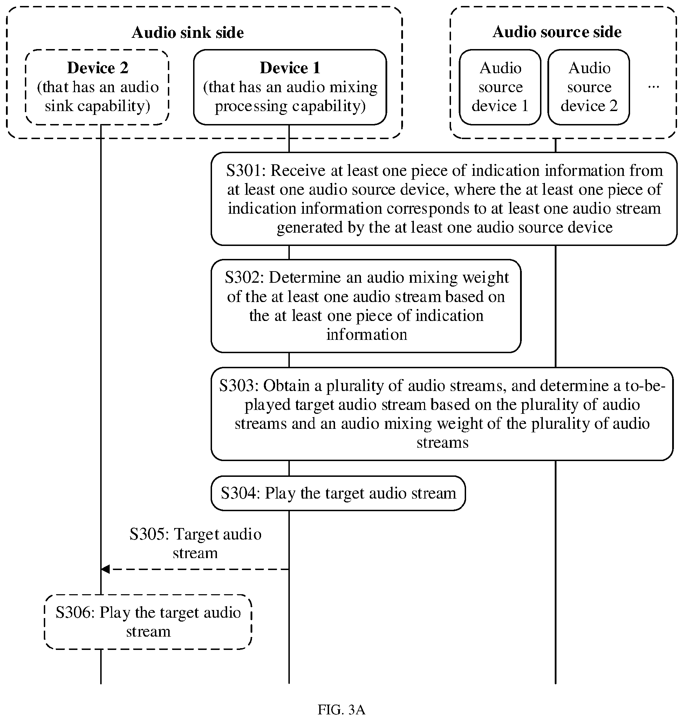

In an implementation, the plurality of audio streams are mixed into a to-be-played audio stream based on the audio mixing weight of the plurality of audio streams. Herein, mixing may be understood as audio mixing. For a mixing process, refer to the following descriptions in an embodiment in FIG. 3A.

Further, the plurality of audio streams include a first audio stream with a high priority, and the user may be reminded in at least one of the following manners to pay attention to the first audio stream:

increasing an audio mixing weight of the first audio stream;
playing content of the first audio stream for a plurality of times; and
requiring the user to feed back a confirmation.

Herein, the first audio stream with the high priority may be understood as follows: The first audio stream carries a high-priority label, a priority of the first audio stream is higher than a preset priority threshold, a priority value of the first audio stream is a threshold corresponding to the high priority, or the like. This is not specifically limited herein. In addition, the priority may indicate, for example, an importance degree, an emergency degree, an urgency degree, and a degree of association with the user.

For example, the increasing an audio mixing weight of the first audio stream includes: decreasing, in a play time period of the first audio stream, a play volume of another audio stream that is in the plurality of audio streams and that is mixed with the first audio stream; or setting the first audio stream as a unique audio stream in the to-be-played audio stream in the play time period of the first audio stream. The another audio stream mixed with the first audio stream is weakened, or the first audio stream is set as the unique audio stream to be played, so that the first audio stream can be more prominent, and it is easier for the user to pay attention to the first audio stream.

For example, the playing content of the first audio stream for a plurality of times includes: repeatedly mixing the first audio stream into the p to-be-played audio stream for the plurality of times, and successively increasing the audio mixing weight of the first audio stream. The first audio stream is repeatedly mixed into the to-be-played audio stream for the plurality of times, so that the first audio stream is repeatedly played. In addition, the first audio stream is mixed into each time with a greater audio mixing weight than that of a previous time, so that a loudness output proportion of the first audio stream in the to-be-played audio stream is increasingly high when the first audio stream is successively played, and the user can pay attention to the first audio stream in time.

For example, requiring the user to feed back a confirmation includes: querying the user whether the user learns of the content carried in the first audio stream; and receiving feedback information of the user, where the feedback information indicates that the user confirms that the user learns of the content carried in the first audio stream. It can be learned that, when there is the first audio stream with the high priority, the user may further actively seek a confirmation feedback of the user for the first audio stream, to ensure that the user pays attention to the first audio stream.

For example, querying the user whether the user learns of the content carried in the first audio stream may be: displaying, on a display interface, pop-up prompt information "whether the user learns of the content carried in the first audio stream" to be confirmed by the user, and controlling a device on which the display interface is located to vibrate, play an alert tone, and the like.

Further, before the feedback information of the user is received, the first audio stream may be repeatedly mixed into the to-be-played audio stream; and the first audio stream is stopped from being mixed into the to-be-played audio stream only after the feedback information of the user is received. It can be learned that, when the feedback information of the user is not received, the first audio stream is repeatedly mixed into the to-be-played audio stream to implement cyclic playing of the first audio stream, so that the user can be effectively reminded to pay attention to the first audio stream.

For example, stopping mixing the first audio stream into the to-be-played audio stream only after the feedback information of the user is received may be stopping mixing the first audio stream into the to-be-played audio stream after the feedback information of the user is received, regardless of whether the first audio stream is received again.

In an implementation, when a volume of the to-be-played audio stream exceeds a preset volume threshold, that the volume is excessively high is prompted to the user. In this way, the user may decrease the play volume of the currently played audio stream through a manual operation, to avoid hearing impairment.

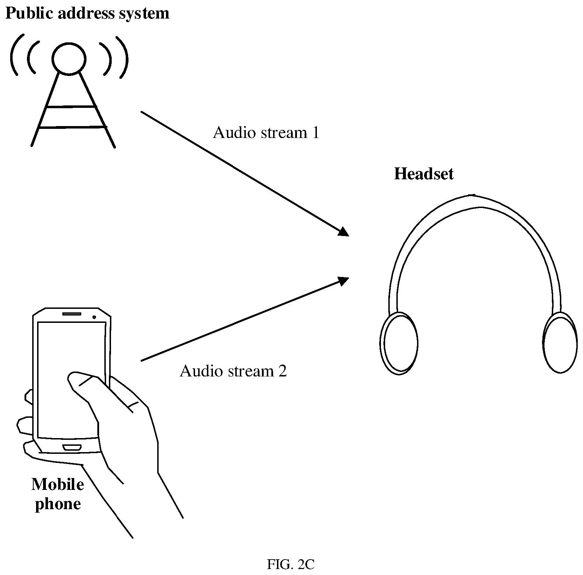

FIG. 2C is a diagram of an application scenario according to an embodiment of this application. In FIG. 2C, a public address system may generate and send an audio stream. A mobile phone held by a user is the foregoing device that has the audio mixing weight configuration capability. A headset is connected to the mobile phone and is configured to play only the audio stream.

For example, in FIG. 2C, it is assumed that the user is waiting in an airport waiting room, a to-be-taken flight is ZF1111, and the user currently holds the mobile phone to listen to music (corresponding to an audio stream 2 in FIG. 2C) and read an e-book. In this case, the public address system generates an audio stream 1, and content carried in the audio stream 1 is "passengers taking the flight ZF1111, please prepare for check-in". It can be learned that the audio stream 1 is the first audio stream with the high priority. In this case, to remind the user to pay attention to the audio stream 1, for example, the mobile phone decreases a play volume of the audio stream 2 when performing audio mixing on the audio stream 1 and the currently played audio stream 2, or directly stops playing the audio stream 2 and plays only the audio stream 1. For another example, the mobile phone may repeatedly mix the audio stream 1 into the currently played audio stream 2 for a plurality of times, to play the audio stream 1 for a plurality of times. In addition, as a quantity of audio mixing times of the audio stream 1 increases, an audio mixing weight of the audio stream 1 may also increase accordingly. In this case, the user may feel that a volume gradually increases when the audio stream 1 is repeatedly played. For another example, a dialog box "please confirm whether you learn of the content carried in the audio stream 1" may be popped up on a display interface of the mobile phone. When no confirmation feedback of the user is received, the audio stream 1 may be mixed into the currently played audio stream 2 for a plurality of times to repeatedly play the audio stream 1, and repeated mixing of the audio stream 1 into the audio stream 2 is stopped only after the confirmation feedback of the user is received.

In some possible embodiments, the scenario shown in FIG. 2C is also applicable to scenarios such as a bus, a subway, and a high-speed railway. In this case, the audio stream 1 may be an audio stream used for a station broadcast.

For example, in FIG. 2C, it is assumed that the public address system further generates an audio stream 3. Content carried in the audio stream 3 is "passengers taking the flight ZF1000, please prepare for check-in", and the audio stream 3 and the audio stream 2 are audio streams of a same type. It can be learned that the user may not pay attention to the content carried in the audio stream 3. In this case, the mobile phone may refuse to mix the audio stream 3 into the currently played audio stream 2, or the mobile phone may mix the audio stream 3 into the currently played audio stream 2, but a volume of the audio stream 3 is low.

In an implementation, a default setting of the audio mixing weight of the plurality of audio streams may be further obtained. In this case, configuring the audio mixing weight of the plurality of audio streams based on the setting information of the user includes: configuring the audio mixing weight of the plurality of audio streams based on the setting information of the user and the default setting.

In other words, configuration of the audio mixing weight of the audio stream may be determined by both the default setting of the audio mixing weight and a preference of the user. For example, the default setting of the audio mixing weight of the audio stream requires that an audio mixing weight of a type-1 audio stream needs to be greater than or equal to a first preset value, the setting information input by the user indicates that the audio mixing weight of the type-1 audio stream is a target value, and the target value is less than the first preset value. It is assumed that a priority of the setting information of the user is higher than a priority of the default setting of the audio mixing weight, it may be determined that the audio mixing weight of the type-1 audio stream needs to be the target value.

It can be learned that, according to this embodiment of this application, the user is supported to dynamically configure the audio mixing weight of the audio stream based on the property of the audio stream (for example, at least one of the type of the audio stream, the type of the audio source device that generates the audio stream, and the type of the application that generates the audio stream). This helps improve listening experience of the user, and further meets user requirements in a plurality of application scenarios.

FIG. 3A is a flowchart of an audio mixing method according to an embodiment of this application. The method may be applied to an audio mixing system including a device 1 and at least one audio source device. The device 1 has an audio mixing processing capability, the device 1 belongs to an audio sink side, and the at least one audio source device belongs to an audio source side. For example, the device 1 may be the device 1 in FIG. 1A, the device 2 in FIG. 1B, the device 4 in FIG. 1C, or the device 7 in FIG. 1D. Alternatively, the device 1 may be an audio mixing module, a component, or a chip in any one of the device 1, the device 2, the device 4, and the device 7. The method includes but is not limited to the following steps.

S301: The device 1 receives at least one piece of indication information from the at least one audio source device, where the at least one piece of indication information corresponds to at least one audio stream generated by the at least one audio source device.

In this embodiment of this application, that the at least one piece of indication information corresponds to at least one audio stream generated by the at least one audio source device means that the at least one piece of indication information indicates at least one of the following information: a type of the at least one audio stream, a coding format of the at least one audio stream, a type of the at least one audio source device, a type of a user to which the at least one audio source device belongs, a type of an application that generates the at least one audio stream, and an audio mixing weight of the at least one audio stream.

In an implementation, the at least one piece of indication information includes first indication information and second indication information, the at least one audio stream includes an audio stream 1 and an audio stream 2, the first indication information corresponds to the audio stream 1, and the second indication information corresponds to the audio stream 2. In this case, the audio stream 1 and the audio stream 2 may meet at least one of the following relationships: types of the audio streams are the same; the audio streams come from a same audio source device; and the audio streams are generated by a same application. It can be learned that one audio stream may correspond to one piece of indication information. For example, an audio mixing weight may be indicated for a single audio stream.

In another implementation, the at least one piece of indication information includes first indication information, the at least one audio stream includes an audio stream 1 and an audio stream 2, and the first indication information corresponds to the audio stream 1 and the audio stream 2. In this case, the audio stream 1 and the audio stream 2 may meet at least one of the following relationships: types of the audio streams are the same; the audio streams come from a same audio source device; and the audio streams are generated by a same application. It can be learned that one piece of indication information may correspond to a plurality of audio streams. For example, when a same audio source device needs to continuously send a plurality of audio streams of a same type, the audio source device may send only one piece of indication information indicating the type of the audio streams in advance, and does not need to send a plurality of pieces of indication information corresponding to the plurality of to-be-sent audio streams. This helps reduce bandwidth consumption and helps improve audio stream transmission efficiency.

An example in which the device 1 obtains indication information from an audio source device 1 is used for description. The device 1 may receive at least one piece of indication information 1 from the audio source device 1, where the at least one piece of indication information 1 corresponds to at least one audio stream 1 generated by the audio source device 1. Herein, that the at least one piece of indication information 1 corresponds to at least one audio stream 1 generated by the audio source device 1 means that the at least one piece of indication information 1 indicates at least one of the following information: a type of the at least one audio stream 1, a coding format of the at least one audio stream 1, a type of the audio source device 1, a type of a user to which the audio source device 1 belongs, a type of an application that generates the at least one audio stream 1, and an audio mixing weight of the at least one audio stream 1. It may be understood that a correspondence between indication information 1 and an audio stream 1 may be a one-to-one correspondence or a one-to-many correspondence.

For example, if one piece of indication information 1 corresponds to one audio stream 1, two audio streams 1 may be audio streams of a same type and/or audio streams generated by a same application.

For example, if one piece of indication information 1 corresponds to a plurality of audio streams 1, when two audio streams 1 correspond to one piece of indication information 1, the two audio streams 1 may be audio streams of a same type and/or audio streams generated by a same application.

S302: The device 1 determines the audio mixing weight of the at least one audio stream based on the at least one piece of indication information.

In an implementation, when the at least one piece of indication information carries the audio mixing weight of the at least one audio stream, determining the audio mixing weight of the at least one audio stream based on the at least one piece of indication information includes: obtaining the audio mixing weight of the at least one audio stream from the at least one piece of indication information.

In another implementation, when the at least one piece of indication information does not carry the audio mixing weight of the at least one audio stream, determining the audio mixing weight of the at least one audio stream based on the at least one piece of indication information includes: determining the audio mixing weight of the at least one audio stream based on the at least one piece of indication information and audio mixing configuration information. In other words, the audio mixing weight of the audio stream may be obtained from the audio mixing configuration information. For specific content of the audio mixing configuration information, refer to the descriptions of the audio mixing configuration information in the foregoing embodiment. Details are not described herein again.

Herein, the audio mixing configuration information may be locally generated by the device 1, or may be obtained from another device.

For example, when the device 1 is the device 1 in FIG. 1A or the device 7 in FIG. 1D, the audio mixing configuration information may be locally generated, for example, generated according to the method shown in FIG. 2A.

For example, when the device 1 is the device 2 in FIG. 1B, the audio mixing configuration information may be obtained from the device 3 in FIG. 1B. When the device 1 is the device 4 in FIG. 1C, the audio mixing configuration information may be obtained from the device 5 in FIG. 1C.

For example, it is assumed that the device 1 receives indication information 1 from the audio source device 1, and the indication information 1 corresponds to an audio stream 1 generated by the audio source device 1. The following uses some examples to describe a process of determining an audio mixing weight of the audio stream 1 based on the indication information 1 and the audio mixing configuration information.

Example 1: If the audio mixing configuration information is a set of correspondences between types of audio streams and audio mixing weights of the audio streams, and the indication information 1 indicates that a type of the audio stream 1 is a type A, an audio mixing weight of an audio stream of the type A in the audio mixing configuration information is determined as the audio mixing weight of the audio stream 1.

Example 2: If the audio mixing configuration information is a set of correspondences between types of audio streams, types of audio source devices that generate the audio streams, and audio mixing weights of the audio streams, and the indication information 1 indicates that a type of the audio stream 1 is a type A and a type of an audio source device that generates the audio stream 1 is a type 1, an audio mixing weight of an audio stream corresponding to a combination of the type A and the type 1 in the audio mixing configuration information may be determined as the audio mixing weight of the audio stream 1.

S303: The device 1 obtains a plurality of audio streams, and determines a to-be-played target audio stream based on the plurality of audio streams and an audio mixing weight of the plurality of audio streams.

Herein, the plurality of audio streams come from a plurality of audio source devices, the plurality of audio source devices include the at least one audio source device, and the plurality of audio streams include the at least one audio stream.

For example, the plurality of audio streams obtained by the device 1 may all come from the at least one audio source device. That the device 1 obtains a plurality of audio streams means that the device 1 receives the plurality of audio streams from the at least one audio source device.

For example, some of the plurality of audio streams obtained by the device 1 come from the at least one audio source device, and the other audio streams may come from the device 1. To be specific, the device 1 may generate the audio stream. In this case, the device 1 has the audio mixing processing capability, and the device 1 is equivalent to an audio source device.

In this embodiment of this application, the plurality of audio streams include a first audio stream and a second audio stream. Determining the target audio stream based on the plurality of audio streams and the audio mixing weight of the plurality of audio streams includes: determining the to-be-played target audio stream based on an audio mixing weight of the first audio stream, an audio mixing weight of the second audio stream, the first audio stream, and the second audio stream.

Herein, that the first audio stream and the second audio stream come from different audio source devices includes the following plurality of cases:

Case 1: The first audio stream is locally generated by the device 1, and the second audio stream comes from the audio source device 1.
Case 2: The first audio stream comes from the audio source device 1, and the second audio stream comes from an audio source device 2.
Case 3: The first audio stream comes from the audio source device 1, and the second audio stream is locally generated by the device 1.

Further, the determining the to-be-played target audio stream based on an audio mixing weight of the first audio stream, an audio mixing weight of the second audio stream, the first audio stream, and the second audio stream includes: determining an audio mixing behavior based on the audio mixing weight of the first audio stream and the audio mixing weight of the second audio stream; and determining the target audio stream based on the first audio stream, the second audio stream, and the audio mixing behavior.

Herein, the target audio stream is a single audio stream (or referred to as a single-channel audio stream).

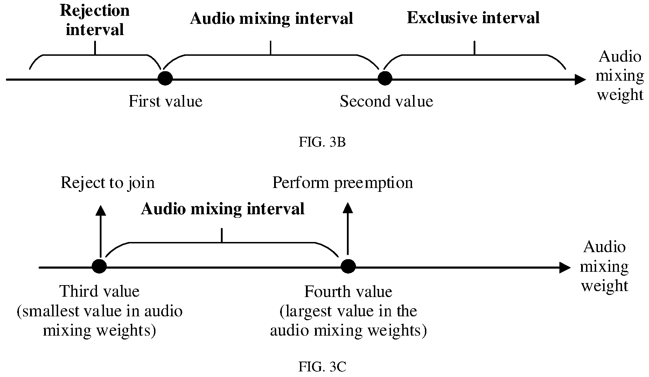

Herein, there are mainly three types of audio mixing behaviors provided in embodiments of this application: rejecting to join an audio stream obtained through audio mixing, performing preemption, and allowing to join the audio stream obtained through audio mixing. For example, the audio mixing behavior may correspond to a specific value or an interval of the audio mixing weight. For example, refer to the following related descriptions in FIG. 3B or FIG. 3C.

FIG. 3B is a diagram of an interval division of audio mixing weights of audio streams according to an embodiment of this application. In FIG. 3B, three intervals are defined: a rejection interval, an audio mixing interval, and an exclusive interval. When the audio mixing weight of the audio stream is less than or equal to a first value, the audio mixing weight indicates that the audio stream corresponding to the audio mixing weight is rejected to be used as a source of an audio stream obtained through audio mixing, and also indicates that the audio stream is in the rejection interval, that is, the audio stream is rejected to join the audio stream obtained through audio mixing. When the audio mixing weight of the audio stream $\in$ (first value, second value), the audio mixing weight indicates that the audio stream corresponding to the audio mixing weight is allowed to be used as a non-unique source of the audio stream obtained through audio mixing, and also indicates that the audio stream is in the audio mixing interval, that is, the audio stream may be allowed to join the audio stream obtained through audio mixing. When the audio mixing weight of the audio stream is greater than or equal to the second value, it indicates that the audio stream corresponding to the audio mixing weight is allowed to be used as a unique source of the audio stream obtained through audio mixing, and also indicates that the audio stream is in the exclusive interval, that is, the audio stream may perform preemption. However, whether the preemption succeeds depends on whether the audio mixing weight of the audio stream is a largest value in audio mixing weights of current audio streams in the exclusive interval. Herein, the first value and the second value may be preset based on experience, and the second value is greater than the first value.

FIG. 3C is a diagram of another interval division of audio mixing weights of audio streams according to an embodiment of this application. In FIG. 3C, an interval, that is, an audio mixing interval, is defined. When the audio mixing weight of the audio stream is a third value, it indicates that the audio stream corresponding to the audio mixing weight is rejected to be used as a source of an audio stream obtained through audio mixing, and it indicates that the audio stream is rejected to join the audio stream obtained through audio mixing. When the audio mixing weight of the audio stream E (third value, fourth value) , it indicates that the audio stream corresponding to the audio mixing weight is allowed to be used as a non-unique source of the audio stream obtained through audio mixing, and also indicates that the audio stream is in the audio mixing interval, that is, the audio stream may be allowed to join the audio stream obtained through audio mixing. When the audio mixing weight of the audio stream is the fourth value, it indicates that the audio stream corresponding to the audio mixing weight is allowed to be used as a unique source of the audio stream obtained through audio mixing, and also indicates that the audio stream may perform preemption. Herein, the third value and the fourth value may be preset based on experience. The third value is a smallest value in the audio mixing weights, and the fourth value is a largest value in the audio mixing weights.

The following specifically describes determining of the audio mixing behavior and the target audio stream based on division of the audio mixing weights shown in FIG. 3B as an example.

In an implementation, when a first preset condition is met, it is determined that the target audio stream is the first audio stream. The first preset condition is any one of the following conditions: the audio mixing weight of the second audio stream is less than or equal to the first value, and the audio mixing weight of the first audio stream is greater than the first value; or the audio mixing weight of the first audio stream is greater than or equal to the second value, and the audio mixing weight of the first audio stream is greater than or equal to the audio mixing weight of the second audio stream. In this case, it indicates that the second audio stream is rejected to join the audio stream obtained through audio mixing.

For example, it is assumed that the first audio stream is an audio stream that is still being played, and the second audio stream is an audio stream newly received by the device 1. If the first audio stream is already in the exclusive interval (that is, the audio mixing weight of the first audio stream is greater than or equal to the second value), and the second audio stream is also in the exclusive interval (for example, the audio mixing weight of the second audio stream is the second value), because the audio mixing weight of the second audio stream is less than or equal to the audio mixing weight of the first audio stream, the second audio stream fails to perform preemption. In other words, although an audio stream in the exclusive interval shown in FIG. 3B has a preemption capability, the audio stream may not successfully perform preemption.

In an implementation, when a second preset condition is met, it is determined that the target audio stream is the second audio stream. The second preset condition is any one of the following conditions: the audio mixing weight of the first audio stream is less than or equal to the first value, and the audio mixing weight of the second audio stream is greater than the first value; or the audio mixing weight of the second audio stream is greater than or equal to the second value, and the audio mixing weight of the second audio stream is greater than the audio mixing weight of the first audio stream. In this case, it indicates that the first audio stream is rejected to join the audio stream obtained through audio mixing.

For example, it is assumed that the first audio stream is an audio stream that is still being played, and the second audio stream is an audio stream newly received by the device 1. If the first audio stream is already in the exclusive interval (for example, the audio mixing weight of the first audio stream is the second value), and the second audio stream is also in the exclusive interval (for example, the audio mixing weight of the second audio stream is greater than the second value), because the audio mixing weight of the second audio stream is greater than the audio mixing weight of the first audio stream, the second audio stream successfully performs preemption. Therefore, the first audio stream is rejected to join the audio stream obtained through audio mixing, so that the second audio stream is a unique played audio stream.

In an implementation, when the audio mixing weight of the second audio stream is greater than the first value and less than the second value, and the audio mixing weight of the first audio stream is greater than the first value and less than the second value, audio mixing is performed on the first audio stream and the second audio stream to generate a third audio stream; and it is determined that the target audio stream is the third audio stream. In this case, it indicates that both the first audio stream and the second audio stream are in the audio mixing interval, and are allowed to join the audio stream obtained through audio mixing.

For example, when the first audio stream is a single audio stream generated by the device 1 by performing audio mixing based on N audio streams, the audio mixing weight of the first audio stream is a largest value in audio mixing weights of the N audio streams.

For example, an audio mixing processing process may be as follows: A quantity of audio streams joining audio mixing and an attenuation factor of the audio stream joining the audio stream obtained through audio mixing are first determined, loudness of each audio stream is attenuated based on a corresponding attenuation factor, and then superimposition processing is performed on attenuated audio streams to generate a target audio stream. Processing such as attenuation and superimposition of the audio streams is performed at a unified sampling rate. In addition, a unified audio mixing cycle is further used when audio mixing is performed on the audio streams. The audio mixing cycle may be duration at a granularity of a sampling rate, or may be preset duration. This is not specifically limited herein. Calculation of the attenuation factor of the audio stream is related to an audio mixing weight of the audio stream joining the audio stream obtained through audio mixing.

Herein, because audio mixing is performed on the first audio stream and the second audio stream, when the first audio stream is not an audio mixing processing, the quantity of audio streams joining the audio stream obtained through audio mixing is 2; or when the first audio stream is a single audio stream generated by the device 1 by performing audio mixing based on the N audio streams, the quantity of audio streams joining the audio stream obtained through audio mixing is N+1.

For example, when the quantity of audio streams joining the audio stream obtained through audio mixing is N+1, performing audio mixing based on the first audio stream and the second audio stream means performing audio mixing based on the N audio streams and the second audio stream.

Calculation of the attenuation factor of the audio stream is related to the audio mixing weight of the audio stream joining the audio stream obtained through audio mixing. Calculation of the attenuation factor may be, for example, performing normalization processing based on the audio mixing weight of the audio stream joining the audio stream obtained through audio mixing.

For example, when the first audio stream is not an audio mixing processing, it is assumed that a type of the first audio stream is a type A, the audio mixing weight of the first audio stream is 0.8, a type of the second audio stream is a type B, and the audio mixing weight of the second audio stream is 0.2. In this case, an attenuation factor of the first audio stream is $\frac{0.8}{0.2+0.8} = 0.8$, and an attenuation factor of the second audio stream is $\frac{0.2}{0.2+0.8} = 0.2$.

In some possible embodiments, there may be a plurality of audio streams of a same type and/or from a same audio source device and/or generated by a same application in the audio streams joining the audio stream obtained through audio mixing. In this case, the attenuation factor of the audio stream may be calculated in the foregoing normalization manner or in an equalization manner.

For example, it is assumed that the first audio stream is obtained by performing audio mixing processing on two audio streams, in other words, the quantity of audio streams joining the audio mixing processing is 3, including the second audio stream and the two assumed audio streams, that is, an audio stream 1' and an audio stream 2', corresponding to the first audio stream. A type of the audio stream 1' is A, an audio mixing weight of the audio stream 1' is 0.8, a type of the audio stream 2' is B, an audio mixing weight of the audio stream 2' is 0.2, the type of the second audio stream is A, and the audio mixing weight of the second audio stream is 0.8. It can be learned that the audio stream 1' and the second audio stream are audio streams of a same type. Obtaining an attenuation factor in the equalization manner may be as follows: Normalization is first performed based on a type of an audio stream joining the audio stream obtained through audio mixing: It is determined that an attenuation factor corresponding to the type A is $\frac{0.8}{0.2+0.8} = 0.8$ and an attenuation factor corresponding to the type B is $\frac{0.2}{0.2+0.8} = 0.2$. Further, because both the type of the audio stream 1' and the type of the second audio stream are the type A, attenuation factors corresponding to the type are evenly allocated to the audio streams of the same type. Therefore, an attenuation factor of the audio stream 1' is equal to the attenuation factor of the second audio stream and is 0.4, and an attenuation factor of the audio stream 2' is 0.2.

In some possible embodiments, when the attenuated audio streams are superimposed, if it is detected that a sampling depth at a sampling point in the superimposed audio stream exceeds a preset sampling depth range, a value of the sampling depth at the sampling point is set to a largest value of the preset sampling depth range. In this way, the third audio stream is generated. The sampling depth at the sampling point is precision obtained by quantizing a discrete signal at the sampling point. When the device 1 is the device 2 in FIG. 1B, the device 1 may further send overflow indication information to the device 3 in FIG. 1B, to feed back that overflow occurs during audio mixing processing.

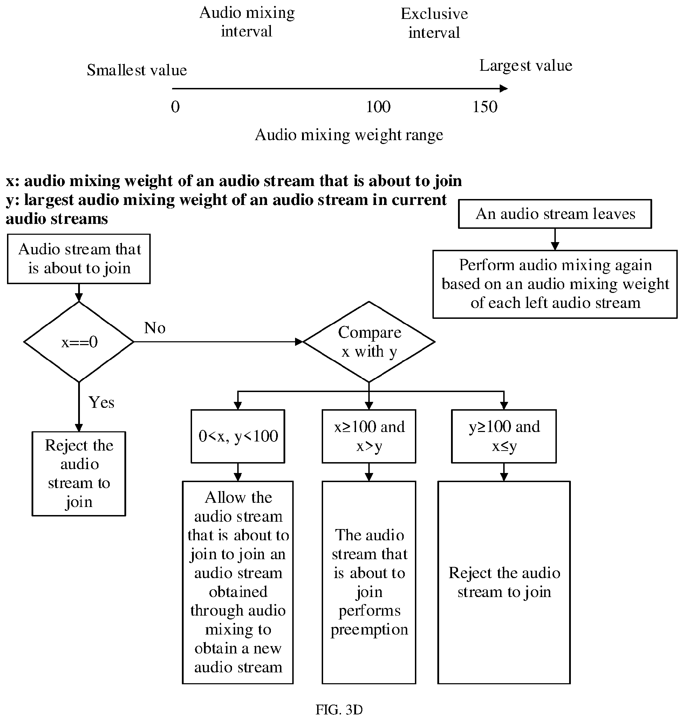

For example, refer to a diagram of an audio mixing behavior shown in FIG. 3D. Based on the diagram of division of the audio mixing weights shown in FIG. 3B, it can be seen that in FIG. 3D, a value of the first value is 0, a value of the second value is 100, and the second value is a boundary point between the audio mixing interval and the exclusive interval. In addition, in FIG. 3D, x represents an audio mixing weight of an audio stream that is about to join, and y represents a largest audio mixing weight of an audio stream in current audio streams. In this case, an audio mixing behavior is specifically as follows:

1. Whether x is equal to 0 is first determined. When x is equal to 0, the audio stream is rejected to join; or when x is not equal to 0, values of x and y need to be further compared.
2. The values of x and y are compared in the following three cases:

(1) When both x and y fall within a range of an interval (0, 100), the audio stream that is about to join is allowed to join the audio stream obtained through audio mixing to obtain a new audio stream.
(2) When x≥100 and x>y, the audio stream that is about to join performs preemption.
(3) When y≥100 and x≤y, the audio stream is rejected to join.

In some possible embodiments, when an audio stream leaves (for example, playing ends), audio mixing may be performed again based on an audio mixing weight of each currently left audio stream.

The following briefly describes determining of the audio mixing behavior and the target audio stream based on division of the audio mixing weights shown in FIG. 3C.

In FIG. 3C, it is assumed that the first audio stream is an audio stream that is still being played currently, and the second audio stream is an audio stream newly received by the device 1. For example, the first audio stream may be played by the device 1 (when the device 1 has the audio sink capability), or may be played by another device.

In an implementation, when the audio mixing weight of the second audio stream is the third value, or the weight of the first audio stream is the fourth value, it is determined that the audio mixing behavior is rejecting the second audio stream to join. In this case, the target audio stream is the first audio stream.

It may be understood that, when the audio mixing weight of the first audio stream that is being played is the fourth value (that is, the largest value in the audio mixing weights), before playing of the first audio stream ends, if an audio mixing weight of another received audio stream is less than the fourth value, the another received audio stream is not allowed to be mixed into the first audio stream.

In an implementation, when the audio mixing weight of the second audio stream is the fourth value, it is determined that the audio mixing behavior is that the second audio stream performs preemption. In this case, the target audio stream is the second audio stream.

In an implementation, when the audio mixing weight of the first audio stream is greater than the third value and less than the fourth value, and the audio mixing weight of the second audio stream is greater than the third value and less than the fourth value, it is determined that the audio mixing behavior is allowing the second audio stream to join the audio stream obtained through audio mixing. In this case, the determining the target audio stream based on the first audio stream, the second audio stream, and the audio mixing behavior includes: performing audio mixing on the first audio stream and the second audio stream to generate a third audio stream; and determining that the target audio stream is the third audio stream. For a specific process of generating the third audio stream, refer to the related descriptions of the third audio stream in FIG. 3B. Details are not described herein again.

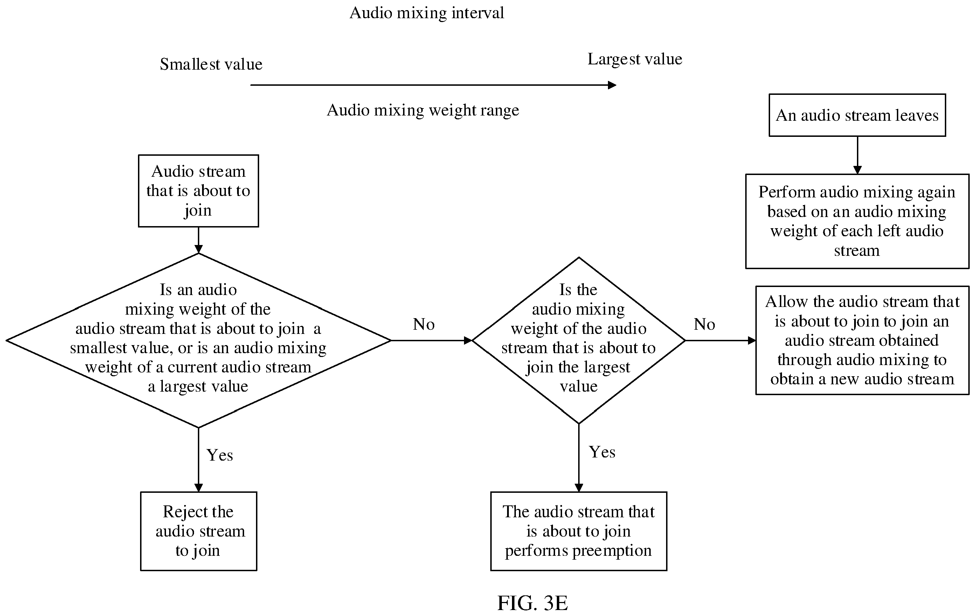

For example, refer to a diagram of an audio mixing behavior shown in FIG. 3E. Based on the diagram of division of the audio mixing weights shown in FIG. 3C, it can be seen that in FIG. 3E, a lower limit value of the audio mixing interval is a smallest value in the audio mixing weights, and an upper limit value of the audio mixing interval is the smallest value in the audio mixing weights. In this case, the audio mixing behavior is specifically:

When an audio mixing weight of an audio stream that is about to join is the smallest value, or an audio mixing weight of a current audio stream is the largest value, the audio stream that is about to join is rejected to join; or when the audio mixing weight of the audio stream that is about to join is not the smallest value, and the audio mixing weight of the current audio stream is not the largest value, whether the audio mixing weight of the audio stream that is about to join is the largest value is further determined; and

further, if the audio mixing weight of the audio stream that is about to join is the largest value, the audio stream that is about to join performs preemption; or if the audio mixing weight of the audio stream that is about to join is not the largest value, the audio stream that is about to join is allowed to join the audio stream obtained through audio mixing to obtain a new audio stream.

In some possible embodiments, when an audio stream leaves (for example, playing ends), audio mixing may be performed again based on an audio mixing weight of each currently left audio stream.

S304: The device 1 plays the target audio stream.

When the device 1 has the audio sink capability, for example, when the device 1 is the device 1 in FIG. 1A or the device 2 in FIG. 1B, the device 1 may directly play the target audio stream.

Optionally, in some possible embodiments, when the device 1 does not have the audio sink capability, S304 may not be performed, but the following S305 and S306 are performed.

S305: The device 1 sends the target audio stream to a device 2.

Correspondingly, the device 2 receives the target audio stream from the device 1.

When the device 1 has the audio sink capability, the device 1 may send the target audio stream to the device 2.

For example, when the device 1 is the device 4 in FIG. 1C, the device 2 may be the device 5 in FIG. 1C.

For another example, when the device 1 is the device 7 in FIG. 1D, the device 2 may be the device 8 in FIG. 1D.

S306: The device 2 plays the target audio stream.

It can be learned that, according to this embodiment of this application, a device that has an audio mixing capability may receive the at least one audio stream sent by the at least one audio source device, and audio mixing processing may be implemented on the at least one audio stream in different scenarios based on the audio mixing weight of the audio stream. This helps improve listening experience of the user, and meets diversified requirements of the user.

The following describes application examples of the foregoing audio mixing method in some scenarios.

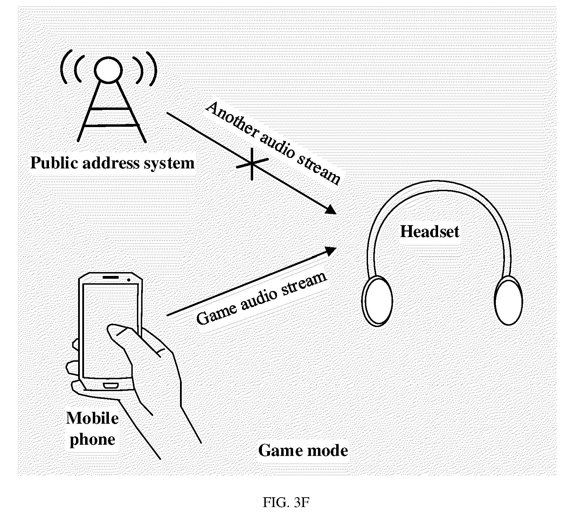

For example, refer to an application scenario shown in FIG. 3F. A mobile phone is a device that performs audio mixing processing, a headset is connected to the mobile phone of a user, and the headset is a device that plays an audio stream. The user intends to play a game on the mobile phone and expects not to be disturbed by an audio source other than a game sound in a process of playing the game. Therefore, the user selects a game mode on the mobile phone to enter the game. In response to the operation, the mobile phone uses an audio mixing weight corresponding to the preset usage scenario, that is, the game mode. To be specific, the mobile phone sets an audio mixing weight of an audio stream of a game type to be the largest, or the user may set the audio mixing weight of the audio stream of the game type to be the largest in the audio mixing weight setting interface shown in FIG. 2B. In this case, audio streams received by the mobile phone and sent by other audio source devices, for example, music played by a public address system and a video play sound of another user terminal, are not mixed into the currently played audio stream of the game type for audio mixing processing. In this way, do not disturb of the game is implemented. When the user ends the game and exits the game mode, the audio mixing weight of the audio stream of the game type may be restored to the audio mixing weight before adjustment.

For another example, refer to an application scenario shown in FIG. 3G. A headset is a device that performs audio mixing processing and plays an audio stream, and a public address system and a mobile phone are devices that generate audio streams. The mobile phone of a user is connected to the headset to play music, and the headset may simultaneously receive an audio stream sent by the public address system. It is assumed that the user needs to pay attention to content carried in the audio stream of the public address system, and the headset currently plays a music stream 1 of a music type. When the headset receives an audio stream 2 sent by the public address system, the headset performs audio mixing processing on the audio stream 1 and the audio stream 2 to obtain an audio stream obtained through audio mixing, and plays the audio stream obtained through audio mixing. A loudness output proportion of the audio stream 2 in the audio stream obtained through audio mixing is higher than a loudness output proportion of the audio stream 1. The audio stream 2 is more prominent in the audio stream obtained through audio mixing as much as possible, and the audio stream 1 can be weakened, so that the user can clearly hear the audio stream 2. After playing of the audio stream 2 ends, the audio stream 1 may be restored to a loudness output proportion before the audio mixing.

In some possible embodiments, an audio mixing weight configuration capability and an audio sink capability are not integrated and deployed on a same device. For example, in FIG. 1B, the configuration module is deployed on the device 3, and the audio sink module is deployed on the device 2. For another example, in FIG. 1C, the configuration module is deployed on the device 6, and the audio sink module is deployed on the device 5. For another example, in FIG. 1D, the configuration module is deployed on the device 7, and the audio sink module is deployed on the device 8. In this case, in the audio mixing system shown in FIG. 1B, FIG. 1C, or FIG. 1D, before the setting 2 in FIG. 1B, the device 4 in FIG. 1C, or the device 7 in FIG. 1D performs the audio mixing method shown in the embodiment in FIG. 3A, a device that has an audio mixing weight configuration capability and a device that has an audio sink capability may first complete setting of the audio mixing configuration information. For a specific process, refer to the following method shown in FIG. 4. It should be noted that FIG. 4 is merely an example of a method for generating the audio mixing configuration information.

FIG. 4 is a flowchart of a method for configuring an audio mixing weight according to an embodiment of this application. The method may be applied to an audio mixing system including a device 3 and a device 4. The device 3 has an audio mixing weight configuration capability, and the device 4 has an audio sink capability.

For example, the device 3 and the device 4 may meet any one of the following cases:

The device 3 is the device 3 in FIG. 1B, and the device 4 is the device 2 in FIG. 1B.
The device 3 is the device 6 in FIG. 1C, and the device 4 is the device 5 in FIG. 1C.
The device 3 is the device 7 in FIG. 1D, and the device 4 is the device 8 in FIG. 1D.
The method includes but is not limited to the following steps.

S401: The device 3 obtains, from the device 4, a plurality of types of audio streams supported by the device 4.

In an implementation, the device 3 sends a request message 1 to the device 4, where the request message 1 is used to request to obtain the plurality of types of the audio streams supported by the device 4. In response to the request message 1, the device 4 sends a response message 1 to the device 3. The response message 1 indicates the plurality of types of the audio streams supported by the device 4.

It may be understood that, because different devices have different audio sink capabilities, types of audio streams that can be played may also be different. Before configuring an audio mixing weight, the device 3 pre-obtains, from the device 4, the types of the audio streams supported by the device 4, and subsequently may configure an audio mixing weight of an audio stream of a corresponding type more pertinently and more accurately.

S402: The device 3 generates audio mixing configuration information 1 based on the plurality of types of the audio streams supported by the device 4.

In an implementation, the audio mixing configuration information 1 includes an audio mixing weight of each of the plurality of types of audio streams, and the audio mixing weight corresponding to each type of audio stream indicates a loudness output proportion of the audio stream when audio mixing is performed on the audio stream of the corresponding type. In this case, for representation of the audio mixing configuration information 1, refer to the related descriptions in the foregoing Table 1. Details are not described herein again.

In some possible embodiments, the audio mixing configuration information 1 may be generated based on at least one of the following factors in addition to the plurality of types of the audio streams supported by the device 4: a type of an audio source device that generates an audio stream, a type of a user to which the audio source device belongs, a type of an application that generates the audio stream, and a coding format and a usage scenario of the audio stream. Herein, the type of the audio device, the type of the user to which the audio source device belongs, the type of the application that generates the audio stream, and the coding format and the usage scenario of the audio stream may be locally preset on the device 2 by configuration personnel based on experience. For related descriptions, refer to the descriptions of the corresponding content in the foregoing embodiment. In this case, the audio mixing configuration information 1 may be, for example, in a form shown in the foregoing Table 2, or may be in another form. This is not specifically limited herein.

In some possible embodiments, a display interface is configured for the device 3, and the audio mixing configuration information 1 may alternatively be generated by the device 3 based on the plurality of types of the audio streams supported by the device 4 and according to the method shown in FIG. 2A.

It may be understood that the audio mixing configuration information 1 corresponds to the device 4 means that when receiving a plurality of audio streams from a plurality of audio source devices, the device 4 may perform corresponding audio mixing processing based on the audio mixing configuration information 1.

In some possible embodiments, the audio mixing configuration information 1 further includes configuration quantity information, and the configuration quantity information indicates a quantity of the plurality of types to be configured.

In some possible embodiments, the device 3 may further send an audio mixing cycle to the device 4, where the audio mixing cycle indicates a quantity of sampling points required when audio mixing is performed on each of the plurality of audio streams. In addition, a unified sampling rate and a unified audio mixing cycle are used when audio mixing is performed on the plurality of audio streams, and the audio mixing cycle may be, for example, provided by the device 3. For example, the audio mixing cycle may be duration at a granularity of a sampling rate, or may be preset duration. This is not specifically limited herein.

In some possible embodiments, when the device 3 does not have an audio mixing processing capability, for example, the device 3 is the device 3 in FIG. 1B or the device 6 in FIG. 1C, the method further includes the following steps.

S403: The device 3 sends the audio mixing configuration information 1 to the device 4.

Correspondingly, the device 4 receives the audio mixing configuration information 1 from the device 3.

S404: The device 4 stores the audio mixing configuration information 1, and performs configuration based on the audio mixing configuration information 1.

For example, the device 4 performs synchronous update locally based on the audio mixing weight of the audio stream in the audio mixing configuration information 1.

In some possible embodiments, after completing the local configuration, the device 4 may further send, to the device 3, an audio mixing configuration response message indicating that the local configuration succeeds.

It can be learned that, when a configuration module and an audio sink module are not deployed on a same device, audio mixing configuration information required by a device in which the audio sink module is located may be generated in advance by a device in which the configuration module is located, and the generated audio mixing configuration information is sent to the device in which the audio sink module is located. This greatly facilitates subsequent audio mixing processing of the device in which the audio sink module is located, and meets audio mixing requirements in different application scenarios.

In some possible embodiments, when the device 4 further has an audio mixing processing capability, the device 4 may locally perform audio mixing processing based on the obtained audio mixing configuration information 1. For a specific process, refer to the following A11 to A15.

A11: Receive indication information, where the indication information indicates a type of a second audio stream, and the second audio stream and a currently played first audio stream come from different audio source devices.

Herein, the first audio stream is an audio stream currently played by the device 4.

For example, the second audio stream comes from an audio source device 1, and the first audio stream comes from an audio source device 2.

For example, the second audio stream comes from the audio source device 1, and the first audio stream is obtained by performing audio mixing by the device 4 based on the plurality of audio streams. The plurality of audio source streams come from the plurality of audio source devices. In this case, that the second audio stream and the first audio stream come from different audio source devices means that at least one of the plurality of audio source devices is different from the audio source device 1.

A12: Receive the second audio stream.

A13: Determine an audio mixing weight of the second audio stream based on the indication information and audio mixing configuration information.

Specifically, the indication information indicates the type of the second audio stream. An audio mixing weight corresponding to the type of the second audio stream is obtained based on the audio mixing configuration information, and is used as the audio mixing weight of the second audio stream.

For example, the audio mixing configuration information is represented as the correspondence table shown in the foregoing Table 1. Table 1 shows the correspondence between the type of the audio stream and the audio mixing weight. It is assumed that the indication information indicates that the type of the second audio stream is a type B, and it is obtained, according to Table 1, that an audio mixing weight of an audio stream of the type B is X2, that is, the audio mixing weight of the second audio stream is X2.

In an implementation, when the audio mixing configuration information is further generated based on at least one of the following factors: the type of the audio source device that generates the audio stream, the coding format of the audio stream, the type of the user to which the audio source device that generates the audio stream belongs, the type of the application that generates the audio stream, and the usage scenario of the audio stream. The indication information further indicates at least one of the following information: a type of a device that generates the second audio stream, a coding format of the second audio stream, a type of a user to which the device that generates the second audio stream belongs, a type of an application that generates the second audio stream, and a usage scenario of the second audio stream.

For example, the audio mixing configuration information is represented as the correspondence table shown in the foregoing Table 2. Table 2 shows the correspondence among the type of the audio stream, the type of the audio source device, and the audio mixing weight. It is assumed that the indication information indicates that the type of the second audio stream is a type A and the type of the audio source device that generates the second audio stream is a type 1, it is obtained, according to Table 2, that an audio mixing weight corresponding to a combination of the type A and the type 1 is X1, that is, the audio mixing weight of the second audio stream is X1.

A14: Determine a to-be-played target audio stream based on an audio mixing weight of the first audio stream, the audio mixing weight of the second audio stream, the first audio stream, and the second audio stream.

In an implementation, when a preset condition is met, the second audio stream is rejected to join the audio stream obtained through audio mixing, and it is determined that the target audio stream is the first audio stream. The preset condition is any one of the following conditions: the audio mixing weight of the second audio stream is less than or equal to a first value, and the audio mixing weight of the first audio stream is greater than the first value; or the audio mixing weight of the first audio stream is greater than or equal to a second value, and the audio mixing weight of the first audio stream is greater than or equal to the audio mixing weight of the second audio stream, where the second value is greater than the first value.

In an implementation, when the audio mixing weight of the second audio stream is greater than or equal to a second value, and the audio mixing weight of the second audio stream is greater than the audio mixing weight of the first audio stream, the second audio stream is allowed to perform preemption, and it is determined that the target audio stream is the second audio stream, where the second value is greater than a first value.

In an implementation, when the audio mixing weight of the second audio stream is greater than a first value and less than a second value, and the audio mixing weight of the first audio stream is greater than the first value and less than the second value, the second audio stream is allowed to join the audio stream obtained through audio mixing, audio mixing is performed on the first audio stream and the second audio stream to generate a third audio stream, where the second value is greater than the first value, and it is determined that the target audio stream is the third audio stream. It should be noted that, for a specific process of generating the third audio stream, refer to the related descriptions of S303 in the embodiment in FIG. 3A. Details are not described herein again.

The first value and the second value may be preset. For details, refer to the related descriptions in the embodiment in FIG. 3B.

In some possible embodiments, the target audio stream may alternatively be determined based on the related descriptions in the embodiment in FIG. 3C. Details are not described herein again.

A15: Play the target audio stream.

It can be learned that, according to this embodiment of this application, when the device in which the audio sink module is located has an audio mixing processing capability, audio mixing processing may be implemented on the plurality of audio streams from the plurality of audio source devices based on the obtained audio mixing configuration information and an audio stream obtained through audio mixing may be played. In this way, the user can have good user listening experience, and audio mixing and playing requirements of a plurality of audio sources in different scenarios are met.

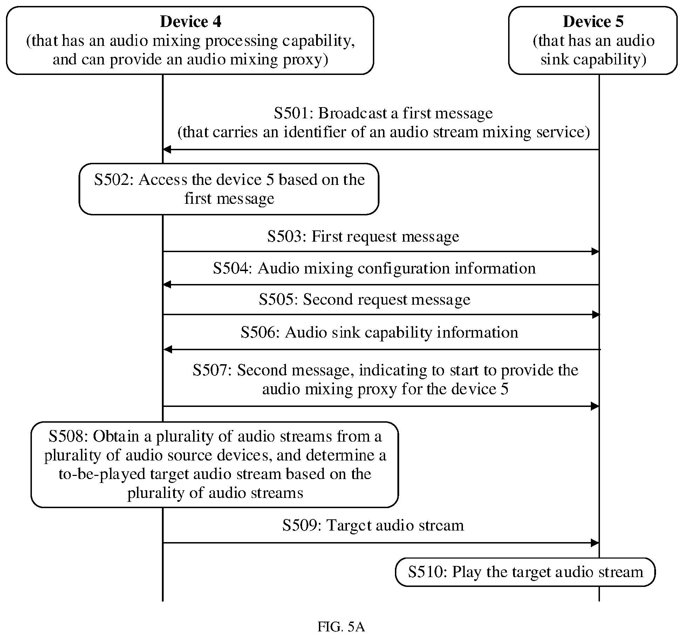

In some possible embodiments, for the audio mixing system shown in FIG. 1C, the configuration module, the audio sink module, and the audio mixing module are respectively deployed on different devices. Specifically, the audio mixing module is deployed on the device 4, the audio sink module is deployed on the device 5, and the configuration module is deployed on the device 6. In FIG. 1C, the device 5 has the audio sink capability but does not have an audio mixing processing capability, and the device 4 has the audio mixing processing capability. In this case, the device 4 can provide an audio mixing proxy service for the device 5 according to the following method shown in FIG. 5A.

FIG. 5A is a flowchart of an audio mixing method based on an audio mixing proxy according to an embodiment of this application. The method may be applied to the audio mixing system shown in FIG. 1C. The audio mixing system includes the device 4 and the device 5. The device 5 has an audio sink capability, and the device 4 has an audio mixing processing capability and can provide an audio mixing proxy.

For example, the device 4 is a user mobile phone (configured for audio mixing processing), the device 5 is a headset (configured to play an audio stream), and the device 6 is a cloud server (configured to set audio mixing configuration information).

For example, the device 4 is a home router (configured for audio mixing processing), the device 5 is a headset (configured to play an audio stream), and the device 6 is a user mobile phone (configured to set audio mixing configuration information).

The method includes but is not limited to the following steps.

S501: The device 5 broadcasts a first message, where the first message includes an identifier of an audio stream mixing service.

The first message is used by the device 5 to search for a device that provides an audio mixing proxy for the device 5.

Herein, the first message is broadcast public information data, and the public information data includes a first field and a second field. The first field indicates that the identifier of the audio stream mixing service is carried in standard service data information, and the second field indicates the identifier of the audio stream mixing service.

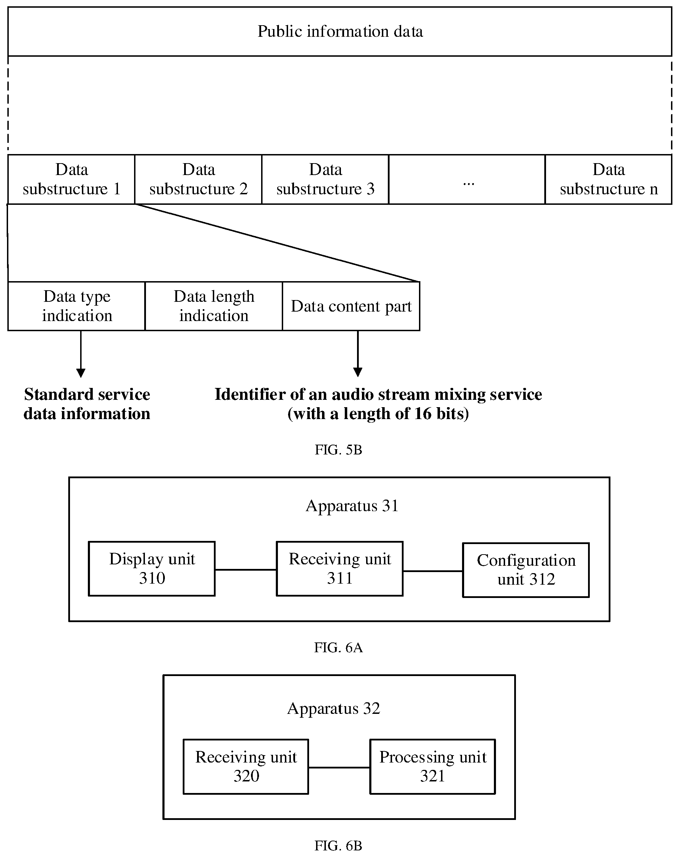

For example, FIG. 5B is a diagram in which the first message carries the identifier of the audio stream mixing service according to an embodiment of this application. In FIG. 5B, the public information data of the first message includes at least one data substructure, and each data substructure includes three parts: a data type indication, a data length indication, and a data content part. A data substructure (for example, a data substructure 1) may be used to carry the identifier of the audio stream mixing service. Specifically, in the data substructure 1, a data type identifier indicates that the identifier of the audio stream mixing service is carried in the standard service data information, and a data content part is used to carry the identifier of the audio stream mixing service.

A length of the identifier of the audio stream mixing service is 16 bits.

S502: The device 4 accesses the device 5 based on the first message.

In this embodiment of this application, after obtaining, through scanning, the first message broadcast by the device 5, the device 4 establishes a connection to the device 5.

S503: The device 4 sends a first request message to the device 5.

The first request message is used to request to obtain audio mixing configuration information of the device 5, the audio mixing configuration information includes an audio mixing weight of a plurality of audio streams from a plurality of audio source devices, and the audio mixing configuration information is used to perform audio mixing processing on the plurality of audio streams. Herein, for specific content of the audio mixing configuration information, refer to the descriptions of the audio mixing configuration information 1 in FIG. 4.

Correspondingly, the device 5 receives the first request message from the device 4.

S504: The device 5 sends the audio mixing configuration information to the device 4.

In this embodiment of this application, the device 5 sends the audio mixing configuration information to the device 4 in response to the first request message. The audio mixing configuration information of the device 5 may be pre-obtained by the device 5 by using S401 to S404 in FIG. 4. In this case, the device 5 is equivalent to the device 4 in FIG. 4, and the audio mixing configuration information of the device 5 may alternatively be set by default by the device 5 before delivery. This is not specifically limited herein.

Correspondingly, the device 4 receives the audio mixing configuration information from the device 5, where the audio mixing configuration information is used by the device 4 to perform audio mixing processing on the plurality of audio streams from the plurality of audio source devices.

Further, when determining, based on the obtained audio mixing configuration information, for example, based on the audio mixing configuration information, that the device 4 supports a plurality of types of audio streams in the audio mixing configuration information, the device 4 determines to start to provide the audio mixing proxy for the device 5.

S505: The device 4 sends a second request message to the device 5.

The second request message is used to request to obtain audio sink capability information of the device 5, and the audio sink capability information indicates the audio sink capability of the device 5.

Correspondingly, the device 5 receives the second request message from the device 4.

Herein, the audio sink capability information of the device 5 includes at least one of a type and a capability (for example, a sampling rate, a sampling depth, a quantity of audio channels, and a coding format) of a codec supported by the device 5, a supported transmission mode (for example, at least one of unicast, multicast, and broadcast), a type and quality of service (quality of service, QoS) of an audio stream, and the like.

S506: The device 5 sends the audio sink capability information to the device 4.

In this embodiment of this application, the device 5 sends the audio sink capability information to the device 4 in response to the second request message.

Correspondingly, the audio sink capability information is received from the device 5.

Further, the device 4 determines, based on the obtained audio mixing configuration information and audio sink capability information, to start to provide the audio mixing proxy for the device 5.

It may be understood that, after obtaining the audio mixing configuration information and the audio sink capability information from the device 5, the device 4 determines that a capability of the device 4 matches the audio mixing configuration information and the audio sink capability information of the device 5. For example, if types of audio streams supported by the device 4 and the device 5 are the same, types and capabilities of codecs supported by the device 4 and the device 5 are the same, and transmission modes of the device 4 and the device 5 match, the device 4 determines to provide an audio mixing proxy service for the device 5.

S507: The device 4 sends a second message to the device 5, where the second message includes a first audio mixing proxy identifier, and the first audio mixing proxy identifier indicates that the device 4 starts to provide the audio mixing proxy for the device 5.

Correspondingly, the device 5 receives the second message sent by the device 4, and learns, by using the second message, that the device 5 has found the device that provides the audio mixing proxy, that is, the device 4. In this case, the device 5 stops automatically scanning and/or connecting to an audio source device, to be specific, the device 5 no longer directly receives the audio streams from the plurality of audio source devices, and can only receive an audio stream sent by the device 4.

Herein, when determining to start to provide the audio mixing proxy for the device 5, the device 4 sends the second message to the device 5. Then, the device 4 receives, in place of the device 5, the plurality of audio streams from the plurality of audio source devices. When audio mixing needs to be performed on the plurality of audio streams, the device 4 performs audio mixing processing.

S508: The device 4 obtains the plurality of audio streams from the plurality of audio source devices, and determines a to-be-played target audio stream based on the plurality of audio streams. For a process in which the device 4 determines the target audio stream, refer to the audio mixing method shown in the embodiment in FIG. 3A. The device 4 is equivalent to the device 1 in the embodiment in FIG. 3A. Details are not described herein again.

S509: The device 4 sends the target audio stream to the device 5. Correspondingly, the device 5 receives the target audio stream from the device 4.

S510: The device 5 plays the target audio stream.

In some possible embodiments, when the device 4 needs to end the audio mixing proxy, the device 4 may further send a third message to the device 5, where the third message includes a second audio mixing proxy identifier, and the second audio mixing proxy identifier indicates that the device 4 ends providing the audio mixing proxy for the device 5. Correspondingly, the device 5 receives the third message from the device 4, and learns, by using the third message, that the device 4 stops providing the audio mixing proxy for the device 5. In this case, the device 5 resumes scanning and/or connecting to the audio source device.

It can be learned that, according to this embodiment of this application, an audio mixing proxy is provided for a device with a limited capability (for example, the device supports only a single-channel audio stream or an audio stream in a specific transmission mode), to help the device implement audio mixing processing on a plurality of audio streams from a plurality of audio source devices. This indirectly extends a capability of the device to receive a plurality of audio sources from a plurality of devices.

For example, the audio stream mixing service may be defined in the following Table 3 based on a service management structure standard. In Table 3, service structure members include an audio mixing policy, an audio mixing policy control point, an audio mixing cycle, an audio mixing proxy, and an overflow reminder. For each service structure member, a category, an operation indication, permission, and an option of the member are defined. The member, that is, the audio mixing proxy, is used as an example. A type of the audio mixing proxy is defined as a property, an operation indication is defined as write, a permission is defined as encryption required, and an option is defined as optional.

Table 3

| Service structure member | Category | Operation indication | Permission | Option |
|---|---|---|---|---|
| Audio mixing policy | Property | Read | Encryption required | Mandatory |
| Audio mixing policy control point | Method | None | Encryption required | Optional |
| Audio mixing cycle | Property | Read and write | Encryption required | Optional |
| Audio mixing proxy | Property | Write | Encryption required | Optional |
| Overflow reminder | Event | None | None | Optional |

The audio stream mixing service is used to configure an audio mixing policy (for example, may be the correspondence table shown in the foregoing Table 1 or Table 2) of an audio sink device, and enable/disable an audio mixing proxy. The audio mixing policy affects an audio mixing behavior and an audio mixing effect of the audio sink device. The audio sink device is a device that can receive or use (for example, play) an audio stream.

A server of the audio stream mixing service needs to be the audio sink device. A client of the audio stream mixing service is a configuration device or an audio mixing proxy device. The configuration device is responsible for configuring the audio mixing policy, configuring an audio mixing cycle, and receiving an overflow reminder. The audio mixing proxy device may receive, in place of the audio sink device, a plurality of audio streams, perform audio mixing, and then transmit a single audio stream to the audio sink device. The audio mixing proxy device accesses a property of the audio mixing proxy in the audio stream mixing service. For example, the audio sink device may be the device 4 in FIG. 4, and the configuration device is the device 3 in FIG. 4. For example, the audio sink device may alternatively be the device 5 in FIG. 5A, and the audio mixing proxy device is the device 4 in FIG. 5A.

When the audio mixing policy of the audio sink device is preset, the audio mixing policy cannot be modified. In this case, the audio mixing policy control point method does not need to be set in the audio stream mixing service. When there is the audio mixing policy control point, the audio mixing policy may be dynamically configured.

When the audio stream mixing service includes the property of the audio mixing proxy, the server needs to send a broadcast, where the standard service data information carries the identifier of the audio stream mixing service. For example, when a value of the property of the audio mixing proxy is the first audio mixing proxy identifier, it indicates to start to provide the audio mixing proxy for the server; or when the value of the property of the audio mixing proxy is the second audio mixing proxy identifier, it indicates to end providing the audio mixing proxy for the server. It may be understood that the first audio mixing proxy identifier and the second audio mixing proxy identifier may be the two values of the property of the audio mixing proxy.

The overflow reminder is used to notify the client when an audio stream obtained through audio mixing overflows. For the overflow reminder, refer to the overflow indication information in FIG. 3A.

For example, a property of the audio mixing policy may be represented as content shown in the following Table 4: An audio stream type [i] represents an $i^{th}$ audio stream type, and a weight coefficient [i] represents an audio mixing weight corresponding to the $i^{th}$ audio stream type. For descriptions of the audio stream type [i] and the weight coefficient [i], refer to descriptions in Table 4. Details are not described herein.

Table 4

| Field | Length | Description |
|---|---|---|
| Quantity of audio stream types | 1 byte | Quantity of audio stream types |
| Audio stream type [i] | 2 bytes | The audio stream type is represented by an AID. The AID ranges from 0x0000 to 0x1000. Upper bits are padded with 0s. |
| Weight coefficient [i] | 1 byte | Range: 0 to 120, where 0 indicates that the audio stream is not accepted; 1 to 99 form an audio mixing interval, where audio mixing may be performed on audio streams with the weight coefficient based on the weight coefficient; and 100 to 120 form an exclusive interval, where an audio stream within the weight coefficient is played exclusively. |

For example, a property of the audio mixing cycle may be represented as content shown in the following Table 5:

Table 5

| Field | Length | Description |
|---|---|---|
| Audio mixing cycle | 2 bytes | indicates audio mixing cycles of the plurality of audio streams, where this value is invalid when there is only one audio stream. Range: 1 to 65535, where 0 is an invalid value. A unit is microseconds ($\mu$s). |

For example, the property of the audio mixing proxy may be represented as content shown in the following Table 6:

Table 6

| Field | Length | Description |
|---|---|---|
| Audio mixing proxy | 1 byte | 0x00 indicates that the client does not perform the audio mixing proxy for the server, and the server needs to receive an audio source and perform audio mixing. 0x01 indicates that the client performs the audio mixing proxy for the server, and the server does not need to discover the audio source and perform audio mixing. |

Audio mixing policy configuration signaling is an instruction used to adjust an audio mixing weight of an audio stream. For example, the audio mixing policy configuration signaling is used to adjust weight coefficients (or referred to as audio mixing weights) of audio streams of different types. The audio mixing policy configuration signaling is carried in method invocation of the audio mixing policy control point. In specific implementation, a handle of the method invocation needs to be a handle of the audio mixing policy control point, and content of the audio mixing policy configuration signaling needs to be placed in a parameter field of the method invocation.

For example, the audio mixing policy configuration signaling may be represented as content shown in the following Table 7: an operation code field and a parameter field. The parameter field includes a configuration quantity, the audio stream type [i], and the weight coefficient [i].

Table 7

| Operation code | Length | Description |
|---|---|---|
| 0x01 | 1 byte | Setting of the audio mixing policy |
| Parameter | Length | Description |
| Configuration quantity | 1 byte | Quantity of audio stream types to be configured |
| Audio stream type [i] | 2 bytes | Audio stream type to be configured, which is represented by an AID. |
| Weight coefficient [i] | 1 byte | Weight coefficient corresponding to an audio stream type |

When receiving the audio mixing policy configuration signaling, the server may further feed back an audio mixing policy configuration response to the client. For example, for the audio mixing policy configuration response, refer to content shown in Table 8:

Table 8

| Result code | Description |
|---|---|
| 0x00 | Configuration succeeds |
| 0x01 | Audio stream type that is not supported |
| 0x02 to 0xFE | Reserved |
| 0xFF | Other errors |

For example, the configuration device first obtains, by reading the property of the audio mixing policy, the audio mixing policy carried on the audio sink device. The configuration device configures, based on the audio mixing policy configuration signaling, a type of an audio stream and an audio mixing weight corresponding to the audio stream in the audio mixing policy. After receiving the signaling, the audio sink device modifies a corresponding item based on the signaling, and replies with a configuration response indicating that configuration succeeds.

For example, the audio mixing configuration information 1 in the embodiment in FIG. 4 is the content of the audio mixing policy configuration signaling, and the audio mixing policy configuration signaling may be carried in the method invocation of the audio mixing policy control point. The handle of the method invocation needs to be the handle of the audio mixing policy control point, and the content of the audio mixing policy configuration signaling needs to be placed in the parameter field of the method invocation.

FIG. 6A is a diagram of a structure of an apparatus according to an embodiment of this application. An apparatus 31 includes a display unit 310, a receiving unit 311, and a configuration unit 312. The apparatus 31 may be implemented by hardware, software, or a combination of software and hardware.

The display unit 310 is configured to indicate properties of a plurality of audio streams to a user, where the plurality of audio streams are generated by a plurality of devices; and the property includes at least one of the following: an identifier of the audio stream, a type of the audio stream, a type of an application that generates the audio stream, a type of an audio source device that generates the audio stream, a type of a user to which the audio source device that generates the audio stream belongs, and a coding format of the audio stream. The receiving unit 311 is configured to receive setting information of the user. The configuration unit 312 is configured to configure an audio mixing weight of the plurality of audio streams based on the setting information.

The apparatus 31 may be configured to implement the method described in the embodiment in FIG. 2A. In the embodiment in FIG. 2A, the display unit 310 may be configured to perform S201, the receiving unit 311 may be configured to perform S202, and the configuration unit 312 may be configured to perform S203.

In some possible embodiments, the apparatus 31 may be further configured to perform the method on the device 3 side described in the embodiment in FIG. 4. Details are not described herein again.

FIG. 6B is a diagram of a structure of an apparatus according to an embodiment of this application. An apparatus 32 includes a receiving unit 320 and a processing unit 321. The apparatus 32 may be implemented by hardware, software, or a combination of software and hardware.

The receiving unit 320 is configured to receive at least one piece of indication information from at least one audio source device, where the at least one piece of indication information corresponds to at least one audio stream generated by the at least one audio source device. The processing unit 321 is configured to determine an audio mixing weight of the at least one audio stream based on the at least one piece of indication information.

The apparatus 32 may be configured to implement the method on the device 1 side described in the embodiment in FIG. 3A. In the embodiment in FIG. 3A, the receiving unit 320 may be configured to perform S301, and the processing unit 321 may be configured to perform S302. In some possible embodiments, the receiving unit 320 may be further configured to perform S303.

Optionally, the apparatus 32 further includes a playing unit (not shown in the figure), and the playing unit is configured to play a target audio stream. The playing unit may be configured to perform S304 in FIG. 3A.

Optionally, the apparatus 32 further includes a sending unit (not shown in the figure), and the sending unit is configured to send the target audio stream. The sending unit may be configured to perform S305 in FIG. 3A.

In some possible embodiments, the apparatus 32 may be further configured to perform the method on the device 4 side described in the embodiment in FIG. 5A. In FIG. 5A, the receiving unit 320 may be configured to perform S501, S504, and S506, and the processing unit 321 may be configured to perform S502 and S508.

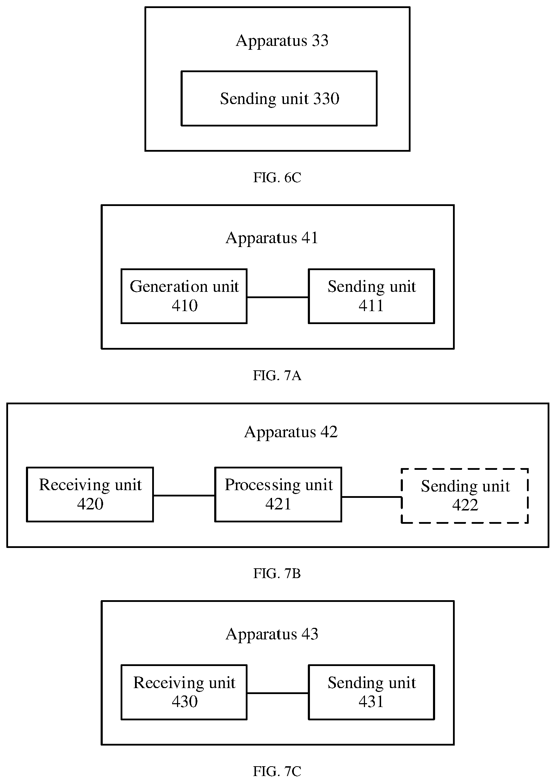

FIG. 6C is a diagram of a structure of an apparatus according to an embodiment of this application. An apparatus 33 includes a sending unit 330. The apparatus 33 may be implemented by hardware, software, or a combination of software and hardware.

The sending unit 330 is configured to: send at least one piece of indication information, where the at least one piece of indication information corresponds to at least one audio stream, and the at least one piece of indication information is used to determine an audio mixing weight of the at least one audio stream; and send the at least one audio stream.

The apparatus 33 may be configured to implement the method on the audio source device side described in the embodiment in FIG. 3A. In the embodiment in FIG. 3A, the sending unit 330 may be configured to perform S301 and S303.

FIG. 7A is a diagram of a structure of an apparatus according to an embodiment of this application. An apparatus 41 includes a generation unit 410 and a sending unit 411. The apparatus 41 may be implemented by hardware, software, or a combination of software and hardware.

The generation unit 410 is configured to generate audio mixing configuration information, where the audio mixing configuration information includes an audio mixing weight of a plurality of audio streams from a plurality of audio source devices. The sending unit 411 is configured to send the audio mixing configuration information to a second device (a device that has an audio sink capability), where the audio mixing configuration information is used to perform audio mixing processing on the plurality of audio streams.

The apparatus 41 may be configured to implement the method on the device 3 side described in the embodiment in FIG. 4. In the embodiment in FIG. 4, the generation unit 410 may be configured to perform S401 and S402, and the sending unit 411 may be configured to perform S403.

FIG. 7B is a diagram of a structure of an apparatus according to an embodiment of this application. An apparatus 42 includes a receiving unit 420 and a processing unit 421. The apparatus 42 may be implemented by hardware, software, or a combination of software and hardware.

The receiving unit 420 is configured to receive audio mixing configuration information from a first device (that is, a device that has an audio mixing weight configuration capability), where the audio mixing configuration information includes an audio mixing weight of a plurality of audio streams from a plurality of audio source devices, and the audio mixing configuration information is used to perform audio mixing processing on the plurality of audio streams. The processing unit 421 is configured to perform configuration based on the audio mixing configuration information.

The apparatus 42 may be configured to implement the method on the device 4 side described in the embodiment in FIG. 4. In the embodiment in FIG. 4, the receiving unit 420 may be configured to perform S403, and the processing unit 421 may be configured to perform S404.

In some possible embodiments, the apparatus 42 further includes a sending unit 422. In this case, the sending unit 422 is configured to broadcast a first message, where the first message includes an identifier of an audio stream mixing service; and the receiving unit 420 is configured to receive a second message from a first device (that is, a device that can provide an audio mixing proxy), where the second message includes a first audio mixing proxy identifier, and the first audio mixing proxy identifier indicates the first device to start to provide the audio mixing proxy for the apparatus 42.

The apparatus 42 may be configured to implement the method on the device 5 side described in the embodiment in FIG. 5A. In the embodiment in FIG. 5A, the sending unit 422 may be configured to perform S501, S504, and S506, and the receiving unit 420 may be configured to perform S503, S505, S507, and S509. In some possible embodiments, the apparatus 42 further includes a playing unit (not shown in the figure), and the playing unit may be configured to perform S510.

FIG. 7C is a diagram of a structure of an apparatus according to an embodiment of this application. An apparatus 43 includes a receiving unit 430 and a sending unit 431. The apparatus 43 may be implemented by hardware, software, or a combination of software and hardware.

The receiving unit 430 is configured to receive a first message from a second device (that is, a device that has an audio sink capability), where the first message includes an identifier of an audio stream mixing service. The sending unit 431 is configured to send a second message to the second device based on the first message, where the second message includes a first audio mixing proxy identifier, and the first audio mixing proxy identifier indicates the apparatus 43 to start to provide an audio mixing proxy for the second device.

The apparatus 43 may be configured to implement the method on the device 4 side described in the embodiment in FIG. 5A. In the embodiment in FIG. 5A, the receiving unit 430 may be configured to perform S501, S504, and S506, and the sending unit 431 may be configured to perform S503, S505, S507, and S509. In some possible embodiments, the apparatus 43 further includes a processing unit (not shown in the figure), and the processing unit may be configured to perform S502 and S508.

It should be understood that division into units in the foregoing apparatus (for example, the apparatus shown in FIG. 6A, FIG. 6B, FIG. 6C, FIG. 7A, FIG. 7B, or FIG. 7C) is merely logical function division. During actual implementation, all or some of the units may be integrated on one physical entity, or may be physically separated. In addition, the units in the apparatus may be implemented in a form of software invoked by a processor. For example, the apparatus includes the processor, the processor is connected to a memory, the memory stores instructions, and the processor invokes the instructions stored in the memory, to implement any one of the foregoing methods or implement functions of the units in the apparatus. The processor is, for example, a general-purpose processor, for example, a central processing unit (central processing unit, CPU) or a microprocessor, and the memory is a memory in the apparatus or a memory outside the apparatus. Alternatively, the units in the apparatus may be implemented in a form of hardware circuit, and functions of some or all of the units may be implemented through design of the hardware circuit. The hardware circuit may be understood as one or more processors. For example, in an implementation, the hardware circuit is an application-specific integrated circuit (application-specific integrated circuit, ASIC), and the functions of some or all of the units are implemented through design of a logical relationship between elements in the circuit. For another example, in another implementation, the hardware circuit may be implemented by a programmable logic device (programmable logic device, PLD), for example, a field programmable gate array (field programmable gate array, FPGA). The field programmable gate array may include a large quantity of logic gate circuits, and a connection relationship between the logic gate circuits is configured based on a configuration file, to implement the functions of some or all of the units. All units of the foregoing apparatus may be implemented in the form of software invoked by the processor; or all units may be implemented in the form of hardware circuit; or some units may be implemented in the form of software invoked by the processor, and the remaining part may be implemented in the form of the hardware circuit.

In embodiments of this application, the processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function through a logical relationship of a hardware circuit. The logical relationship of the hardware circuit is fixed or may be reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the foregoing apparatus may be integrated, or may be implemented independently. In an implementation, these units are integrated together and implemented in a form of a system-on-a-chip (system-on-a-chip, SOC). The SOC may include at least one processor, configured to implement any one of the methods or implement functions of the units of the apparatus. Types of the at least one processor may be different. For example, the at least one processor includes a CPU and an FPGA, a CPU and an artificial intelligence processor, or a CPU and a GPU.

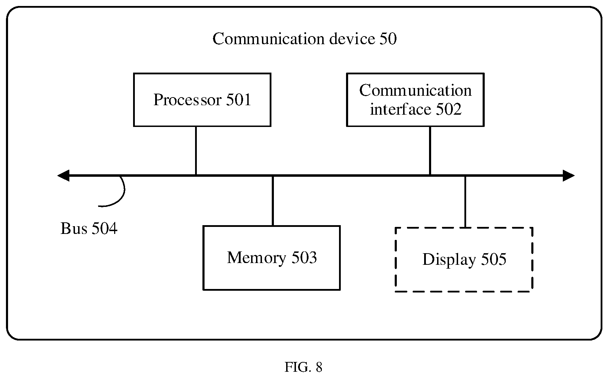

FIG. 8 is a diagram of a structure of a communication device according to an embodiment of this application. As shown in FIG. 8, a communication device 50 includes a processor 501, a communication interface 502, a memory 503, and a bus 504. The processor 501, the memory 503, and the communication interface 502 communicate with each other through the bus 504.

It should be understood that quantities of processors and memories in the communication device 50 are not limited in this application.

In an implementation, the communication device 50 may be an audio source device that generates or sends an audio stream. The device may be, for example, a terminal like a mobile phone, a computer, a tablet computer, a wearable device, a vehicle-mounted device, a virtual reality device, or an augmented reality device.

In an implementation, the communication device 50 may be a device that has an audio mixing weight configuration capability. The device may be, for example, a terminal device that has a processing capability, like a portable mobile device (for example, a mobile phone, a tablet computer, or a computer), an intelligent wearable device (for example, a sports band or a watch), or a head unit. Alternatively, the device may be an infrastructure device, like a home router or a public router.

In an implementation, the communication device 50 may be a device that has an audio mixing processing capability. The device may be, for example, a terminal device that has a processing capability, like a portable mobile device (for example, a mobile phone, a tablet computer, or a computer), an intelligent wearable device (for example, a sports band or a watch), or a head unit. Alternatively, the device may be an infrastructure device, like a home router or a public router.

In an implementation, the communication device 50 may be a device that receives or uses (for example, plays) an audio stream. The device may be, for example, a headset, a speaker, glasses with a player, or another player.

The bus 504 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 8. However, it does not mean that there is only one bus or only one type of bus. The bus 504 may include a path for transferring information between various components (for example, the memory 503, the processor 501, and the communication interface 502) of the communication device 50.

For the processor 501, refer to the related descriptions of the processor in the foregoing embodiment. Details are not described herein again.

The memory 503 is configured to provide storage space, and the storage space may store data, for example, an operating system and a computer program. The memory 503 may be one or a combination of a random access memory (random access memory, RAM), an erasable programmable read-only memory (erasable programmable read-only memory, EPROM), a read-only memory (read-only memory, ROM), a compact disc read-only memory (compact disc read-only memory, CD-ROM), or the like. The memory 503 may exist independently, or may be integrated into the processor 501.

The communication interface 502 may be configured to provide information input or output for the processor 501. Alternatively, the communication interface 502 may be configured to receive data sent from the outside and/or send data to the outside, and may be a wired link interface including an Ethernet cable or the like, or may be a wireless (for example, Wi-Fi, Bluetooth, or universe wireless transmission) link interface. Alternatively, the communication interface 502 may further include a transmitter (for example, a radio frequency transmitter or an antenna), a receiver, or the like coupled to the interface.

In some possible embodiments, when the communication device 50 has the audio mixing weight configuration capability, the communication device 50 further includes a display 505. The display 505 is connected to or coupled to the processor 501 through the bus 504. The display 505 may be configured to indicate properties of a plurality of audio streams to a user. The display 505 may be a display screen. The display screen may be a liquid crystal display (liquid crystal display, LCD), an organic or inorganic light-emitting diode (organic light-emitting diode, OLED), an active matrix organic light-emitting diode (active matrix/organic light-emitting diode, AMOLED) panel, or the like. Alternatively, the display 505 may be a head unit tablet, a vehicle-mounted display, a head-up display (head-up display, HUD) system, or the like.

The processor 501 in the communication device 50 is configured to read the computer program stored in the memory 503, to perform the foregoing methods, for example, the methods described in FIG. 2A, FIG. 3A, FIG. 4, and FIG. 5A.

In a possible design manner, the communication device 50 may be one or more modules in an execution body for performing the method shown in FIG. 2A. The processor 501 may be configured to read one or more computer programs stored in the memory, to perform the following operations:
indicating the properties of the plurality of audio streams to the user through the display unit 310, where the plurality of audio streams are generated by a plurality of devices; and the property includes at least one of the following: an identifier of the audio stream, a type of the audio stream, a type of an application that generates the audio stream, a type of an audio source device that generates the audio stream, a type of a user to which the audio source device that generates the audio stream belongs, and a coding format of the audio stream;

receiving setting information of the user through the receiving unit 311; and
configuring an audio mixing weight of the plurality of audio streams based on the setting information of the user.

In a possible design manner, the communication device 50 may be one or more modules in an execution body (the device 1) for performing the method on the device 1 side shown in FIG. 3A. The processor 501 may be configured to read one or more computer programs stored in the memory, to perform the following operations:

receiving at least one piece of indication information from at least one audio source device through the receiving unit 320, where the at least one piece of indication information corresponds to at least one audio stream generated by the at least one audio source device; and
determining an audio mixing weight of the at least one audio stream based on the at least one piece of indication information.

In a possible design manner, the communication device 50 may be one or more modules in an execution body (an audio source device) for performing the method on the audio source device side shown in FIG. 3A. The processor 501 may be configured to read one or more computer programs stored in the memory, to perform the following operations:
sending at least one piece of indication information through the sending unit 330, where the at least one piece of indication information corresponds to at least one audio stream, and the at least one piece of indication information is used to determine an audio mixing weight of the at least one audio stream; and send the at least one audio stream.
In a possible design manner, the communication device 50 may be one or more modules in an execution body (the device 3) for performing the method on the device 3 side shown in FIG. 4. The processor 501 may be configured to read one or more computer programs stored in the memory, to perform the following operations:

generating audio mixing configuration information, where the audio mixing configuration information includes an audio mixing weight of the plurality of audio streams from a plurality of audio source devices; and
sending the audio mixing configuration information to a second device through the sending unit 411, where the audio mixing configuration information is used to perform audio mixing processing on the plurality of audio streams.

In a possible design manner, the communication device 50 may be one or more modules in an execution body (the device 4) for performing the method on the device 3 side shown in FIG. 4. The processor 501 may be configured to read one or more computer programs stored in the memory, to perform the following operations:

receiving audio mixing configuration information from a first device through the receiving unit 420, where the audio mixing configuration information includes an audio mixing weight of the plurality of audio streams from a plurality of audio source devices, and the audio mixing configuration information is used to perform audio mixing processing on the plurality of audio streams; and
performing configuration based on the audio mixing configuration information through the processing unit 421.

In a possible design manner, the communication device 50 may be one or more modules in an execution body (the device 4) for performing the method on the device 4 side shown in FIG. 5A. The processor 501 may be configured to read one or more computer programs stored in the memory, to perform the following operations:

receiving a first message from a second device through the receiving unit 430, where the first message includes an identifier of an audio stream mixing service; and
sending a second message to the second device based on the first message through the sending unit 431, where the second message includes a first audio mixing proxy identifier, and the first audio mixing proxy identifier indicates a first device to start to provide an audio mixing proxy for the second device.

In a possible design manner, the communication device 50 may be one or more modules in an execution body (the device 5) for performing the method on the device 5 side shown in FIG. 5A. The processor 501 may be configured to read one or more computer programs stored in the memory, to perform the following operations:

broadcasting a first message through the sending unit 422, where the first message includes an identifier of an audio stream mixing service; and

receiving a second message from a first device through the receiving unit 420, where the second message includes a first audio mixing proxy identifier, and the first audio mixing proxy identifier indicates the first device to start to provide an audio mixing proxy for a second device.

In the foregoing embodiments in this specification, the descriptions of embodiments have respective focuses. For a part that is not described in detail in an embodiment, refer to the related descriptions in other embodiments. In addition, in embodiments of this application, unless otherwise stated or there is a logic conflict, terms and/or descriptions between the embodiments are consistent and may be mutually referenced, and technical features in different embodiments may be combined into a new embodiment based on an internal logical relationship thereof.

It should be noted that, a person of ordinary skill in the art may understand that, all or some of the steps of the methods in the foregoing embodiments may be implemented by a program instructing related hardware. The program may be stored in a computer-readable storage medium. The storage medium includes a read-only memory (read-only memory, ROM), a random access memory (random access memory, RAM), a programmable read-only memory (programmable read-only memory, PROM), an erasable programmable read-only memory (erasable programmable read-only memory, EPROM), a one-time programmable read-only memory (one-time programmable read-only memory, OTPROM), an electrically-erasable programmable read-only memory (electrically-erasable programmable read-only memory, EEPROM), a compact disc read-only memory (compact disc read-only memory, CD-ROM), or another optical disk memory, a magnetic disk memory, a magnetic tape memory, or any other computer-readable medium that can be configured to carry or store data.

The technical solutions of this application essentially, or the contributing part, or all or some of the technical solutions may be implemented in a form of a software product. The computer program product is stored in a storage medium and includes several instructions for enabling a device (which may be a personal computer, a server, a network device, a robot, a single-chip microcomputer, a chip, a robot, or the like) to perform all or some of the steps of the methods described in embodiments of this application.

**Claims**

1. An audio mixing method, wherein the method is applied to a first device, and the method comprises:

   receiving at least one piece of indication information from at least one audio source device, wherein the at least one piece of indication information corresponds to at least one audio stream generated by the at least one audio source device; and
   determining an audio mixing weight of the at least one audio stream based on the at least one piece of indication information.

2. The method according to claim 1, wherein that the at least one piece of indication information corresponds to at least one audio stream generated by the at least one audio source device comprises:
   the at least one piece of indication information indicates at least one of the following information:

   a type of the at least one audio stream;
   a coding format of the at least one audio stream;
   a type of the at least one audio source device;
   the audio mixing weight;
   a type of a user to which the at least one audio source device belongs; and
   a type of an application that generates the at least one audio stream.

3. The method according to claim 1 or 2, wherein the at least one piece of indication information comprises first indication information and second indication information, the first indication information corresponds to a first audio stream, the second indication information corresponds to a second audio stream, and the first audio stream and the second audio stream are audio streams of a same type and/or audio streams generated by a same audio source device and/or a same application.

4. The method according to any one of claims 1 to 3, wherein the method further comprises:

   obtaining a plurality of audio streams, wherein the plurality of audio streams come from a plurality of audio source devices, and the plurality of audio streams comprise the at least one audio stream; and
determining a to-be-played target audio stream based on the plurality of audio streams and an audio mixing weight of the plurality of audio streams.

5. The method according to claim 4, wherein the method further comprises:
playing the target audio stream, or sending the target audio stream to a target device.

6. The method according to claim 4 or 5, wherein the plurality of audio streams comprise the first audio stream and the second audio stream; and the determining a to-be-played target audio stream based on the plurality of audio streams and an audio mixing weight of the plurality of audio streams comprises:
when a first preset condition is met, determining that the target audio stream is the first audio stream, wherein the first preset condition is any one of the following conditions:

an audio mixing weight of the second audio stream is less than or equal to the first value, and an audio mixing weight of the first audio stream is greater than the first value; or
the audio mixing weight of the first audio stream is greater than or equal to a second value, and the audio mixing weight of the first audio stream is greater than or equal to the audio mixing weight of the second audio stream, wherein the second value is greater than the first value.

7. The method according to claim 4 or 5, wherein the plurality of audio streams comprise the first audio stream and the second audio stream; and the determining a to-be-played target audio stream based on the plurality of audio streams and an audio mixing weight of the plurality of audio streams comprises:
when a second preset condition is met, determining that the target audio stream is the second audio stream, wherein the second preset condition is any one of the following conditions:

an audio mixing weight of the first audio stream is less than or equal to the first value, and an audio mixing weight of the second audio stream is greater than the first value; or
the audio mixing weight of the second audio stream is greater than or equal to a second value, and the audio mixing weight of the second audio stream is greater than the audio mixing weight of the first audio stream, wherein the second value is greater than the first value.

8. The method according to claim 4 or 5, wherein the plurality of audio streams comprise the first audio stream and the second audio stream; and the determining a to-be-played target audio stream based on the plurality of audio streams and an audio mixing weight of the plurality of audio streams comprises:
when an audio mixing weight of the second audio stream is greater than a first value and less than a second value, an audio mixing weight of the first audio stream is greater than the first value and less than the second value, and the second value is greater than the first value, performing audio mixing on the first audio stream and the second audio stream to generate a third audio stream; and determining that the target audio stream is the third audio stream.

9. The method according to any one of claims 4 to 8, wherein

the plurality of audio streams comprise the first audio stream and the second audio stream; and
the first audio stream is generated by the first device, and the second audio stream comes from a first audio source device; or
the first audio stream comes from the first audio source device, and the second audio stream comes from a second audio source device.

10. The method according to any one of claims 1 to 9, wherein

when the audio mixing weight is less than or equal to the first value, the audio mixing weight indicates that the audio stream corresponding to the audio mixing weight is rejected to be used as a source of the audio stream obtained through audio mixing; or
when the audio mixing weight is greater than the first value and less than the second value, the audio mixing weight indicates that the audio stream corresponding to the audio mixing weight is allowed to be used as a non-unique source of the audio stream obtained through audio mixing, wherein the second value is greater than the first value; or
when the audio mixing weight is greater than or equal to the second value, the audio mixing weight indicates that the audio stream corresponding to the audio mixing weight is allowed to be used as a unique source of the audio stream obtained through audio mixing.

11. An audio mixing method, wherein the method is applied to a second device, and the method comprises:

   sending at least one piece of indication information, wherein the at least one piece of indication information corresponds to at least one audio stream, and the at least one piece of indication information is used to determine an audio mixing weight of the at least one audio stream; and
   sending the at least one audio stream.

12. The method according to claim 11, wherein that the at least one piece of indication information corresponds to the at least one audio stream generated by the second device comprises:
   the at least one piece of indication information indicates at least one of the following information:

   a type of the at least one audio stream;
   a coding format of the at least one audio stream;
   a type of the second device;
   the audio mixing weight;
   a type of a user to which the second device belongs; and
   a type of an application that generates the at least one audio stream.

13. The method according to claim 11 or 12, wherein the at least one piece of indication information comprises first indication information and second indication information, the first indication information corresponds to a first audio stream, the second indication information corresponds to a second audio stream, and the first audio stream and the second audio stream are audio streams of a same type and/or audio streams generated by a same application.

14. The method according to claim 11 or 12, wherein the at least one piece of indication information comprises first indication information, the first indication information corresponds to a first audio stream and a second audio stream, and the first audio stream and the second audio stream are audio streams of a same type and/or audio streams generated by a same application.

15. An audio mixing method, wherein the method is applied to a first device, and the method comprises:

   indicating properties of a plurality of audio streams to a user, wherein the plurality of audio streams are generated by a plurality of devices; and the property comprises at least one of the following: an identifier of the audio stream, a type of the audio stream, a type of an application that generates the audio stream, a type of an audio source device that generates the audio stream, a type of a user to which the audio source device that generates the audio stream belongs, and a coding format of the audio stream;
   receiving setting information of the user; and
   configuring an audio mixing weight of the plurality of audio streams based on the setting information.

16. The method according to claim 15, wherein the receiving setting information of the user comprises:

   obtaining the setting information input by the user through a touchscreen of the first device;
   obtaining the setting information input by the user through a button of the first device;
   obtaining the setting information input by the user through a keyboard of the first device;
   obtaining the setting information input by the user through a voice; or
   obtaining the setting information input by the user through a gesture.

17. The method according to claim 15 or 16, wherein the method further comprises:

   indicating a usage scenario of the plurality of audio streams to the user, wherein
   the setting information is used to configure an audio mixing weight of the plurality of audio streams in the usage scenario.

18. The method according to claim 17, wherein the usage scenario comprises a first usage scenario and a second usage scenario, and an audio mixing weight of the plurality of audio streams in the first usage scenario are different from an audio mixing weight of the plurality of audio streams in the second usage scenario.

**19.** The method according to claim 17 or 18, wherein
the usage scenario comprises at least one of the following scenarios: a game mode, a driving mode, a speaker mode, a headset playing mode, a rest mode, a silent mode, a learning mode, and a power saving mode.

**20.** The method according to any one of claims 15 to 19, wherein the method further comprises:
mixing the plurality of audio streams into a to-be-played audio stream based on the audio mixing weights.

**21.** The method according to claim 20, wherein the plurality of audio streams comprise a first audio stream with a high priority; and the method further comprises reminding, in at least one of the following plurality of manners, the user to pay attention to the first audio stream:

increasing an audio mixing weight of the first audio stream;
playing content of the first audio stream for a plurality of times; and
requiring the user to feed back a confirmation.

**22.** The method according to claim 21, wherein the increasing an audio mixing weight of the first audio stream comprises:

decreasing, in a play time period of the first audio stream, a play volume of another audio stream that is in the plurality of audio streams and that is mixed with the first audio stream; or
setting the first audio stream as a unique audio stream in the to-be-played audio stream in the play time period of the first audio stream.

**23.** The method according to claim 21 or 22, wherein the playing content of the first audio stream for a plurality of times comprises:
repeatedly mixing the first audio stream into the to-be-played audio stream for a plurality of times, and successively increasing the audio mixing weight of the first audio stream.

**24.** The method according to any one of claims 21 to 23, wherein the requiring the user to feed back a confirmation comprises:

querying the user whether the user learns of the content carried in the first audio stream; and
receiving feedback information of the user, wherein the feedback information indicates that the user confirms that the user learns of the content carried in the first audio stream.

**25.** The method according to claim 24, wherein

before the receiving the feedback information, the method further comprises: repeatedly mixing the first audio stream into the to-be-played audio stream; and
after the receiving the feedback information, the method further comprises: stopping mixing the first audio stream into the to-be-played audio stream.

**26.** The method according to any one of claims 20 to 25, wherein the method further comprises:
when a volume of the to-be-played audio stream exceeds a preset volume threshold, prompting the user that the volume is excessively high.

**27.** The method according to any one of claims 15 to 26, wherein the configuration is pre-configuration before the audio mixing is performed or adjustment of the audio mixing weight in a process in which the audio mixing is performed.

**28.** The method according to any one of claims 15 to 27, wherein the method further comprises:

obtaining a default setting of the audio mixing weight; and
the configuring an audio mixing weight of the plurality of audio streams based on the setting information comprises:
configuring the audio mixing weight of the plurality of audio streams based on the setting information and the default setting.

**29.** The method according to any one of claims 15 to 28, wherein

when the audio mixing weight is less than or equal to a first value, the audio mixing weight indicates that the audio stream corresponding to the audio mixing weight is rejected to be used as a source of the audio stream obtained through audio mixing; or

when the audio mixing weight is greater than the first value and less than a second value, the audio mixing weight indicates that the audio stream corresponding to the audio mixing weight is allowed to be used as a non-unique source of the audio stream obtained through audio mixing, wherein the second value is greater than the first value; or

when the audio mixing weight is greater than or equal to the second value, the audio mixing weight indicates that the audio stream corresponding to the audio mixing weight is allowed to be used as a unique source of the audio stream obtained through audio mixing.

30. An audio mixing method, wherein the method is applied to a first device, and the method comprises:

generating audio mixing configuration information, wherein the audio mixing configuration information comprises an audio mixing weight of a plurality of audio streams from a plurality of audio source devices; and
sending the audio mixing configuration information to a second device, wherein the audio mixing configuration information is used to perform audio mixing processing on the plurality of audio streams.

31. The method according to claim 30, wherein the audio mixing weight of the audio stream is used to adjust a sampling depth of a sampling point of the audio stream.

32. The method according to claim 30 or 31, wherein types of the plurality of audio streams are different, and/or coding formats of the plurality of audio streams are different, and/or usage scenarios of the plurality of audio streams are different, and/or types of applications that generate the plurality of audio streams are different, and/or types of the plurality of audio source devices are different, and/or types of users to which the plurality of audio source devices belong are different.

33. The method according to any one of claims 30 to 32, wherein the audio mixing configuration information is carried in audio mixing policy configuration signaling, the audio mixing policy configuration signaling is carried in method invocation of an audio mixing policy control point, and a handle of the method invocation needs to be a handle of the audio mixing policy control point.

34. The method according to any one of claims 30 to 33, wherein before the sending the audio mixing configuration information to a second device, the method further comprises:

obtaining a plurality of types of audio streams supported by the second device; and
the generating audio mixing configuration information comprises:
generating the audio mixing configuration information based on the plurality of types of the audio streams supported by the second device, wherein the plurality of types comprise the types of the plurality of audio streams.

35. The method according to any one of claims 30 to 34, wherein the audio mixing configuration information is further generated based on at least one of the following factors:

a type of an audio source device that generates an audio stream;
a coding format of the audio stream;
a type of a user to which the audio source device that generates the audio stream belongs;
a type of an application that generates the audio stream; and
a usage scenario of the audio stream.

36. The method according to any one of claims 30 to 35, wherein the method further comprises:
sending an audio mixing cycle to the second device, wherein the audio mixing cycle indicates a quantity of sampling points required when audio mixing is performed on each of the plurality of audio streams.

37. The method according to any one of claims 30 to 36, wherein

when the audio mixing weight is less than or equal to a first value, the audio mixing weight indicates that the audio stream corresponding to the audio mixing weight is rejected to be used as a source of the audio stream obtained through audio mixing; or

when the audio mixing weight is greater than the first value and less than a second value, the audio mixing weight indicates that the audio stream corresponding to the audio mixing weight is allowed to be used as a non-unique source of the audio stream obtained through audio mixing, wherein the second value is greater than the first value; or

when the audio mixing weight is greater than or equal to the second value, the audio mixing weight indicates that the audio stream corresponding to the audio mixing weight is allowed to be used as a unique source of the audio stream obtained through audio mixing.

38. The method according to any one of claims 30 to 37, wherein the method further comprises:

receiving overflow indication information, wherein the overflow indication information indicates that overflow occurs in an audio stream obtained through audio mixing, and the overflow indication information comprises a type of an audio stream whose loudness output proportion is the largest in the audio stream obtained through audio mixing; and

adjusting the audio mixing weight in the audio mixing configuration information based on the overflow indication information.

39. An audio mixing method, applied to a second device, wherein the method comprises:

receiving audio mixing configuration information from a first device, wherein the audio mixing configuration information comprises an audio mixing weight of a plurality of audio streams from a plurality of audio source devices, and the audio mixing configuration information is used to perform audio mixing processing on the plurality of audio streams; and

performing configuration based on the audio mixing configuration information.

40. The method according to claim 39, wherein the second device currently plays a first audio stream; and the method further comprises:

receiving a second audio stream, wherein the second audio stream and the first audio stream come from different audio source devices;

determining a to-be-played target audio stream based on an audio mixing weight of the first audio stream, an audio mixing weight of the second audio stream, the first audio stream, and the second audio stream, wherein the audio mixing weight of the first audio stream and the audio mixing weight of the second audio stream are obtained from the audio mixing configuration information; and

playing the target audio stream.

41. The method according to claim 40, wherein

the determining a to-be-played target audio stream based on an audio mixing weight of the first audio stream, an audio mixing weight of the second audio stream, the first audio stream, and the second audio stream comprises: when a preset condition is met, rejecting the second audio stream to join the audio stream obtained through audio mixing, and determining that the target audio stream is the first audio stream, wherein the preset condition is any one of the following conditions:

the audio mixing weight of the second audio stream is less than or equal to a first value, and the audio mixing weight of the first audio stream is greater than the first value; or

the audio mixing weight of the first audio stream is greater than or equal to a second value, and the audio mixing weight of the first audio stream is greater than or equal to the audio mixing weight of the second audio stream, wherein the second value is greater than the first value.

42. The method according to claim 40, wherein

the determining a to-be-played target audio stream based on an audio mixing weight of the first audio stream, an audio mixing weight of the second audio stream, the first audio stream, and the second audio stream comprises:

when the audio mixing weight of the second audio stream is greater than or equal to a second value and the audio mixing weight of the second audio stream is greater than the audio mixing weight of the first audio stream, allowing the second audio stream to perform preemption, and determining that the target audio stream is the second audio stream, wherein the second value is greater than the first value.

43. The method according to claim 40, wherein

the determining a to-be-played target audio stream based on an audio mixing weight of the first audio stream, an audio mixing weight of the second audio stream, the first audio stream, and the second audio stream comprises:

when the audio mixing weight of the second audio stream is greater than a first value and less than a second value, and the audio mixing weight of the first audio stream is greater than the first value and less than the second value, allowing the second audio stream to join the audio stream obtained through audio mixing; and performing audio mixing on the first audio stream and the second audio stream to generate a third audio stream, wherein the second value is greater than the first value; and
determining that the target audio stream is the third audio stream.

44. The method according to any one of claims 39 to 43, wherein the audio mixing weight of the audio stream is used to adjust a sampling depth of a sampling point of the audio stream.

45. The method according to any one of claims 39 to 44, wherein types of the plurality of audio streams are different, and/or coding formats of the plurality of audio streams are different, and/or usage scenarios of the plurality of audio streams are different, and/or types of applications that generate the plurality of audio streams are different, and/or types of the plurality of audio source devices are different, and/or types of users to which the plurality of audio source devices belong are different.

46. The method according to any one of claims 39 to 45, wherein the audio mixing configuration information is carried in audio mixing policy configuration signaling, the audio mixing policy configuration signaling is carried in method invocation of an audio mixing policy control point, and a handle of the method invocation needs to be a handle of the audio mixing policy control point.

47. The method according to any one of claims 39 to 46, wherein before the receiving audio mixing configuration information from a first device, the method further comprises:
sending, to the first device, a plurality of types of audio streams supported by the second device.

48. An audio mixing method, applied to a first device, wherein the method comprises:

receiving a first message from a second device, wherein the first message comprises an identifier of an audio stream mixing service; and
sending a second message to the second device based on the first message, wherein the second message comprises a first audio mixing proxy identifier, and the first audio mixing proxy identifier indicates the first device to start to provide an audio mixing proxy for the second device.

49. The method according to claim 48, wherein the method further comprises:

obtaining a plurality of audio streams, wherein the plurality of audio streams come from a plurality of audio source devices;
determining a to-be-played target audio stream based on the plurality of audio streams; and
sending the target audio stream to the second device.

50. The method according to claim 48 or 49, wherein before the sending a second message to the second device, the method further comprises:

sending a first request message, wherein the first request message is used to request to obtain audio mixing configuration information of the second device, the audio mixing configuration information comprises an audio mixing weight of the plurality of audio streams from the plurality of audio source devices, and the audio mixing configuration information is used to perform audio mixing processing on the plurality of audio streams; and
receiving the audio mixing configuration information from the second device.

51. The method according to any one of claims 48 to 50, wherein the method further comprises:

sending a second request message, wherein the second request message is used to request to obtain audio sink capability information of the second device, and the audio sink capability information indicates an audio sink capability of the second device;
receiving the audio sink capability information from the second device; and

determining, based on the audio sink capability information, to start to provide the audio mixing proxy for the second device.

52. The method according to any one of claims 48 to 51, wherein the method further comprises:
sending a third message to the second device, wherein the third message comprises a second audio mixing proxy identifier, and the second audio mixing proxy identifier indicates the first device to end providing the audio mixing proxy for the second device.

53. The method according to any one of claims 48 to 52, wherein the first message is broadcast public information data, the public information data comprises a first field and a second field, the first field indicates that the identifier of the audio stream mixing service is carried in standard service data information, and the second field indicates the identifier of the audio stream mixing service.

54. The method according to claim 53, wherein a length of the identifier of the audio stream mixing service is 16 bits.

55. An audio mixing method, wherein the method is applied to a second device, and the method comprises:

broadcasting a first message, wherein the first message comprises an identifier of an audio stream mixing service; and
receiving a second message from a first device, wherein the second message comprises a first audio mixing proxy identifier, and the first audio mixing proxy identifier indicates the first device to start to provide an audio mixing proxy for the second device.

56. The method according to claim 55, wherein before the receiving a second message from a first device, the method further comprises:

receiving a first request message from the first device; and
sending audio mixing configuration information to the first device based on the first request message, wherein the audio mixing configuration information comprises an audio mixing weight of a plurality of audio streams from a plurality of audio source devices, and the audio mixing configuration information is used to perform audio mixing processing on the plurality of audio streams.

57. The method according to claim 55 or 56, wherein before the receiving a second message from a first device, the method further comprises:

receiving a second request message from the first device; and
sending audio sink capability information to the first device based on the second request message, wherein the audio sink capability information indicates an audio sink capability of the second device.

58. The method according to any one of claims 55 to 57, wherein the method further comprises:
receiving a third message from the first device, wherein the third message comprises a second audio mixing proxy identifier, and the second audio mixing proxy identifier indicates the first device to end providing the audio mixing proxy for the second device.

59. The method according to any one of claims 55 to 58, wherein the first message is broadcast public information data, the public information data comprises a first field and a second field, the first field indicates that the identifier of the audio stream mixing service is carried in standard service data information, and the second field indicates the identifier of the audio stream mixing service.

60. The method according to claim 59, wherein a length of the identifier of the audio stream mixing service is 16 bits.

61. An apparatus for audio mixing, wherein the apparatus is a first device or is comprised in the first device; and the apparatus comprises:

a receiving unit, configured to receive at least one piece of indication information from at least one audio source device, wherein the at least one piece of indication information corresponds to at least one audio stream generated by the at least one audio source device; and
a processing unit, configured to determine an audio mixing weight of the at least one audio stream based on the at least one piece of indication information.

62. The apparatus according to claim 61, wherein that the at least one piece of indication information corresponds to at least one audio stream generated by the at least one audio source device comprises:
the at least one piece of indication information indicates at least one of the following information:

a type of the at least one audio stream;
a coding format of the at least one audio stream;
a type of the at least one audio source device;
the audio mixing weight;
a type of a user to which the at least one audio source device belongs; and
a type of an application that generates the at least one audio stream.

63. The apparatus according to claim 61 or 62, wherein the at least one piece of indication information comprises first indication information and second indication information, the first indication information corresponds to a first audio stream, the second indication information corresponds to a second audio stream, and the first audio stream and the second audio stream are audio streams of a same type and/or audio streams generated by a same audio source device and/or a same application.

64. The apparatus according to any one of claims 61 to 63, wherein the apparatus further comprises:

an obtaining unit, configured to obtain a plurality of audio streams, wherein the plurality of audio streams come from a plurality of audio source devices, and the plurality of audio streams comprise the at least one audio stream; and
the processing unit is further configured to determine a to-be-played target audio stream based on the plurality of audio streams and an audio mixing weight of the plurality of audio streams.

65. The apparatus according to claim 64, wherein the apparatus further comprises:

a playing unit, configured to play the target audio stream; or
a sending unit, configured to send the target audio stream to a target device.

66. The apparatus according to claim 64 or 65, wherein the plurality of audio streams comprise the first audio stream and the second audio stream; and the processing unit is specifically configured to:
when a first preset condition is met, determine that the target audio stream is the first audio stream, wherein the first preset condition is any one of the following conditions:

an audio mixing weight of the second audio stream is less than or equal to the first value, and an audio mixing weight of the first audio stream is greater than the first value; or
the audio mixing weight of the first audio stream is greater than or equal to a second value, and the audio mixing weight of the first audio stream is greater than or equal to the audio mixing weight of the second audio stream, wherein the second value is greater than the first value.

67. The apparatus according to claim 64 or 65, wherein the plurality of audio streams comprise the first audio stream and the second audio stream; and the processing unit is specifically configured to:
when a second preset condition is met, determine that the target audio stream is the second audio stream, wherein the second preset condition is any one of the following conditions:

an audio mixing weight of the first audio stream is less than or equal to the first value, and an audio mixing weight of the second audio stream is greater than the first value; or
the audio mixing weight of the second audio stream is greater than or equal to a second value, and the audio mixing weight of the second audio stream is greater than the audio mixing weight of the first audio stream, wherein the second value is greater than the first value.

68. The apparatus according to claim 64 or 65, wherein the plurality of audio streams comprise the first audio stream and the second audio stream; and the processing unit is specifically configured to:
when an audio mixing weight of the second audio stream is greater than a first value and less than a second value, an audio mixing weight of the first audio stream is greater than the first value and less than the second value, and the second value is greater than the first value, perform audio mixing on the first audio stream and the second audio stream to generate a third audio stream; and determine that the target audio stream is the third audio stream.

69. The apparatus according to any one of claims 64 to 68, wherein

the plurality of audio streams comprise the first audio stream and the second audio stream; and
the first audio stream is generated by the first device, and the second audio stream comes from a first audio source device; or
the first audio stream comes from the first audio source device, and the second audio stream comes from a second audio source device.

70. The apparatus according to any one of claims 61 to 69, wherein

when the audio mixing weight is less than or equal to the first value, the audio mixing weight indicates that the audio stream corresponding to the audio mixing weight is rejected to be used as a source of the audio stream obtained through audio mixing; or
when the audio mixing weight is greater than the first value and less than the second value, the audio mixing weight indicates that the audio stream corresponding to the audio mixing weight is allowed to be used as a non-unique source of the audio stream obtained through audio mixing, wherein the second value is greater than the first value; or
when the audio mixing weight is greater than or equal to the second value, the audio mixing weight indicates that the audio stream corresponding to the audio mixing weight is allowed to be used as a unique source of the audio stream obtained through audio mixing.

71. An apparatus for audio mixing, wherein the apparatus is a second device or is comprised in the second device; and the apparatus comprises:

a sending unit, configured to send at least one piece of indication information, wherein the at least one piece of indication information corresponds to at least one audio stream, and the at least one piece of indication information is used to determine an audio mixing weight of the at least one audio stream, wherein
the sending unit is further configured to send the at least one audio stream.

72. The apparatus according to claim 71, wherein that the at least one piece of indication information corresponds to the at least one audio stream generated by the second device comprises:
the at least one piece of indication information indicates at least one of the following information:

a type of the at least one audio stream;
a coding format of the at least one audio stream;
a type of the second device;
the audio mixing weight;
a type of a user to which the second device belongs; and
a type of an application that generates the at least one audio stream.

73. The apparatus according to claim 71 or 72, wherein the at least one piece of indication information comprises first indication information and second indication information, the first indication information corresponds to a first audio stream, the second indication information corresponds to a second audio stream, and the first audio stream and the second audio stream are audio streams of a same type and/or audio streams generated by a same application.

74. The apparatus according to claim 71 or 72, wherein the at least one piece of indication information comprises first indication information, the first indication information corresponds to a first audio stream and a second audio stream, and the first audio stream and the second audio stream are audio streams of a same type and/or audio streams generated by a same application.

75. An apparatus for audio mixing, wherein the apparatus is a first device or is comprised in the first device; and the apparatus comprises:

a display unit, configured to indicate properties of a plurality of audio streams to a user, wherein the plurality of audio streams are generated by a plurality of devices; and the property comprises at least one of the following: an identifier of the audio stream, a type of the audio stream, a type of an application that generates the audio stream, a type of an audio source device that generates the audio stream, a type of a user to which the audio source device that generates the audio stream belongs, and a coding format of the audio stream;

a receiving unit, configured to receive setting information of the user; and

a processing unit, configured to configure an audio mixing weight of the plurality of audio streams based on the setting information.

76. The apparatus according to claim 75, wherein the receiving unit is specifically configured to:

obtain the setting information input by the user through a touchscreen of the first device;
obtain the setting information input by the user through a button of the first device;
obtain the setting information input by the user through a keyboard of the first device;
obtain the setting information input by the user through a voice; or
obtain the setting information input by the user through a gesture.

77. The apparatus according to claim 75 or 76, wherein

the display unit is further configured to indicate a usage scenario of the plurality of audio streams to the user, wherein

the setting information is used to configure an audio mixing weight of the plurality of audio streams in the usage scenario.

78. The apparatus according to claim 77, wherein the usage scenario comprises a first usage scenario and a second usage scenario, and an audio mixing weight of the plurality of audio streams in the first usage scenario are different from an audio mixing weight of the plurality of audio streams in the second usage scenario.

79. The apparatus according to claim 77 or 78, wherein
the usage scenario comprises at least one of the following scenarios: a game mode, a driving mode, a speaker mode, a headset play mode, a rest mode, a silent mode, a learning mode, and a power saving mode.

80. The apparatus according to any one of claims 75 to 79, wherein the processing unit is further configured to:
mix the plurality of audio streams into a to-be-played audio stream based on the audio mixing weights.

81. The apparatus according to claim 80, wherein the plurality of audio streams comprise a first audio stream with a high priority; and the processing unit is further configured to remind, in at least one of the following plurality of manners, the user to pay attention to the first audio stream:

increasing an audio mixing weight of the first audio stream;
playing content of the first audio stream for a plurality of times; and
requiring the user to feed back a confirmation.

82. The apparatus according to claim 81, wherein the processing unit is specifically configured to:

decrease, in a play time period of the first audio stream, a play volume of another audio stream that is in the plurality of audio streams and that is mixed with the first audio stream; or
set the first audio stream as a unique audio stream in the to-be-played audio stream in the play time period of the first audio stream.

83. The apparatus according to claim 81 or 82, wherein the processing unit is specifically configured to: repeatedly mix the first audio stream into the to-be-played audio stream for a plurality of times, and successively increase the audio mixing weight of the first audio stream.

84. The apparatus according to any one of claims 81 to 83, wherein the processing unit is specifically configured to:

query the user whether the user learns of the content carried in the first audio stream; and
receive feedback information of the user, wherein the feedback information indicates that the user confirms that the user learns of the content carried in the first audio stream.

**85.** The apparatus according to claim 84, wherein the processing unit is further configured to:

> before the feedback information is received, repeatedly mix the first audio stream into the to-be-played audio stream; and
> after the feedback information is received, stop mixing the first audio stream into the to-be-played audio stream.

**86.** The apparatus according to any one of claims 80 to 85, wherein the processing unit is further configured to: when a volume of the to-be-played audio stream exceeds a preset volume threshold, prompt the user that the volume is excessively high.

**87.** The apparatus according to any one of claims 75 to 86, wherein the configuration is pre-configuration before the audio mixing is performed or adjustment of the audio mixing weight in a process in which the audio mixing is performed.

**88.** The apparatus according to any one of claims 75 to 87, wherein the apparatus further comprises:

> an obtaining unit, configured to obtain a default setting of the audio mixing weight; wherein
> the processing unit is specifically configured to configure the audio mixing weight of the plurality of audio streams based on the setting information and the default setting.

**89.** The apparatus according to any one of claims 75 to 88, wherein

> when the audio mixing weight is less than or equal to a first value, the audio mixing weight indicates that the audio stream corresponding to the audio mixing weight is rejected to be used as a source of the audio stream obtained through audio mixing; or
> when the audio mixing weight is greater than the first value and less than a second value, the audio mixing weight indicates that the audio stream corresponding to the audio mixing weight is allowed to be used as a non-unique source of the audio stream obtained through audio mixing, wherein the second value is greater than the first value; or
> when the audio mixing weight is greater than or equal to the second value, the audio mixing weight indicates that the audio stream corresponding to the audio mixing weight is allowed to be used as a unique source of the audio stream obtained through audio mixing.

**90.** An apparatus for audio mixing, wherein the apparatus is a first device or is comprised in the first device; and the apparatus comprises:

> a generation unit, configured to generate audio mixing configuration information, wherein the audio mixing configuration information comprises an audio mixing weight of a plurality of audio streams from a plurality of audio source devices; and
> a sending unit, configured to send the audio mixing configuration information to a second device, wherein the audio mixing configuration information is used to perform audio mixing processing on the plurality of audio streams.

**91.** The apparatus according to claim 90, wherein the audio mixing weight of the audio stream is used to adjust a sampling depth of a sampling point of the audio stream.

**92.** The apparatus according to claim 90 or 91, wherein types of the plurality of audio streams are different, and/or coding formats of the plurality of audio streams are different, and/or usage scenarios of the plurality of audio streams are different, and/or types of applications that generate the plurality of audio streams are different, and/or types of the plurality of audio source devices are different, and/or types of users to which the plurality of audio source devices belong are different.

**93.** The apparatus according to any one of claims 90 to 92, wherein the audio mixing configuration information is carried in audio mixing policy configuration signaling, the audio mixing policy configuration signaling is carried in apparatus invocation of an audio mixing policy control point, and a handle of the apparatus invocation needs to be a handle of the audio mixing policy control point.

**94.** The apparatus according to any one of claims 90 to 93, wherein the apparatus further comprises:

an obtaining unit, configured to obtain a plurality of types of audio streams supported by the second device; and
the generation unit is specifically configured to:
generate the audio mixing configuration information based on the plurality of types of the audio streams supported by the second device, wherein the plurality of types comprise the types of the plurality of audio streams.

95. The apparatus according to any one of claims 90 to 94, wherein the audio mixing configuration information is further generated based on at least one of the following factors:

a type of an audio source device that generates an audio stream;
a coding format of the audio stream;
a type of a user to which the audio source device that generates the audio stream belongs;
a type of an application that generates the audio stream; and
a usage scenario of the audio stream.

96. The apparatus according to any one of claims 90 to 95, wherein
the sending unit is further configured to send an audio mixing cycle to the second device, wherein the audio mixing cycle indicates a quantity of sampling points required when audio mixing is performed on each of the plurality of audio streams.

97. The apparatus according to any one of claims 90 to 96, wherein

when the audio mixing weight is less than or equal to a first value, the audio mixing weight indicates that the audio stream corresponding to the audio mixing weight is rejected to be used as a source of the audio stream obtained through audio mixing; or
when the audio mixing weight is greater than the first value and less than a second value, the audio mixing weight indicates that the audio stream corresponding to the audio mixing weight is allowed to be used as a non-unique source of the audio stream obtained through audio mixing, wherein the second value is greater than the first value; or
when the audio mixing weight is greater than or equal to the second value, the audio mixing weight indicates that the audio stream corresponding to the audio mixing weight is allowed to be used as a unique source of the audio stream obtained through audio mixing.

98. The apparatus according to any one of claims 90 to 97, wherein the apparatus further comprises:

a receiving unit, configured to receive overflow indication information, wherein the overflow indication information indicates that overflow occurs in an audio stream obtained through audio mixing, and the overflow indication information comprises a type of an audio stream whose loudness output proportion is the largest in the audio stream obtained through audio mixing; and
the processing unit is further configured to adjust the audio mixing weight in the audio mixing configuration information based on the overflow indication information.

99. An apparatus for audio mixing, wherein the apparatus is a second device or is comprised in the second device; and the apparatus comprises:

a receiving unit, configured to receive audio mixing configuration information from a first device, wherein the audio mixing configuration information comprises an audio mixing weight of a plurality of audio streams from a plurality of audio source devices, and the audio mixing configuration information is used to perform audio mixing processing on the plurality of audio streams; and
a processing unit, configured to perform configuration based on the audio mixing configuration information.

100.
The apparatus according to claim 99, wherein the second device currently plays a first audio stream;

the receiving unit is further configured to receive a second audio stream, wherein the second audio stream and the first audio stream come from different audio source devices;
the processing unit is further configured to determine a to-be-played target audio stream based on an audio mixing weight of the first audio stream, an audio mixing weight of the second audio stream, the first audio stream, and the second audio stream, wherein the audio mixing weight of the first audio stream and the audio mixing weight of the second audio stream are obtained from the audio mixing configuration information; and the apparatus further comprises a playing unit, configured to play the target audio stream.

**101.**

The apparatus according to claim 100, wherein the processing unit is specifically configured to:

when a preset condition is met, reject the second audio stream to join the audio stream obtained through audio mixing, and determine that the target audio stream is the first audio stream, wherein the preset condition is any one of the following conditions:

the audio mixing weight of the second audio stream is less than or equal to a first value, and the audio mixing weight of the first audio stream is greater than the first value; or
the audio mixing weight of the first audio stream is greater than or equal to a second value, and the audio mixing weight of the first audio stream is greater than or equal to the audio mixing weight of the second audio stream, wherein the second value is greater than the first value.

**102.**

The apparatus according to claim 100, wherein the processing unit is specifically configured to:

when the audio mixing weight of the second audio stream is greater than or equal to a second value and the audio mixing weight of the second audio stream is greater than the audio mixing weight of the first audio stream, allow the second audio stream to perform preemption, and determine that the target audio stream is the second audio stream, wherein the second value is greater than the first value.

**103.**

The apparatus according to claim 100, wherein the processing unit is specifically configured to:

when the audio mixing weight of the second audio stream is greater than a first value and less than a second value, and the audio mixing weight of the first audio stream is greater than the first value and less than the second value, allow the second audio stream to join the audio stream obtained through audio mixing; and perform audio mixing on the first audio stream and the second audio stream to generate a third audio stream, wherein the second value is greater than the first value; and
determine that the target audio stream is the third audio stream.

**104.**

The apparatus according to any one of claims 99 to 103, wherein the audio mixing weight of the audio stream is used to adjust a sampling depth of a sampling point of the audio stream.

**105.**

The apparatus according to any one of claims 99 to 104, wherein types of the plurality of audio streams are different, and/or coding formats of the plurality of audio streams are different, and/or usage scenarios of the plurality of audio streams are different, and/or types of applications that generate the plurality of audio streams are different, and/or types of the plurality of audio source devices are different, and/or types of users to which the plurality of audio source devices belong are different.

**106.**

The apparatus according to any one of claims 99 to 105, wherein the audio mixing configuration information is carried in audio mixing policy configuration signaling, the audio mixing policy configuration signaling is carried in apparatus invocation of an audio mixing policy control point, and a handle of the apparatus invocation needs to be a handle of the audio mixing policy control point.

**107.**

The apparatus according to any one of claims 99 to 106, wherein the apparatus further comprises:
a sending unit, configured to send, to the first device, a plurality of types of audio streams supported by the second device.

**108.**

An apparatus for audio mixing, wherein the apparatus is a first device or is comprised in the first device; and the apparatus comprises:

a receiving unit, configured to receive a first message from a second device, wherein the first message comprises an identifier of an audio stream mixing service; and
a sending unit, configured to send a second message to the second device based on the first message, wherein the second message comprises a first audio mixing proxy identifier, and the first audio mixing proxy identifier indicates the first device to start to provide an audio mixing proxy for the second device.

109.
The apparatus according to claim 108, wherein the apparatus further comprises:

an obtaining unit, configured to obtain a plurality of audio streams, wherein the plurality of audio streams come from a plurality of audio source devices; and
a processing unit, configured to determine a to-be-played target audio stream based on the plurality of audio streams; and
the sending unit is further configured to send the target audio stream to the second device.

110.
The apparatus according to claim 108 or 109, wherein

the sending unit is further configured to send a first request message, wherein the first request message is used to request to obtain audio mixing configuration information of the second device, the audio mixing configuration information comprises an audio mixing weight of the plurality of audio streams from the plurality of audio source devices, and the audio mixing configuration information is used to perform audio mixing processing on the plurality of audio streams; and
the receiving unit is further configured to receive the audio mixing configuration information from the second device.

111. The apparatus according to any one of claims 108 to 110, wherein

the sending unit is further configured to send a second request message, wherein the second request message is used to request to obtain audio sink capability information of the second device, and the audio sink capability information indicates an audio sink capability of the second device;
the receiving unit is further configured to receive the audio sink capability information from the second device; and
the apparatus further comprises a processing unit, configured to determine, based on the audio sink capability information, to start to provide the audio mixing proxy for the second device.

112.
The apparatus according to any one of claims 108 to 111, wherein
the sending unit is further configured to send a third message to the second device, wherein the third message comprises a second audio mixing proxy identifier, and the second audio mixing proxy identifier indicates the first device to end providing the audio mixing proxy for the second device.

113.
The apparatus according to any one of claims 108 to 112, wherein the first message is broadcast public information data, the public information data comprises a first field and a second field, the first field indicates that the identifier of the audio stream mixing service is carried in standard service data information, and the second field indicates the identifier of the audio stream mixing service.

114.
The apparatus according to claim 113, wherein a length of the identifier of the audio stream mixing service is 16 bits.

115.
An apparatus for audio mixing, wherein the apparatus is a second device or is comprised in the second device; and the apparatus comprises:

a sending unit, configured to broadcast a first message, wherein the first message comprises an identifier of an audio stream mixing service; and
a receiving unit, configured to receive a second message from a first device, wherein the second message comprises a first audio mixing proxy identifier, and the first audio mixing proxy identifier indicates the first device to start to provide an audio mixing proxy for the second device.

**116.**
The apparatus according to claim 115, wherein

the receiving unit is further configured to receive a first request message from the first device; and
the sending unit is further configured to send audio mixing configuration information to the first device based on the first request message, wherein the audio mixing configuration information comprises an audio mixing weight of a plurality of audio streams from a plurality of audio source devices, and the audio mixing configuration information is used to perform audio mixing processing on the plurality of audio streams.

**117.**
The apparatus according to claim 115 or 116, wherein

the receiving unit is further configured to receive a second request message from the first device; and
the sending unit is further configured to send audio sink capability information to the first device based on the second request message, wherein the audio sink capability information indicates an audio sink capability of the second device.

**118.**
The apparatus according to any one of claims 115 to 117, wherein the receiving unit is further configured to receive a third message from the first device, wherein the third message comprises a second audio mixing proxy identifier, and the second audio mixing proxy identifier indicates the first device to end providing the audio mixing proxy for the second device.

**119.**
The apparatus according to any one of claims 115 to 118, wherein the first message is broadcast public information data, the public information data comprises a first field and a second field, the first field indicates that the identifier of the audio stream mixing service is carried in standard service data information, and the second field indicates the identifier of the audio stream mixing service.

**120.**
The apparatus according to claim 119, wherein a length of the identifier of the audio stream mixing service is 16 bits.

**121.**
A device, comprising a memory and a processor, wherein the memory stores computer instructions, and the processor runs the computer instructions to enable the device to implement the method according to any one of claims 1 to 10.

**122.**
A device, comprising a memory and a processor, wherein the memory stores computer instructions, and the processor runs the computer instructions to enable the device to implement the method according to any one of claims 11 to 14.

**123.**
A device, comprising a memory and a processor, wherein the memory stores computer instructions, and the processor runs the computer instructions to enable the device to implement the method according to any one of claims 15 to 29.

**124.**
A device, comprising a memory and a processor, wherein the memory stores computer instructions, and the processor runs the computer instructions to enable the device to implement the method according to any one of claims 30 to 38.

**125.**
A device, comprising a memory and a processor, wherein the memory stores computer instructions, and the processor runs the computer instructions to enable the device to implement the method according to any one of claims 39 to 47.

**126.**
A device, comprising a memory and a processor, wherein the memory stores computer instructions, and the processor runs the computer instructions to enable the device to implement the method according to any one of claims 48 to 54.

**127.**
A device, comprising a memory and a processor, wherein the memory stores computer instructions, and the processor runs the computer instructions to enable the device to implement the method according to any one of claims 55 to 60.

**128.**
A vehicle, wherein the vehicle comprises the apparatus according to any one of claims 61 to 120, or comprises the device according to any one of claims 121 to 127.

**129.**
An audio mixing system, comprising a first apparatus, a second apparatus, and a third apparatus, wherein the third apparatus is configured to perform the method according to any one of claims 11 to 14, the first apparatus is configured to perform the method according to any one of claims 30 to 38, and the second apparatus is configured to perform the method according to any one of claims 39 to 47; or the first apparatus is configured to perform the method according to any one of claims 48 to 54, and the second apparatus is configured to perform the method according to any one of claims 55 to 60.

**130.**
An audio mixing system, comprising a first apparatus and a second apparatus, wherein the first apparatus is configured to perform the method according to any one of claims 11 to 14, and the second apparatus is configured to perform the method according to any one of claims 1 to 10 and claims 15 to 29.

**131.**
A computer-readable storage medium, wherein the computer-readable storage medium stores program instructions, and when the program instructions are run by a processor, the method according to any one of claims 1 to 10 is implemented, or the method according to any one of claims 11 to 14 is implemented, or the method according to any one of claims 15 to 29 is implemented, or the method according to any one of claims 30 to 38 is implemented, or the method according to any one of claims 39 to 47 is implemented, or the method according to any one of claims 48 to 54 is implemented, or the method according to any one of claims 55 to 60 is implemented.

**A plurality of audio source devices**

Audio source device 1

Audio source device 2

⋮

**Device 1**

Configuration module

Audio mixing module

Audio sink module

FIG. 1A

**A plurality of audio source devices**

Audio source device 1

Audio source device 2

⋮

**Device 2**

Audio mixing module

Audio sink module

**Device 3**

Configuration module

FIG. 1B

**Device 6**

Configuration module

**A plurality of audio source devices**

Audio source device 1

Audio source device 2

⋮

**Device 4**

Audio mixing module

**Device 5**

Audio sink module

FIG. 1C

**A plurality of audio source devices**

| Audio source device 1 |
|---|

| Audio source device 2 |
|---|

⋮

**Device 7**

Audio mixing module

Configuration module

**Device 8**

Audio sink module

FIG. 1D

S201: Indicate properties of a plurality of audio streams to a user

S202: Receive setting information of the user

S203: Configure an audio mixing weight of the plurality of audio streams based on the setting information of the user

FIG. 2A

**Audio mixing weight setting**

| Audio stream type | | Audio mixing weight |
|---|---|---|
| √ Type A | | 60 |
| √ Type B | | 20 |
| √ Type C | | 20 |
| Type D | | 0 |
| ⋮ | ⋮ | ⋮ |

Save

FIG. 2B

**Public address system**

Audio stream 1

**Headset**

Audio stream 2

**Mobile phone**

FIG. 2C

Audio sink side

Device 2
(that has an audio
sink capability)

Device 1
(that has an audio mixing
processing capability)

Audio source side

Audio
source
device 1

Audio
source
device 2

...

S301: Receive at least one piece of indication information from
at least one audio source device, where the at least one piece of
indication information corresponds to at least one audio stream
generated by the at least one audio source device

S302: Determine an audio mixing weight
of the at least one audio stream based on
the at least one piece of indication
information

S303: Obtain a plurality of audio streams, and determine a to-be-
played target audio stream based on the plurality of audio
streams and an audio mixing weight of the plurality of audio
streams

S304: Play the target audio stream

S305: Target audio
stream

S306: Play the target audio
stream

FIG. 3A

**Rejection interval**   **Audio mixing interval**   **Exclusive interval**

First value          Second value

Audio mixing weight

FIG. 3B

Reject to join          Perform preemption

**Audio mixing interval**

Third value
(smallest value in audio mixing weights)

Fourth value
(largest value in the audio mixing weights)

Audio mixing weight

FIG. 3C

Audio mixing
interval

Exclusive
interval

Smallest value

Largest value

0                                      100        150

Audio mixing weight range

**x: audio mixing weight of an audio stream that is about to join**
**y: largest audio mixing weight of an audio stream in current**
**audio streams**

An audio stream leaves

Audio stream that
is about to join

Perform audio mixing again
based on an audio mixing weight
of each left audio stream

x==0

No

Compare
x with y

Yes

Reject the
audio
stream to
join

0<x, y<100

x≥100 and
x>y

y≥100 and
x≤y

Allow the
audio stream
that is about to
join to join an
audio stream
obtained
through audio
mixing to
obtain a new
audio stream

The audio
stream that
is about to
join
performs
preemption

Reject the audio
stream to join

FIG. 3D

Audio mixing interval

Smallest value                                    Largest value

$\longrightarrow$

Audio mixing weight range

An audio stream leaves

Audio stream
that is about to
join

Perform audio mixing again
based on an audio mixing
weight of each left audio
stream

Is an audio
mixing weight of the
audio stream that is about to join  a
smallest value, or is an audio mixing
weight of a current audio stream
a largest value

No

Is the
audio mixing
weight of the audio
stream that is about to
join the largest
value

No

Allow the audio stream that
is about to join to join an
audio stream obtained
through audio mixing to
obtain a new audio stream

Yes

Yes

Reject the
audio stream
to join

The audio stream that
is about to join
performs preemption

FIG. 3E

EP 4 586 248 A1

FIG. 3F

**Public address system**

Audio stream 2

**Headset**

Audio stream 1
(that is being played
on the headset)

**Mobile
phone**

FIG. 3G

| **Device 3**<br>(that has an audio mixing weight<br>configuration capability) | **Device 4**<br>(that has an audio sink<br>capability) |

S401: Obtain, from the device 4, a plurality of types of audio streams supported by the device 4

S402: Generate audio mixing configuration information 1 based on the plurality of types of the audio streams supported by the device 4

S403: Audio mixing configuration information 1

S404: Store the audio mixing configuration information 1, and perform configuration based on the audio mixing configuration information 1

FIG. 4

**Device 4**
(that has an audio mixing processing capability,
and can provide an audio mixing proxy)

**Device 5**
(that has an audio
sink capability)

S501: Broadcast a first message
(that carries an identifier of an audio stream mixing service)

S502: Access the device 5 based on the
first message

S503: First request message

S504: Audio mixing configuration information

S505: Second request message

S506: Audio sink capability information

S507: Second message, indicating to start to provide the
audio mixing proxy for the device 5

S508: Obtain a plurality of audio streams from a
plurality of audio source devices, and determine a
to-be-played target audio stream based on the
plurality of audio streams

S509: Target audio stream

S510: Play the target audio stream

FIG. 5A

| Public information data | | | | |
|---|---|---|---|---|
| Data substructure 1 | Data substructure 2 | Data substructure 3 | ... | Data substructure n |

| Data type indication | Data length indication | Data content part |
|---|---|---|

**Standard service data information**

**Identifier of an audio stream mixing service (with a length of 16 bits)**

FIG. 5B

Apparatus 31

| Display unit 310 | Receiving unit 311 | Configuration unit 312 |
|---|---|---|

FIG. 6A

Apparatus 32

| Receiving unit 320 | Processing unit 321 |
|---|---|

FIG. 6B

Apparatus 33

Sending unit 330

FIG. 6C

Apparatus 41

Generation unit
410

Sending unit
411

FIG. 7A

Apparatus 42

Receiving unit
420

Processing unit
421

Sending unit
422

FIG. 7B

Apparatus 43

Receiving unit
430

Sending unit
431

FIG. 7C

Communication device 50

Processor 501

Communication interface 502

Bus 504

Memory 503

Display 505

FIG. 8

## INTERNATIONAL SEARCH REPORT

| International application No. |
| --- |
| **PCT/CN2023/120476** |

### A. CLASSIFICATION OF SUBJECT MATTER

G10L 21/007(2013.01)i

According to International Patent Classification (IPC) or to both national classification and IPC

### B. FIELDS SEARCHED

Minimum documentation searched (classification system followed by classification symbols)

IPC:G10L

Documentation searched other than minimum documentation to the extent that such documents are included in the fields searched

Electronic data base consulted during the international search (name of data base and, where practicable, search terms used)

DWPI, CNTXT, WPABS, ENTXT, CNKI: 音频, 混合, 混音, 混声, 混流, 权重, 权值, 加权, 比重, 占比, 权系数, 比例, 配置, 第二, 拒绝, 允许, 唯一, 大于, 小于, 等于, audio, mix, mixed stream, weight, fraction, weight coefficient, ratio, configuration, second, reject, allow, greater than, less than, equal

### C. DOCUMENTS CONSIDERED TO BE RELEVANT

| Category* | Citation of document, with indication, where appropriate, of the relevant passages | Relevant to claim No. |
| --- | --- | --- |
| X | CN 114566173 A (PING AN PUHUI ENTERPRISE MANAGEMENT CO., LTD.) 31 May 2022 (2022-05-31) description, paragraphs [0026]-[0094] | 1-5, 9-14, 61-65, 69-74 |
| Y | CN 114566173 A (PING AN PUHUI ENTERPRISE MANAGEMENT CO., LTD.) 31 May 2022 (2022-05-31) description, paragraphs [0026]-[0094] | 6-8, 66-68 |
| Y | CN 107333093 A (SUZHOU KEDA TECHNOLOGY CO., LTD.) 07 November 2017 (2017-11-07) description, paragraphs [0032]-[0059] | 6-8, 66-68 |
| A | CN 109300482 A (GUANGZHOU KUGOU COMPUTER TECHNOLOGY CO., LTD.) 01 February 2019 (2019-02-01) entire document | 1-14, 61-74 |
| A | CN 110166794 A (TENCENT TECHNOLOGY (SHENZHEN) CO., LTD. et al.) 23 August 2019 (2019-08-23) entire document | 1-14, 61-74 |

☑ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **05 December 2023** | **11 December 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/120476** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 112068794 A (HUBEI ECARX TECHNOLOGY CO., LTD.) 11 December 2020 (2020-12-11) <br> entire document | 1-14, 61-74 |
| A | CN 112885329 A (GHT CO., LTD.) 01 June 2021 (2021-06-01) <br> entire document | 1-14, 61-74 |
| A | CN 113423006 A (HUIZHOU FORYOU GENERAL ELECTRONICS CO., LTD.) 21 September 2021 (2021-09-21) <br> entire document | 1-14, 61-74 |
| A | CN 113973103 A (BEIJING DAJIA INTERNET INFORMATION TECHNOLOGY CO., LTD.) 25 January 2022 (2022-01-25) <br> entire document | 1-14, 61-74 |
| A | US 2014064519 A1 (SILFVAST ROBERT D. et al.) 06 March 2014 (2014-03-06) <br> entire document | 1-14, 61-74 |
| A | US 2016119734 A1 (FRAUNHOFER GES. FORSCHUNG E.V.) 28 April 2016 (2016-04-28) <br> entire document | 1-14, 61-74 |

Form PCT/ISA/210 (second sheet) (July 2022)

## INTERNATIONAL SEARCH REPORT

| International application No. |
| --- |
| **PCT/CN2023/120476** |

**Box No. III**      **Observations where unity of invention is lacking (Continuation of item 3 of first sheet)**

This International Searching Authority found multiple inventions in this international application, as follows:

The present application comprises four inventions:

1) Independent claims 1, 11, 61 and 71 relate to an audio mixing method and device, which relate to sending and receiving sound mixing weights.

2) Independent claims 15, 75 and 123 relate to an audio mixing method and device, which relate to indicating audio stream attributes, and sending and receiving setting information.

3) Independent claims 30, 39, 90, 99, 124 and 125 relate to an audio mixing method and device, which relate to generating, sending and receiving audio mixing configuration information.

4) Independent claims 48, 55, 108, 105, 126 and 127 relate to an audio mixing method and device, which relate to sending and receiving an audio mixing service identifier and a proxy identifier.

Since "the audio mixing method and the sound mixing weight" are conventional technical means in the field of voice signal processing, the same or corresponding feature between every two of the claims of the four inventions is not a special technical feature. The four inventions do not have a same or corresponding special technical feature, do not have a technical relationship therebetween, do not fall within an inventive concept, and thus does not comply with PCT Rule 13.1.

1. ☐   As all required additional search fees were timely paid by the applicant, this international search report covers all searchable claims.

2. ☐   As all searchable claims could be searched without effort justifying additional fees, this Authority did not invite payment of additional fees.

3. ☐   As only some of the required additional search fees were timely paid by the applicant, this international search report covers only those claims for which fees were paid, specifically claims Nos.:

4. ☑   No required additional search fees were timely paid by the applicant. Consequently, this international search report is restricted to the invention first mentioned in the claims; it is covered by claims Nos.: **1-14, 61-74**

**Remark on Protest**    ☐   The additional search fees were accompanied by the applicant's protest and, where applicable, the payment of a protest fee.

☐   The additional search fees were accompanied by the applicant's protest but the applicable protest fee was not paid within the time limit specified in the invitation.

☐   No protest accompanied the payment of additional search fees.

Form PCT/ISA/210 (continuation of first sheet) (July 2022)

**INTERNATIONAL SEARCH REPORT**
Information on patent family members

International application No.

**PCT/CN2023/120476**

| Patent document cited in search report | | | Publication date (day/month/year) | Patent family member(s) | | | Publication date (day/month/year) |
|---|---|---|---|---|---|---|---|
| CN | 114566173 | A | 31 May 2022 | None | | | |
| CN | 107333093 | A | 07 November 2017 | None | | | |
| CN | 109300482 | A | 01 February 2019 | None | | | |
| CN | 110166794 | A | 23 August 2019 | None | | | |
| CN | 112068794 | A | 11 December 2020 | None | | | |
| CN | 112885329 | A | 01 June 2021 | None | | | |
| CN | 113423006 | A | 21 September 2021 | None | | | |
| CN | 113973103 | A | 25 January 2022 | None | | | |
| US | 2014064519 | A1 | 06 March 2014 | US | 2015228262 | A1 | 13 August 2015 |
| | | | | US | 9514723 | B2 | 06 December 2016 |
| | | | | US | 9031262 | B2 | 12 May 2015 |
| US | 2016119734 | A1 | 28 April 2016 | DE | 102013105375 | A1 | 27 November 2014 |
| | | | | EP | 3005737 | A2 | 13 April 2016 |
| | | | | EP | 3005737 | B1 | 11 January 2017 |
| | | | | KR | 20160012204 | A | 02 February 2016 |
| | | | | KR | 101820224 | B1 | 28 February 2018 |
| | | | | US | 10075800 | B2 | 11 September 2018 |
| | | | | JP | 2016522640 | A | 28 July 2016 |
| | | | | JP | 6316407 | B2 | 25 April 2018 |
| | | | | WO | 2014187877 | A2 | 27 November 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211225744